# EUROPEAN PATENT APPLICATION

(11) **EP 4 503 721 A1**
(43) Date of publication of application: **05.02.2025**
(21) Application number: 23773810.9
(22) Date of filing: 20.03.2023
(51) Int. Cl.: H04W 28/02

(54) **DATA PACKET PROCESSING METHOD AND APPARATUS, AND COMMUNICATION DEVICE AND STORAGE MEDIUM**

(30) Priority: 24.03.2022 CN 202210303268
(71) Applicant: VIVO MOBILE COMMUNICATION CO., LTD., Dongguan, Guangdong 523863 (CN)
(72) Inventor: KE, Xiaowan, Dongguan, Guangdong 523863 (CN)
(74) Representative: Murgitroyd & Company
(86) International application number: PCT/CN2023/082591
(87) International publication number: WO 2023/179563

(57) **Abstract**

Embodiments of the present invention provide a data packet processing method and apparatus, a communication device, and a storage medium. The method includes: performing, by a first communication device, a target operation, the target operation including at least one of the following: determining an importance level of a target data packet, data flow description information corresponding to a data packet, and/or a tunnel mapped by the data packet; determining, based on the importance level of the target data packet, a buffer status report for distinguishing between importance levels, where data packets with different importance levels correspond to buffer status reports with different importance levels; sending the buffer status report for distinguishing between importance levels; determining a range of a first target data packet; and stopping a first operation and/or performing a second operation, or performing the first operation.

## Description

### CROSS-REFERENCE TO RELATED APPLICATION

This application claims priority to Chinese Patent Application No. 202210303268.7, filed on March 24, 2022, and entitled "DATA PACKET PROCESSING METHOD AND APPARATUS, COMMUNICATION DEVICE, AND STORAGE MEDIUM", which is incorporated herein by reference in its entirety.

### TECHNICAL FIELD

Embodiments of the present invention relate to the field of wireless communication technologies, and in particular, to a data packet processing method and apparatus, a communication device, and a storage medium.

### BACKGROUND

In a current network, in the case of data transmission in a mobile communication network, user plane resources relate to resources of a radio access network (Radio Access Network, RAN), a gateway, and a transport layer between the RAN and the gateway. Congestion of any type of resources may result in that data cannot be transmitted to an application server. Then if a terminal continues to request a network to send uplink data, a processing pressure is further imposed on the congested network (such as a RAN, a transport layer, or a gateway), that is, when the network receives data and then performs packet loss, network resource overheads may be caused. In addition, the network does not understand a difference between service data, which may lead to a loss of important data. Therefore, how to alleviate network congestion while guaranteeing important data (such as an uplink data packet) is the problem that needs to be solved by the present invention.

### SUMMARY

Embodiments of the present invention provide a data packet processing method and apparatus, a communication device, and a storage medium, to alleviate network congestion and ensure important data.

In a first aspect, an embodiment of the present invention provides a data packet processing method, including the following:
a first communication device performs a target operation, the target operation including at least one of the following:
determining an importance level of a target data packet, data flow description information corresponding to a data packet, and/or a tunnel mapped by the data packet;
determining, based on the importance level of the target data packet, a buffer status report for distinguishing between importance levels, where data packets with different importance levels correspond to buffer status reports with different importance levels;
sending the buffer status report for distinguishing between importance levels;
determining a range of a first target data packet; and
stopping a first operation and/or performing a second operation, or performing the first operation.

In a second aspect, an embodiment of the present invention provides a data packet processing method, including the following:
a second communication device performs a third operation,
the third operation including at least one of the following:
   sending one of the following: first auxiliary information, second auxiliary information, and third auxiliary information;
   requesting to delete or cancel the first auxiliary information;
   requesting to delete or cancel the second auxiliary information; and
   sending configuration information for transmitting no data packet.

In a third aspect, an embodiment of the present invention provides a data packet processing method, including the following:
a third communication device performs a fourth operation, the fourth operation including:
determining configuration information for transmitting no data packet; and
sending the configuration information for transmitting no data packet.

In a fourth aspect, an embodiment of the present invention provides a data packet processing method, including the following:
a fourth communication device performs a fifth operation, the fifth operation including:
determining a first policy, the first policy including at least one of the following:
sending fifth indication information, the fifth indication information being used to indicate at least one of the following: in a case that a sixth condition is met, it is allowed not to transmit some data packets of a first object, it is allowed not to transmit a first data packet and/or a second data packet, priority guarantee is requested for a third data packet and/or a fourth data packet, and it is allowed not to transmit data packets other than the third data packet and/or the fourth data packet, the sixth condition including at least one of the following: a network source cannot meet requirements for transmission of all data of the first object, a network cannot guarantee QoS of the first object, and network congestion occurs; data flow description information and importance mapping information; and
a policy for transmitting no data packet, where
the policy for transmitting no data packet includes at least one of the following:
   one or more items of related information about the first data packet;
   one or more items of related information about the third data packet; and
   seventh indication information, the seventh indication information being used to indicate at least one of the following: it is requested to abandon transmission of or allow not to transmit all data packets, it is requested to abandon transmission of or allow not to transmit the first data packet, it is requested to abandon transmission of or allow not to transmit the second data packet, and it is allowed not to transmit data packets other than the third data packet and/or the fourth data packet,
   where
   the related information about the first data packet includes at least one of the following: information about the first data packet, an index of the information about the first data packet, an effective condition of the related information about the first data packet, and an invalid condition of the related information about the first data packet;
   the related information about the third data packet includes at least one of the following: information about the third data packet, and an index of the information about the third data packet,
   where
   the information about the first data packet is used to indicate a range of the first data packet;
   the information about the third data packet is used to indicate a range of the third data packet; and
   the second data packet is a data packet that depends on the first data packet,
   where
   the first object includes at least one of the following: a terminal, a QoS flow, a radio bearer, a data flow, a data set, and a tunnel.

In a fifth aspect, an embodiment of the present invention provides a data packet processing method, including the following:
a fifth communication device performs a sixth operation, the sixth operation including sending a first request,
the first request including at least one of the following: data flow description information, information about a terminal, sixth indication information, one or more items of related information about a first data packet, one or more items of related information about a third data packet, and data flow description information and importance mapping information, where
the sixth indication information is used to indicate at least one of the following: in a case that a seventh condition is met, it is allowed not to transmit some data packets of a second object, it is allowed not to transmit the first data packet and/or a second data packet, priority guarantee is requested for the third data packet and/or a fourth data packet, and it is allowed not to transmit data packets other than the third data packet and/or the fourth data packet,
the seventh condition including at least one of the following: a network source cannot meet requirements for transmission of all data of the second object, a network cannot guarantee QoS of the second object, and network congestion occurs,
where
the related information about the first data packet includes at least one of the following: information about the first data packet, an index of the information about the first data packet, an effective condition of the related information about the first data packet, and an invalid condition of the related information about the first data packet;
the related information about the third data packet includes at least one of the following: information about the third data packet, and an index of the information about the third data packet,
where
the information about the first data packet is used to indicate a range of the first data packet;
the information about the third data packet is used to indicate a range of the third data packet; and
the second data packet is a data packet that depends on the first data packet,
where
the second object includes at least one of the following: a terminal, a data flow, and a data set.

In a sixth aspect, an embodiment of the present invention provides a data packet processing apparatus, including:
a first performing module, configured to perform a target operation, the target operation including at least one of the following:
determining an importance level of a target data packet, data flow description information corresponding to a data packet, and/or a tunnel mapped by the data packet;
determining, based on the importance level of the target data packet, a buffer status report for distinguishing between importance levels, where data packets with different importance levels correspond to buffer status reports with different importance levels;
sending the buffer status report for distinguishing between importance levels;
determining a range of a first target data packet; and
stopping a first operation and/or performing a second operation, or performing the first operation.

In a seventh aspect, an embodiment of the present invention provides a data packet processing apparatus, including:
a second performing module, configured to perform a third operation,
the third operation including at least one of the following:
   sending one of the following: first auxiliary information, second auxiliary information, and third auxiliary information;
   requesting to delete or cancel the first auxiliary information;
   requesting to delete or cancel the second auxiliary information; and
   sending configuration information for transmitting no data packet.

In an eighth aspect, an embodiment of the present invention provides a data packet processing apparatus, including:
a third performing module, configured to perform a fourth operation, the fourth operation including:
determining configuration information for transmitting no data packet; and
sending the configuration information for transmitting no data packet.

In a ninth aspect, an embodiment of the present invention provides a data packet processing apparatus, including:
a fourth performing module, configured to perform a fifth operation, the fifth operation including:
determining a first policy, the first policy including at least one of the following:
sending fifth indication information, the fifth indication information being used to indicate at least one of the following: in a case that a sixth condition is met, it is allowed not to transmit some data packets of a first object, it is allowed not to transmit a first data packet and/or a second data packet, priority guarantee is requested for a third data packet and/or a fourth data packet, and it is allowed not to transmit data packets other than the third data packet and/or the fourth data packet, the sixth condition including at least one of the following: a network source cannot meet requirements for transmission of all data of the first object, a network cannot guarantee QoS of the first object, and network congestion occurs; data flow description information and importance mapping information; and
a policy for transmitting no data packet, where
the policy for transmitting no data packet includes at least one of the following:
   one or more items of related information about the first data packet;
   one or more items of related information about the third data packet; and
   seventh indication information, the seventh indication information being used to indicate at least one of the following: it is requested to abandon transmission of or allow not to transmit all data packets, it is requested to abandon transmission of or allow not to transmit the first data packet, it is requested to abandon transmission of or allow not to transmit the second data packet, and it is allowed not to transmit data packets other than the third data packet and/or the fourth data packet,
   where
   the related information about the first data packet includes at least one of the following: information about the first data packet, an index of the information about the first data packet, an effective condition of the related information about the first data packet, and an invalid condition of the related information about the first data packet;
   the related information about the third data packet includes at least one of the following: information about the third data packet, and an index of the information about the third data packet,
   where
   the information about the first data packet is used to indicate a range of the first data packet;
   the information about the third data packet is used to indicate a range of the third data packet; and
   the second data packet is a data packet that depends on the first data packet,
   where
   the first object includes at least one of the following: a terminal, a QoS flow, a radio bearer, a data flow, a data set, and a tunnel.

In a tenth aspect, an embodiment of the present invention provides a data packet processing apparatus, including:
a fifth performing module, configured to perform a sixth operation, the sixth operation including sending a first request,
the first request including at least one of the following: data flow description information, information about a terminal, sixth indication information, one or more items of related information about a first data packet, one or more items of related information about a third data packet, and data flow description information and importance mapping information, where
the sixth indication information is used to indicate at least one of the following: in a case that a seventh condition is met, it is allowed not to transmit some data packets of a second object, it is allowed not to transmit the first data packet and/or a second data packet, priority guarantee is requested for the third data packet and/or a fourth data packet, and it is allowed not to transmit data packets other than the third data packet and/or the fourth data packet,
the seventh condition including at least one of the following: a network source cannot meet requirements for transmission of all data of the second object, a network cannot guarantee QoS of the second object, and network congestion occurs,
where
the related information about the first data packet includes at least one of the following: information about the first data packet, an index of the information about the first data packet, an effective condition of the related information about the first data packet, and an invalid condition of the related information about the first data packet;
the related information about the third data packet includes at least one of the following: information about the third data packet, and an index of the information about the third data packet,
where
the information about the first data packet is used to indicate a range of the first data packet;
the information about the third data packet is used to indicate a range of the third data packet; and
the second data packet is a data packet that depends on the first data packet,
where
the second object includes at least one of the following: a terminal, a data flow, and a data set.

In an eleventh aspect, an embodiment of the present invention provides a first communication device, the first communication device including a processor and a memory, where the memory stores a program or instructions that can be run on the processor, and when the program or instructions are executed by the processor, the steps of the method according to the first aspect are implemented.

In a twelfth aspect, an embodiment of the present invention provides a first communication device, including a processor and a communication interface, where the processor is configured to: perform a target operation, the target operation including at least one of the following:
determining an importance level of a target data packet, data flow description information corresponding to a data packet, and/or a tunnel mapped by the data packet;
determining, based on the importance level of the target data packet, a buffer status report for distinguishing between importance levels, where data packets with different importance levels correspond to buffer status reports with different importance levels;
sending the buffer status report for distinguishing between importance levels;
determining a range of a first target data packet; and
stopping a first operation and/or performing a second operation, or performing the first operation.

In a thirteenth aspect, an embodiment of the present invention provides a second communication device, the second communication device including a processor and a memory, where the memory stores a program or instructions that can be run on the processor, and when the program or instructions are executed by the processor, the steps of the method according to the second aspect are implemented.

In a fourteenth aspect, an embodiment of the present invention provides a second communication device, including a processor and a communication interface, where the processor is configured to: perform a third operation,
the third operation including at least one of the following:
sending one of the following: first auxiliary information, second auxiliary information, and third auxiliary information;
requesting to delete or cancel the first auxiliary information;
requesting to delete or cancel the second auxiliary information; and
sending configuration information for transmitting no data packet.

In a fifteenth aspect, an embodiment of the present invention provides a third communication device, the third communication device including a processor and a memory, where the memory stores a program or instructions that can be run on the processor, and when the program or instructions are executed by the processor, the steps of the method according to the third aspect are implemented.

In a sixteenth aspect, an embodiment of the present invention provides a third communication device, including a processor and a communication interface, where the processor is configured to: perform a fourth operation, the fourth operation including:
determining configuration information for transmitting no data packet; and
sending the configuration information for transmitting no data packet.

In a seventeenth aspect, an embodiment of the present invention provides a fourth communication device, the fourth communication device including a processor and a memory, where the memory stores a program or instructions that can be run on the processor, and when the program or instructions are executed by the processor, the steps of the method according to the fourth aspect are implemented.

In an eighteenth aspect, an embodiment of the present invention provides a fourth communication device, including a processor and a communication interface, where the processor is configured to: perform a fifth operation, the fifth operation including:
determining a first policy, the first policy including at least one of the following:
sending fifth indication information, the fifth indication information being used to indicate at least one of the following: in a case that a sixth condition is met, it is allowed not to transmit some data packets of a first object, it is allowed not to transmit a first data packet and/or a second data packet, priority guarantee is requested for a third data packet and/or a fourth data packet, and it is allowed not to transmit data packets other than the third data packet and/or the fourth data packet, the sixth condition including at least one of the following: a network source cannot meet requirements for transmission of all data of the first object, a network cannot guarantee QoS of the first object, and network congestion occurs; data flow description information and importance mapping information; and
a policy for transmitting no data packet, where
the policy for transmitting no data packet includes at least one of the following:
   one or more items of related information about the first data packet;
   one or more items of related information about the third data packet; and
   seventh indication information, the seventh indication information being used to indicate at least one of the following: it is requested to abandon transmission of or allow not to transmit all data packets, it is requested to abandon transmission of or allow not to transmit the first data packet, it is requested to abandon transmission of or allow not to transmit the second data packet, and it is allowed not to transmit data packets other than the third data packet and/or the fourth data packet,
   where
   the related information about the first data packet includes at least one of the following: information about the first data packet, an index of the information about the first data packet, an effective condition of the related information about the first data packet, and an invalid condition of the related information about the first data packet;
   the related information about the third data packet includes at least one of the following: information about the third data packet, and an index of the information about the third data packet,
   where
   the information about the first data packet is used to indicate a range of the first data packet;
   the information about the third data packet is used to indicate a range of the third data packet; and
   the second data packet is a data packet that depends on the first data packet,
   where
   the first object includes at least one of the following: a terminal, a QoS flow, a radio bearer, a data flow, a data set, and a tunnel.

In a nineteenth aspect, an embodiment of the present invention provides a fifth communication device, the fifth communication device including a processor and a memory, where the memory stores a program or instructions that can be run on the processor, and when the program or instructions are executed by the processor, the steps of the method according to the fifth aspect are implemented.

In a twentieth aspect, an embodiment of the present invention provides a fifth communication device, including a processor and a communication interface, where the processor is configured to: perform a sixth operation, the sixth operation including sending a first request,
the first request including at least one of the following: data flow description information, information about a terminal, sixth indication information, one or more items of related information about a first data packet, one or more items of related information about a third data packet, and data flow description information and importance mapping information, where
the sixth indication information is used to indicate at least one of the following: in a case that a seventh condition is met, it is allowed not to transmit some data packets of a second object, it is allowed not to transmit the first data packet and/or a second data packet, priority guarantee is requested for the third data packet and/or a fourth data packet, and it is allowed not to transmit data packets other than the third data packet and/or the fourth data packet,
the seventh condition including at least one of the following: a network source cannot meet requirements for transmission of all data of the second object, a network cannot guarantee QoS of the second object, and network congestion occurs,
where
the related information about the first data packet includes at least one of the following: information about the first data packet, an index of the information about the first data packet, an effective condition of the related information about the first data packet, and an invalid condition of the related information about the first data packet;
the related information about the third data packet includes at least one of the following: information about the third data packet, and an index of the information about the third data packet,
where
the information about the first data packet is used to indicate a range of the first data packet;
the information about the third data packet is used to indicate a range of the third data packet; and
the second data packet is a data packet that depends on the first data packet,
where
the second object includes at least one of the following: a terminal, a data flow, and a data set.

In a twenty-first aspect, a data packet processing system is provided, including: a first communication device, a second communication device, a third communication device, and a fourth communication device, where a terminal may be configured to perform the steps of the data packet processing method as provided in the first aspect, or the steps of the data packet processing method as provided in the second aspect, or the steps of the data packet processing method as provided in the third aspect, or the steps of the data packet processing method as provided in the fourth aspect, or the steps of the data packet processing method as provided in the fifth aspect.

In a twenty-second aspect, an embodiment of the present invention provides a computer-readable storage medium, where a computer program is stored in the computer-readable storage medium, and when the computer program is executed by a processor, the steps of the data packet processing method provided in the first aspect, or the steps of the data packet processing method provided in the second aspect, or the steps of the data packet processing method provided in the third aspect, or the steps of the data packet processing method provided in the fourth aspect, or the steps of the data packet processing method provided in the fifth aspect are implemented.

In a twenty-third aspect, a chip is provided, the chip including a processor and a communication interface, where the communication interface is coupled to the processor, and the processor is configured to run a program or instructions to implement the steps of the data packet processing method provided in the first aspect, or the steps of the data packet processing method provided in the second aspect, or the steps of the data packet processing method provided in the third aspect, or the steps of the data packet processing method provided in the fourth aspect, or the steps of the data packet processing method provided in the fifth aspect.

In a twenty-fourth aspect, a computer program/program product is provided, the computer program/program product being stored in a storage medium, where the computer program/program product is executed by at least one processor to implement the steps of the data packet processing method provided in the first aspect, or the steps of the data packet processing method provided in the second aspect, or the steps of the data packet processing method provided in the third aspect, or the steps of the data packet processing method provided in the fourth aspect, or the steps of the data packet processing method provided in the fifth aspect.

In the embodiment of the present invention, a target operation may be performed before a data transmission request is sent, so that data packets with low importance levels may be discarded before data scheduling in the case of network congestion, thereby effectively relieving congestion, guaranteeing important data, and saving resources.

### BRIEF DESCRIPTION OF THE DRAWINGS

Various other advantages and benefits become clear to a person of ordinary skill in the art by reading the following detailed description of preferred implementations. The accompanying drawings are merely used for illustrating the preferred implementations and are not intended to constitute a limitation on the present invention. Throughout the accompanying drawings, the same reference numerals are used to represent the same components. In the accompanying drawings:
FIG. 1 is a block diagram of an applicable wireless communication system according to an embodiment of this application;
FIG. 2 is a schematic diagram of an uplink two-layer structure according to the related art;
FIG. 3 is a first schematic flowchart of a data packet processing method according to an embodiment of this application;
FIG. 4 is a schematic diagram showing implementation of packet loss at an SDAP layer according to an embodiment of this application;
FIG. 5 is a schematic diagram showing implementation of packet loss at an Xth layer according to an embodiment of this application;
FIG. 6 is a second schematic flowchart of a data packet processing method according to an embodiment of this application;
FIG. 7 is a third schematic flowchart of a data packet processing method according to an embodiment of this application;
FIG. 8 is a fourth schematic flowchart of a data packet processing method according to an embodiment of this application;
FIG. 9 is a fifth schematic flowchart of a data packet processing method according to an embodiment of this application;
FIG. 10 is a sixth schematic flowchart of a data packet processing method according to an embodiment of this application;
FIG. 11 is a seventh schematic flowchart of a data packet processing method according to an embodiment of this application;
FIG. 12 is a first schematic diagram of a structure of a data packet processing apparatus according to an embodiment of this application;
FIG. 13 is a second schematic diagram of a structure of a data packet processing apparatus according to an embodiment of this application;
FIG. 14 is a third schematic diagram of a structure of a data packet processing apparatus according to an embodiment of this application;
FIG. 15 is a fourth schematic diagram of a structure of a data packet processing apparatus according to an embodiment of this application;
FIG. 16 is a fifth schematic diagram of a structure of a data packet processing apparatus according to an embodiment of this application;
FIG. 17 is a schematic diagram of a structure of a communication device according to an embodiment of this application;
FIG. 18 is a schematic diagram of a hardware structure of a first communication device according to an embodiment of this application;
FIG. 19 is a schematic diagram of a hardware structure of a second communication device according to an embodiment of this application;
FIG. 20 is a schematic diagram of a hardware structure of a third communication device according to an embodiment of this application;
FIG. 21 is a schematic diagram of a hardware structure of a fourth communication device according to an embodiment of this application; and
FIG. 22 is a schematic diagram of a hardware structure of a fifth communication device according to an embodiment of this application.

### DETAILED DESCRIPTION

The following clearly and completely describes the technical solutions in the embodiments of the present invention with reference to the accompanying drawings in the embodiments of the present invention. Apparently, the described embodiments are some of the embodiments of the present invention rather than all of the embodiments. All other embodiments obtained by a person of ordinary skill in the art based on the embodiments of the present invention without creative efforts shall fall within the protection scope of the present invention.

In the specification and claims of this application, the terms "include/include" and any variants thereof are intended to cover a non-exclusive inclusion. For example, a process, method, system, product, or device that includes a series of steps or units is not necessarily limited to those steps or units that are clearly listed, but may include other steps or units not clearly listed or inherent to such a process, method, product, or device. In addition, the term "and/or" used in the specification and claims represent at least one of the connected objects. For example, A and/or B represents the following three cases: Only A exists, only B exists, and both A and B exist.

In the embodiments of the present invention, the word such as "example" or "for example" is used to mean serving as an example, an illustration, or a description. Any embodiment or design scheme described as "example" or "for example" in the embodiments of the present invention should not be construed as being preferred or superior to other embodiments or design schemes. To be specific, the use of the word such as "example" or "for example" is intended to present the related concepts in a specific manner.

The technologies described herein are not limited to a fifth-generation mobile communication (5th-generation, 5G) system and an evolution-advanced communication system, is not limited to an LTE/LTE-advanced (LTE-Advanced, LTE-A) system, and may be also applied to various wireless communication systems such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single carrier frequency division multiple access (Single Carrier Frequency Division Multiple Access, SC-FDMA), and other systems.

The terms "system" and "network" may usually be used interchangeably. A CDMA system can implement radio technologies such as CDMA2000 and universal terrestrial radio access (Universal Terrestrial Radio Access, UTRA). UTRA includes broadband CDMA (Wideband Code Division Multiple Access, WCDMA) and other CDMA variants. A TDMA system can implement radio technologies such as global system for mobile communication (Global System for Mobile Communication, GSM). An OFDMA system can implement radio technologies such as ultra mobile broadband (Ultra Mobile Broadband, UMB), evolved UTRA (Evolution-UTRA, E-UTRA), IEEE 802.11 (Wi-Fi), IEEE 802.16 (WiMAX), IEEE 802.20, and Flash-OFDM. UTRA and E-UTRA are parts of a universal mobile telecommunications system (Universal Mobile Telecommunications System, UMTS). LTE and LTE-advanced (for example, LTE-A) are new releases of UMTS using E-UTRA. UTRA, E-UTRA, UMTS, LTE, LTE-A, and GSM are described in documents of an organization named "3rd Generation Partnership Project" (3rd Generation Partnership Project, 3GPP). CDMA2000 and UMB are described in documents of an organization named "3rd Generation Partnership Project 2" (3GPP2). The technology described herein can be applied to the systems and radio technologies mentioned above, and can be also applied to other systems and radio technologies.

In order to better understand the embodiments of the present invention, the following technical points are described first.

Data of video stream in XR can be divided into intra picture (intra picture, I)-frames, predictive (predictive, P)-frames, and bi-directional interpolated predictive (bi-directional interpolated prediction, B)-frames. The I-frame is also referred to as an independently decoded frame. A frame between I-frames is a P-frame or a B-frame. An I-frame associated with a P-frame or a B-frame is an I-frame closest to the P-frame or B-frame forward in a timeline. Without an I-frame, decoding cannot be performed, but an I-frame can be independently decrypted in the absence of a non-I-frame. Therefore, the I-frame is more important than the non-I-frame. QoS requirements of the I-frame and the non-I-frame may be different. For example, the I-frame has a higher priority than the non-I-frame. A transmission rate of the non-I-frame may be greater than that of the I-frame. A frame may be divided into a plurality of slices. A slice may be distinguished as an I slice, a P slice, or a B slice, with similar importance differences.

It is not difficult to understand that data in a service may be different in importance.

In the case of data transmission in a mobile communication network, user plane resources relate to resources of a RAN, a gateway, and a transport layer between the RAN and the gateway. Congestion of any type of resources may result in that data cannot be transmitted to an application server. Then if a core network (such as UPF) continues to push terminal data to the RAN, a processing pressure is further imposed on the RAN, that is, execution of packet loss at the RAN may cause resource overheads of the RAN. In addition, the RAN does not understand a difference between service data, and may lose important data while retaining secondary data. Therefore, how to alleviate congestion of the RAN while guaranteeing important service data is the problem that needs to be solved by the present invention.

In the case of data transmission in a mobile communication network, user plane resources relate to resources of a RAN, a gateway, and a transport layer between the RAN and the gateway. Congestion of any type of resources may result in that data cannot be transmitted to an application server. Then if a terminal continues to request a network to send uplink data, a processing pressure is further imposed on the congested network (such as a RAN, a transport layer, or a gateway), that is, when the network receives data and then executes packet loss, network resource overheads may be caused. In addition, the network does not understand a difference between service data, and may lose important data while retaining secondary data. Therefore, how to alleviate congestion of the network while guaranteeing important uplink service data is the problem that needs to be solved by the present invention.

Therefore, in order to guarantee basic service experience of users in a case that network congestion occurs, the following detailed problems should be solved.

Scenario 1: Congestion occurs in a RAN. The RAN and a terminal transmit (discard or cache) no secondary uplink data.

Question 1: How does UE know that RAN congestion occurs? This is still a problem to be solved.

Scenario 2: Congestion occurs in a transport layer between a RAN and a core network, which is subsequently referred to as congestion in the transport layer. Congestion occurs in a UPF (including an anchor gateway). The RAN and a terminal transmit (discard or cache) no secondary uplink data. The RAN transmits no uplink data that has arrived at the RAN but has not been sent in time.

Question 2: How do the RAN and UE know that congestion occurs in the UPF or the transport layer? This is still a problem to be solved.

In the above three congestion scenarios, the biggest bottleneck lies in the RAN, since the wireless spectrum is limited.

Question 3: How does the terminal know which data packets should not be transmitted (be cached or discarded)? An importance level may only take effect in a mobile communication network, and the terminal may discard data packets before mapping the importance level for data. If the terminal caches the data at the anchor gateway and does not send the data, the terminal may map importance levels of data packets and determine no transmission based on the importance levels. Therefore, there are two solutions: 1) to identify data flow description information about target data that needs no transmission; and 2) to identify an importance level of the target data that needs no transmission.

Question 4: How does the RAN know which data packets should not be transmitted (be cached or discarded)? How does the RAN identify an importance level of the target data that needs no transmission? This still needs to be solved.

Question 5: When the importance level of a data packet reaches or exceeds three levels (such as A, B, C, importance A > B > C), how to select a target data packet that needs no transmission. For example, in the case of small congestion, the congestion can be alleviated by no transmission of class C data packets. In the case of heavy congestion, only by no transmission of class B and class C data packets can the congestion be alleviated. In the case of extreme congestion, none of all data packets are transmitted. How to distinguish this situation is also a problem to be solved by the present invention.

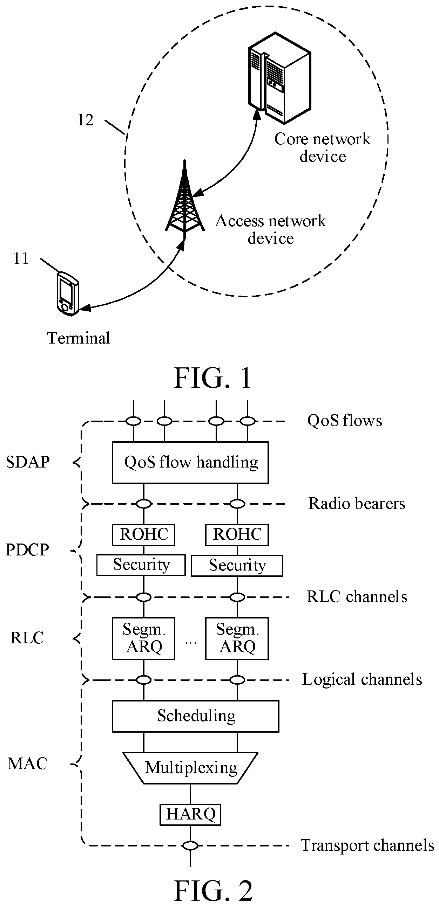

FIG. 1 is a block diagram of an applicable wireless communication system according to an embodiment of this application. The wireless communication system includes a terminal 11 and a network-side device 12. The terminal 11 may be a mobile phone, a tablet personal computer (Tablet Personal Computer, Tablet PC), a laptop Computer (Laptop Computer, LC) or a notebook computer, a personal digital assistant ((Personal Digital Assistant, PDA), PDA), a palmtop computer, a netbook, an ultra-mobile personal computer (ultra-mobile personal computer, UMPC), a mobile Internet device (Mobile Internet Device, MID), an augmented reality (augmented reality, AR)/virtual reality (virtual reality, VR) device, a robot, a wearable device (Wearable Device, WD), vehicle user equipment (VUE), pedestrian user equipment (PUE), a smart home (a household device with a wireless communication function, such as a refrigerator, a television, a washing machine, or furniture), a game console, a personal computer (personal computer, PC), an automated teller machine or a self-service machine, or other terminal-side devices. The wearable device includes a smartwatch, a smart band, a smart headset, smart glasses, smart jewelry (a smart bracelet, a smart chain bracelet, a smart ring, a smart necklace, a smart anklet, a smart ankle chain, or the like), a smart wrist strap, a smart garment, or the like. It should be noted that a specific type of the terminal 11 is not limited in the embodiment of this application. The network-side device 12 may include an access network device or a core network device, where the access network device 12 may be also referred to as a radio access network device, a radio access network (Radio Access Network, RAN), a radio access network function, or a radio access network unit. The access network device 12 may include a base station, a WLAN access point or a WiFi node, or the like. The base station may be referred to as a NodeB, an evolved NodeB (eNB), an access point, a base transceiver station (Base Transceiver Station, BTS), a radio base station, a radio transceiver, a basic service set (Basic Service Set, BSS), an extended service set (Extended Service Set, ESS), a home NodeB, a home evolved NodeB, a transmitting receiving point (Transmitting Receiving Point, TRP) or some other appropriate term in the field. As long as the same technical effect is achieved, the base station is not limited to a specific technical vocabulary. It should be noted that in the embodiment of this application, only a base station in an NR system is described as an example, and a specific type of the base station is not limited. The core network device may include, but is not limited to, at least one of the following: a core network node, a core network function, a mobility management entity (MME), an access and mobility management function (Access and Mobility Management Function, AMF), a session management function (Session Management Function, SMF), a user plane function (User Plane Function, UPF), a policy control function (Policy Control Function, PCF), a policy and charging rules function (Policy and Charging Rules Function, PCRF), an edge application server discovery function (Edge Application Server Discovery Function, EASDF), a unified data management (Unified Data Management, UDM), a Unified Data Repository (Unified Data Repository, UDR), a home subscriber server (Home Subscriber Server, HSS), a centralized network configuration (Centralized network configuration, CNC), a network repository function (Network Repository Function, NRF), a network exposure function (Network Exposure Function, NEF), a local NEF (local NEF, or L-NEF), a binding support function (Binding Support Function, BSF), an Application Function (Application Function, AF), and the like. It should be noted that in the embodiment of this application, only a core network device in an NR system is described as an example, and a specific type of the core network device is not limited.

FIG. 2 is a schematic diagram of an uplink two-layer structure according to the related art. As shown in FIG. 2, one DRB corresponds to one logical channel, and each logical channel has an independent priority thereof. A BSR performs statistics based on logical channel groups and provides corresponding index values to a RAN, and the RAN allocates time-frequency resources based on the BSR provided by UE. In a case that the time-frequency resources are not enough to upload all data in the BSR in one time, the UE prioritizes sending of data in logical channels with higher priority and waits for time-frequency resources allocated by the RAN next time. In a case that timeout occurs but the data is not scheduled for sending, a MAC layer of the UE may discard the data.

XR data is distinguished in importance (such as I-frames and P-frame). In order to minimize the impact on the RAN, if data of different importance is mapped to different QoS flows, in a case that each corresponding QoS flow is mapped to an independent DRB, a MAC layer scheduling technology in the related art can be applied to naturally discard low-priority packets.

If packets with different importance levels are DRBs mapped to the same QoS flow or different QoS flows but a public DRB, the priority of a logical channel corresponding to the DRB cannot distinguish the priority of the XR data.

Then there may be the following options:
packet loss is performed at a service data adaptation protocol (SDAP) layer;
the problem to be solved in packet loss at the SDAP layer is that packets cannot be pushed to a packet data convergence protocol (PDCP) layer after data reaches the SDAP layer;
an Xth layer is added above the SDAP layer for packet loss;
packet loss is performed at the PDCP layer;
or a BSR is enhanced at the MAC layer to indicate an importance level to the MAC layer of the UE through interlayer interaction, the UE loses packets at the MAC layer based on importance levels, or calculates the BSR by distinguishing between different importance levels (such as a BSR of an importance level A or a BSR of an importance level B), and the RAN calculates which resources should be scheduled.

Packet loss at the MAC layer (which is equivalent to unpacking a packaged box in which a plurality of express items have been packaged and taking out an express item) is too difficult to consider.

Optionally, obtaining may be understood as obtaining from a configuration, receiving, receiving after a request is passed, obtaining through self-learning, obtaining by self-determining, self-generation, obtaining by deriving from information not received, or obtaining after processing of received information, which can be specifically determined according to actual needs, and is not limited in the embodiment of the present invention. For example, when indication information for a capability, which is sent by a device, is not received, it can be inferred that the device does not support the capability.

Optionally, the sending may include broadcasting, broadcasting in a system message, and returning after responding to a request.

In an optional embodiment of the present invention, the communication device may include at least one of the following: a communication network element and a terminal.

In an embodiment of the present invention, the communication network element may include at least one of the following: a core network element and a radio access network element.

In the embodiment of the present invention, the core network element (CN network element) may include, but is not limited to, at least one of the following: a core network device, a core network node, a core network function, a core network element, a mobility management entity (MME), an access and mobility management function (Access Management Function, AMF), a session management function (Session Management Function, SMF), a user plane function (User Plane Function, UPF), a serving GW (Serving GW, SGW), a PDN gateway (PDN Gate Way, PDN gateway), a policy control function (Policy Control Function, PCF), a policy and charging rules function (Policy and Charging Rules Function, PCRF), a serving GPRS support node (Serving GPRS Support Node, SGSN), a gateway GPRS support node (Gateway GPRS Support Node, GGSN), and an Application function (Application Funcation, AF).

In the embodiment of the present invention, a RAN network element may include, but is not limited to, at least one of the following: a radio access network device, a radio access network node, a radio access network function, a radio access network unit, a 3GPP radio access network, a non-3GPP radio access network, a centralized unit (Centralized Unit, CU), a distributed unit (Distributed Unit, DU), a base station, an evolved NodeB (evolved Node B, eNB), 5G base station (gNB), a radio network controller (Radio Network Controller, RNC), a NodeB (NodeB), a non-3GPP interworking function (Non-3GPP Inter Working Function, N3IWF), an access control (Access Controller, AC) node, an Access Point (AP) device or a wireless local area network (Wireless Local Area Networks, WLAN) node, and an N3IWF.

A base station may be a base transceiver station (Base Transceiver Station, BTS) in the GSM or CDMA, or may be a NodeB (NodeB) in WCDMA, or may be an evolved NodeB (eNB or e-NodeB, or evolutional Node B) in LTE or a 5G base station (gNB), which is not limited in the embodiment of the present invention.

In an optional embodiment of the present invention, the UE may include one of the following: a terminal device, a terminal device and a card, and a card.

In an optional embodiment of the present invention, the card may include one of the following: a SIM card, a USIM card, and eSIM.

In an optional embodiment of the present invention, the terminal may include a relay supporting a terminal function and/or a terminal supporting a relay function. The terminal may be also referred to as a terminal device or a user equipment (User Equipment, UE). The terminal may be a mobile phone, a tablet personal computer (Tablet Personal Computer, Tablet PC), a laptop computer (Laptop Computer, LC), a personal digital assistant (Personal Digital Assistant, PDA), PDA), a mobile Internet device (Mobile Internet Device, MID), a wearable device (Wearable Device, WD) or vehicle user equipment, or other terminal-side devices. It should be noted that a specific type of the terminal is not limited in the embodiment of the present invention.

In an optional embodiment of the present invention, information about the first target data packet includes at least one of the following: an importance level, data flow description information (such as a frame type or a slice type) about the target data packet, data set description information about the target data packet, mapped tunnel information about the target data packet, a direction of the target data packet, and a source interface of the target data packet.

In an optional embodiment of the present invention, the packet is an uplink data packet.

In an optional embodiment of the present invention, the importance level of the data packet is in description information about a dataset.

In an optional embodiment of the present invention, transmitting no second data packet means transmitting no second data packet in a case that no first data packet is transmitted.

In an optional embodiment of the present invention, no transmission or abandoning transmission includes at least one of the following: caching locally, discarding, and deleting.

In an optional embodiment of the present invention, a user plane network element includes: a user plane network element (such as a UPF or an anchor gateway) of a core network.

In an optional embodiment of the present invention, the first target data packet is at least one of the following: a data packet with a low importance level, a data packet whose transmission needs to be abandoned, a data packet allowed not to be transmitted, a data packet whose transmission needs no priority guarantee, and a data packet on which no data packet whose transmission needs priority guarantee depends.

In an optional embodiment of the present invention, transmitting no second data packet means transmitting no second data packet in a case that no first data packet is transmitted.

In an optional embodiment of the present invention, transmitting no second data packet or abandoning transmission of the second data packet means transmitting no second data packet in a case that no first data packet is transmitted.

It can be understood that no transmission may be also referred to as abandoning transmission, and the two have the same substantive meaning.

In an optional embodiment of the present invention, the second target data packet is a data packet that depends on the first target data packet.

In an optional embodiment of the present invention, the first data packet is at least one of the following: a data packet specified by information about the first data packet, a data packet whose transmission needs to be abandoned, and a data packet whose transmission is allowed to be abandoned.

In an optional embodiment of the present invention, the second data packet is a data packet on which a third data packet depends.

In an optional embodiment of the present invention, the third data packet is a data packet whose transmission needs priority guarantee.

In an optional embodiment of the present invention, a fourth data packet is a data packet on which the third data packet depends.

In an optional embodiment of the present invention, N3 is an interface between a RAN network element and a user plane network element. N9 is an interface between user plane network elements. The RAN network element is directly connected to the anchor gateway (also a user plane network element) through N3 or through other user plane network elements.

In an optional embodiment of the present invention, monitoring, measurement, and surveillance may have the same meaning.

In an optional embodiment of the present invention, monitoring, measurement, and surveillance of a network resource load are all means of obtaining the network resource load.

In an optional embodiment of the present invention, a type of network resource load required to be monitored includes at least one of the following: a resource load of a transport layer, a resource load of a RAN network element, and a resource load of a user plane network element.

In an optional embodiment of the present invention, concepts of the resource load and the network resource load represent the same meaning and can be mixed. The network resource load or the resource load type may include at least one of the following: a resource load of a first end (such as a first communication device), a resource load of a second end (such as a second communication device), a resource load of a transport layer, a resource load of a RAN network element, and a resource load of a user plane network element.

In an optional embodiment of the present invention, an actual resource load is a measured resource load.

In an optional embodiment of the present invention, the network resource load includes a network resource usage state, which can be reflected by a network resource usage level. A network resource load level includes a network congestion level, which can be reflected by a network congestion level.

In an optional embodiment of the present invention, the resource load includes a resource usage state, which can be reflected by a resource usage level. The resource load level includes a congestion level.

In an optional embodiment of the present invention, the importance level includes indication information for indicating an importance value, or indication information for indicating the importance level. The importance level may be expressed as an importance parameter.

In an implementation, an importance level range may be reflected by an importance level. For example, an importance level X is used to indicate that the importance level range is all importance levels with importance lower than or equal to the Xth importance. For example, an importance level Y is used to indicate that the importance level range is all importance levels with importance higher than or equal to the Yth importance.

In another implementation, the importance level range is reflected by one or more importance levels.
(1) In an implementation, a first importance level is used to indicate at least one of the following: a range of the first target data packet is packets whose importance levels are lower than or equal to the first importance, and the importance level range is all importance levels lower than or equal to the first importance.
(2) In an implementation, a second importance level is used to indicate at least one of the following: a range of the first data packet is packets whose importance levels are lower than or equal to the second importance, and the importance level range is all importance levels lower than or equal to the second importance.
(3) In an implementation, an importance level range of the third data packet is reflected by a third importance level. The third importance level is used to indicate at least one of the following: a range of the third data packet is packets whose importance levels are higher than or equal to the third importance, and the importance level range is all importance levels higher than or equal to the third importance.

In an optional embodiment of the present invention, the importance level includes priority (such as priority, allocation/retention priority (Allocation/Retention Priority, ARP)).

In an optional embodiment of the present invention, a second configuration for transmitting no data packet or an implementation of the second configuration for transmitting no data packet is a forwarding action rule (Forwarding Action Rule, FAR).

In an optional embodiment of the present invention, a header of a service application layer is, for example, an L4S protocol header.

In an optional embodiment of the present invention, the data flow description information is used to identify that the data flow is at least one of the following: a service, an application, a task, and the data flow.

In an embodiment of this application, the data flow includes a service data flow (such as a service data flow, SDF). The data flow may be referred to as a flow or a data flow.

In an optional embodiment of the present invention, the data flow description information includes at least one of the following: one or more items of description information about a data set, service type information, a fully qualified domain name (Fully Qualified Domain Name, FQDN), a source IP address, a destination IP address, a source port, a destination, a protocol number, a source media access control (Media Access Control, MAC) address, a destination MAC address, a service application (Application) identifier, an operating system (operating system, OS) identifier, a packet detection rule (packet detection rule, PDR), and a data network name (Data Network Name, DNN).

In an optional embodiment of the present invention, the data set or the dataset has the same meaning. The data set may be a data set composed of partial data in a first object or a second object. A data set includes one or more pieces of data. Generally, the importance of data in a data set may be the same. The importance of data in different data sets may be different.

In an optional embodiment of the present invention, the data set description information includes at least one of the following: an importance level, description information about GoP (Group of pictures, GoP), description information about a frame, description information about a slice, description information about a tile, description information about an FOV, and description information about a DoF.

In an implementation, the description information about a frame includes at least one of the following: a frame type of the frame (such as but not limited to an I-frame, a P-frame, and a B-frame) and a quantity of data packets contained in the frame.

In an implementation, the description information about a slice includes at least one of the following: a slice type of the slice (such as but not limited to an I slice, a P slice, and a B slice), and a quantity of data packets contained in the slice.

In an implementation, the description information about a tile includes at least one of the following: a tile type of the tile (such as but not limited to an I tile, a P tile, and a B tile) and a quantity of data packets contained in the tile.

In an implementation, the description information about a GOP includes at least one of the following: a frame type included by the GOP, a frame appearance order, and a quantity of data packets contained.

In an alternative embodiment of the present invention, the data flow description information and/or the data set description information may be embodied as packet filter information or data packet detection information.

In an optional embodiment of the present invention, information about a terminal is used to identify the terminal, and the information about a terminal includes at least one of the following: an identifier of the terminal, an IP address of the terminal, and a MAC address of the terminal.

In an optional embodiment of the present invention, information about a tunnel or tunnel information is used to identify the tunnel, and the information about a tunnel or the tunnel information includes at least one of the following: an identifier of the tunnel (such as a PDU session identifier, an identifier of a QoS flow, and an identifier of a radio bearer).

In an optional embodiment of the present invention, the tunnel may include at least one of the following: a PDU session, a quality of service (Quality of Service, QoS) flow, an evolved packet system (Evolved Packet System, EPS) bearer, a PDP context, a DRB, an SRB, and an Internet protocol security (Internet Protocol Security, IPsec) association.

In an embodiment of the present invention, an NG interface is an interface between the RAN and the CN, and may be also referred to as an S1 interface or an N2 interface. The naming is not limited.

In an embodiment of the present invention, a wireless communication network may be at least one of the following: a public network and a non-public network; or a first network may be a non-public network.

In an embodiment of the present invention, the non-public network is the abbreviation of the non-public network. The non-public network may be referred to as one of the following: a non-public communication network. The non-public network may include at least one of the following deployment modes: a physical non-public network, a virtual non-public network, and a non-public network implemented on a public network. In an implementation, the non-public network is a closed access group (Closed Access Group, CAG). A CAG may include a group of terminals.

In an embodiment of the present invention, the non-public network may include or be referred to as a private network. The private network may be referred to as one of the following: a private communication network, private, a local area network (Local Area Network, LAN), a virtual private network (Virtual Private Network, PVN), an isolated communication network, a dedicated communication network, or other names. It should be noted that the naming method is not specifically limited in the embodiment of the present invention.

In an embodiment of the present invention, the public network is the abbreviation of the public network. The public network may be referred to as one of the following: a public communication network or other names. It should be noted that the naming method is not specifically limited in the embodiment of the present invention.

In an embodiment of the present invention, a data packet size may be referred to as a data packet length.

In an embodiment of the present invention, a data packet may be referred to as a data frame.

In an embodiment of the present invention, the first target data packet is at least one of the following: a data packet with a low importance level, a data packet whose transmission needs to be abandoned, a data packet allowed not to be transmitted, a data packet whose transmission needs no priority guarantee, and a data packet on which no data packet whose transmission needs priority guarantee depends.

In an embodiment of the present invention, the second target data packet is a data packet that depends on the first target data packet.

In an embodiment of the present invention, the first data packet is at least one of the following: a data packet specified by information about the first data packet, a data packet whose transmission needs to be abandoned, and a data packet whose transmission is allowed to be abandoned.

In an embodiment of the present invention, the second data packet is a data packet on which a third data packet depends.

In an embodiment of the present invention, the third data packet is a data packet whose transmission needs priority guarantee.

In an embodiment of the present invention, a fourth data packet is a data packet on which the third data packet depends.

In an embodiment of the present invention, first indication information is used to indicate at least one of the following: network congestion starts, it is requested to perform an operation of transmitting no data packet, it is requested to perform a first operation, it is requested to abandon transmission of or allow not to transmit all data packets, it is requested to abandon transmission of or allow not to transmit the first data packet, it is requested to abandon transmission of or allow not to transmit a second data packet, and it is allowed not to transmit data packets other than a third data packet and/or a fourth data packet.

In an embodiment of the present invention, third indication information is used to indicate at least one of the following: network congestion ends, an operation of transmitting no data packet is stopped, a first operation is stopped, it is requested to perform a second operation, and data transmission is resumed.

In an embodiment of the present invention, second indication information is used to indicate at least one of the following: network congestion starts, it is requested to perform an operation of transmitting no data packet, it is requested to perform a first operation, it is requested to abandon transmission of or allow not to transmit all data packets, it is requested to abandon transmission of or allow not to transmit the first data packet, it is requested to abandon transmission of or allow not to transmit a second data packet, and it is allowed not to transmit data packets other than a third data packet and/or a fourth data packet.

In an embodiment of the present invention, fourth indication information is used to indicate at least one of the following: network congestion ends, an operation of transmitting no data packet is stopped, a first operation is stopped, it is requested to perform a second operation, and data transmission is resumed.

The data packet processing method according to the embodiment of the present invention is described below.

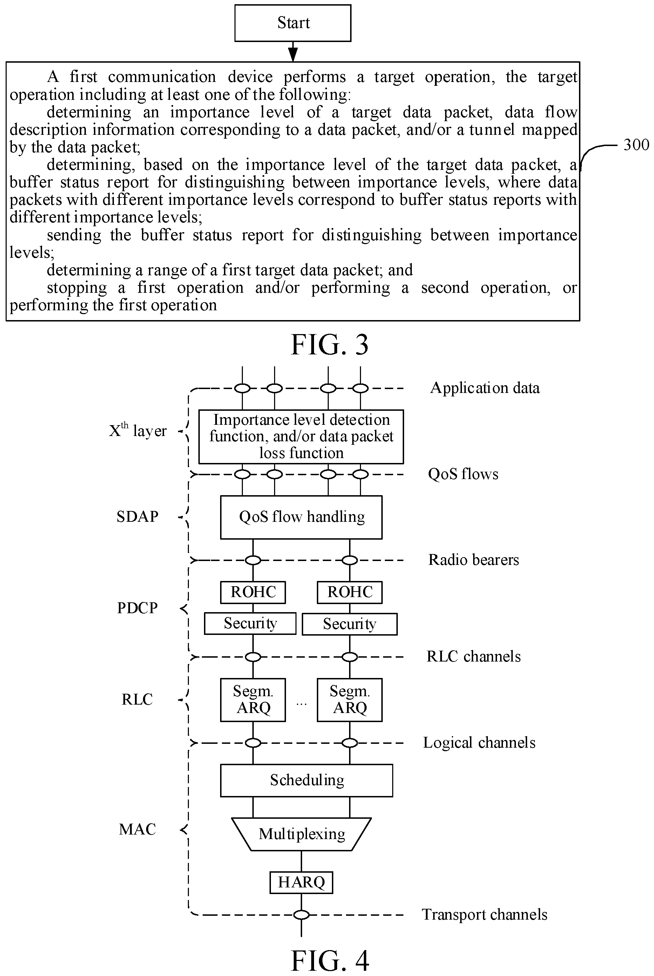

FIG. 3 is a first schematic flowchart of a data packet processing method according to an embodiment of this application. Referring to FIG. 3, the embodiment of the present invention provides the data packet processing method, which is applied to a first communication device. The first communication device includes, but is not limited to, a user equipment (such as a UE) or a CN network element (for example, including but not limited to a UPF). The method includes the following step.

Step 300: The first communication device performs a target operation, the target operation including at least one of the following:
determining an importance level of a target data packet, data flow description information corresponding to a data packet, and/or a tunnel mapped by the data packet;
determining, based on the importance level of the target data packet, a buffer status report for distinguishing between importance levels, where data packets with different importance levels correspond to buffer status reports with different importance levels;
sending the buffer status report for distinguishing between importance levels;
determining a range of a first target data packet; and
stopping a first operation and/or performing a second operation, or performing the first operation.

In an implementation, the first communication device may determine performing of the first operation based on an importance level of a data packet before sending a data transmission request (that is, before the RAN performs data scheduling). For example, in a case that QoS cannot be guaranteed or RAN congestion occurs, the first communication device may determine performing of the first operation based on an importance level of a data packet before sending a data transmission request (that is, before the RAN performs data scheduling), for example, discarding target data packets with lower importance levels, to reduce congestion.

In an implementation, the buffer status report for distinguishing between importance levels reflects a cache amount of data with different importance levels.

In an implementation, the first communication device may determine, in a descending order of priorities, data packets not to be transmitted, such as transmitting no data packets with the lowest priority, where the priority order may be predetermined or predefined by a protocol; and where the priority order may be determined based on importance levels of data packets.

It is assumed that a priority of a first data packet is, for example, A, B, and C (priority A > B > C). In a case that network congestion occurs, no class A data packets are transmitted first to see whether the network congestion ends. If the network congestion does not end, no class A or B data packets are transmitted to see whether the congestion can be alleviated or removed. A try is made in sequence until the congestion is alleviated or ends.

In an implementation, the first communication device may try no transmission of data packets with different importance levels in sequence in an ascending order of importance levels. It is assumed that an importance level of a data packet is, for example, A, B, and C (importance A > B > C). In a case that network congestion occurs, no data packets with importance C are transmitted first to see whether the network congestion ends. If the network congestion does not end, no data packets with importance B or C are transmitted to see whether the congestion can be alleviated. A try is made in sequence until the congestion is alleviated or ends.

In an implementation, the data packet is an uplink data packet.

In an implementation, the first communication device may determine priority information by itself, or receive the priority information from the RAN, or determine the priority information based on predefinition by a protocol.

In the embodiment of the present invention, a target operation may be performed before a data transmission request is sent, so that data packets with low importance levels may be discarded before data scheduling in the case of network congestion, thereby effectively relieving congestion, guaranteeing important data, and saving resources.

Optionally, the target data packet is at least one of the following: a received data packet (such as a received uplink data packet, or a received data packet to be sent), and a data packet in a buffer.

In an implementation, the received data packet includes a received data packet to be sent.

In an implementation, the data packet is an uplink data packet.

Optionally, in the first communication device, a target layer for performing the target operation includes at least one of the following: a PDCP layer, an SDAP layer, and an Xth layer, where
the Xth layer is located at at least one of the following: a non-access stratum (NAS) layer or an access stratum (AS) layer; and
the Xth layer is a layer above the SDAP layer.

In an implementation, the target layer for performing the target operation includes a PDCP layer, that is, packet loss is implemented at the PDCP layer.

In an implementation, FIG. 4 is a schematic diagram showing implementation of packet loss at an SDAP layer according to an embodiment of this application. Referring to FIG. 4, the target layer for performing the target operation includes an SDAP layer, that is, packet loss is implemented at the SDAP layer.

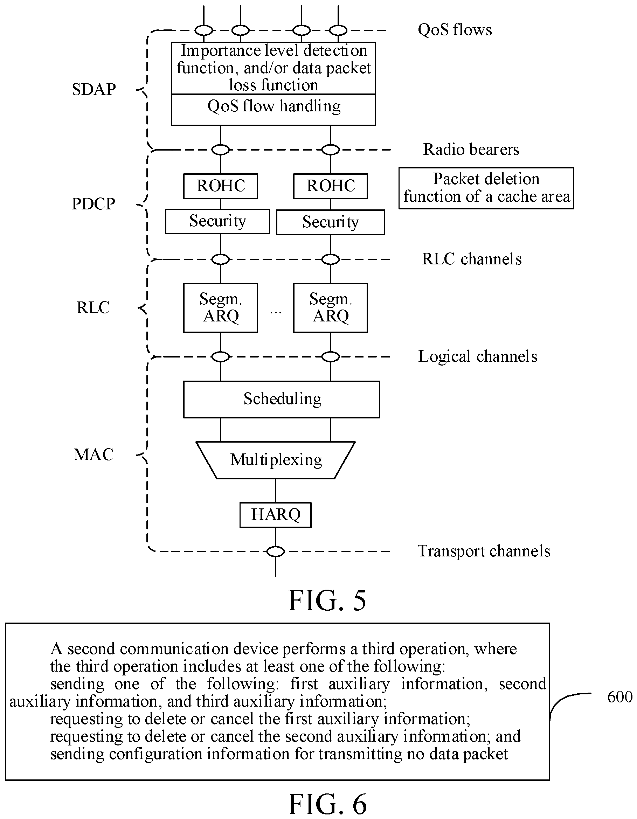

In an implementation, FIG. 5 is a schematic diagram showing implementation of packet loss at an Xth layer according to an embodiment of this application. Referring to FIG. 5, an Xth layer is added above the SDAP layer for packet loss, and the target layer for performing the target operation includes the Xth layer.

Optionally, the first target data packet is at least one of the following: a data packet with a low importance level, a data packet whose transmission needs to be abandoned, a data packet whose transmission is allowed to be abandoned, a data packet whose transmission needs no priority guarantee, and a data packet on which no data packet whose transmission needs priority guarantee depends.

Optionally, the determining a range of a first target data packet includes at least one of the following:
applying, based on a descending order of priorities, information about first data packets with different priorities in sequence to determine the range of the first target data packet; and
determining the range of the first target data packet by using importance levels in an ascending order of the importance levels;
the first target data packet includes at least one of the following: the first data packet, a second data packet, and a data packet with a lowest importance level;
the range of first target data packet includes at least one of the following: a range of the first data packet, a range of the second data packet, and a range of the data packet with a lowest importance level;
the first target data packet does not include at least one of the following: a third data packet and a fourth data packet;
the range of first target data packet does not include at least one of the following: a range of the third data packet and a range of the fourth data packet,
where
a second target data packet is a data packet that depends on the first target data packet;
the third data packet is a data packet whose transmission needs priority guarantee; and
the fourth data packet is a data packet on which the third data packet depends.

In an implementation, when there are a plurality of importance levels, specific important levels, with which no data packets should be transmitted, are unclear. For example, if the importance levels are A, B, and C, and A > B > C, to determine no transmission of packets with the importance level C or no transmission of packets with the importance level B or C, it is necessary to determine a range of the first target data packet.

In an implementation, the first data packet is at least one of the following: a data packet specified by information about the first data packet, a data packet whose transmission needs to be abandoned, and a data packet whose transmission is allowed to be abandoned.

Optionally, the first operation includes at least one of the following:
determining whether the target data packet is in the range of the first target data packet;
determining whether the target data packet is the second target data packet; and
performing at least one of the following on the target data packet that is in the range of the first target data packet and/or the second target data packet: skipping transmitting the target data packet, the buffer status report including no cache amount of the target data packet, and deleting the target data packet in the buffer;
skipping transmitting the first target data packet;
skipping transmitting the second target data packet in a case that transmission of the first target data packet is skipped;
the buffer status report including no cache amount of the first target data packet and/or the second target data packet, and
deleting the first target data packet and/or the second target data packet in the buffer;
requesting a RAN network element to transmit (for example, including scheduling) other data packets;
a target layer of the first communication device transparently transmitting other data packets to a next layer of the target layer;
the target layer of the first communication device adding importance level information about other data packets to the data packets and then sending the packets to the next layer;
skipping transmitting all data packets;
applying, based on the descending order of priorities, the information about the first data packets with different priorities in sequence to skip transmitting the target data packet conforming to the information about the first data packet; and
skipping transmitting the target data packet in sequence in the ascending order of the importance levels.

In an implementation, for a target data packet, if it is determined that the target data packet is in the range of the first target data packet, the target data packet may not be transmitted. For example, the range of the first data packet is packets with an importance level of X. If the importance level of a target data packet is X, the target data packet may not be transmitted.

In an implementation, the buffer status report (BSR) is a BSR of a MAC layer.

Optionally, the determining whether the target data packet is in the range of the first target data packet includes at least one of the following:
determining that the target data packet is in the range of the first target data packet in a case that the importance level of the target data packet matches an importance level range of the first target data packet;
determining that the target data packet is in the range of the first target data packet in a case that data flow description information about the target data packet matches data flow description information about the first data packet;
determining that the target data packet is in the range of the first target data packet in a case that tunnel information mapped by the target data packet matches tunnel information corresponding to the first data packet;
determining that the target data packet is in the range of the first target data packet in a case that a direction mapped by the target data packet matches a direction mapped by the first data packet; and
determining that the target data packet is in the range of the first target data packet in a case that a source interface mapped by the target data packet matches a source interface mapped by the first data packet.

Optionally, the second operation includes at least one of the following:
the target layer of the first communication device transparently transmits all the data packets to the next layer of the target layer;
the first communication device requests the RAN network element to transmit all the data packets; and
the target layer of the first communication device adds importance level information about data packets to the data packets and then sends the packets to the next layer.

It is not difficult to understand that the second operation is essentially to resume data transmission (for example, to lose no packet).

Optionally, the first communication device performing a target operation includes the following:
the first communication device obtains first information, the first information including at least one of the following: information about the target data packet, data flow description information and importance mapping information, first auxiliary information, second auxiliary information, third auxiliary information, configuration information for transmitting no data packet, one or more items of related information about the first data packet, and one or more items of related information about the third data packet; and
the first communication device performs the target operation based on the first information.

In an implementation, the information about the target data packet is located in a header of the target data packet.

In an implementation, the information about the target data packet includes at least one of the following: an importance level, data flow description information (such as a frame type or a slice type) of the target data packet, mapped tunnel information about the target data packet, a direction of the target data packet, and a source interface of the target data packet.

In an implementation, the first communication device may perform a target operation based on one or more items of first information.

For example, the first communication device may perform the target operation based on description information (such as a P-frame) of a data flow corresponding to a target data packet, and description information and importance mapping information about the data flow, and first auxiliary information.

For example, the first communication device may perform the target operation based on the importance level of the target data packet and the first auxiliary information.

For example, the first communication device may perform the target operation based on configuration information for transmitting no data packet and second auxiliary information.

Optionally, the operation of determining an importance level of a target data packet includes one of the following:
obtaining importance and the like of the target data packet from header information about the target data packet; or
obtaining data flow description information about the target data packet, and data flow description information and importance mapping information; and determining the importance level of the target data packet based on the data flow description information about the target data packet, and the data flow description information and importance mapping information.

In an implementation, the obtaining importance and the like of the target data packet from information about the target data packet includes the following:
a header of the target data packet carries the information about the target data packet,
the information about the target data includes importance level information, and
the first communication device determines the importance level of the target data packet based on the importance level information carried in the header of the target data packet.

Optionally, the first communication device performing a target operation includes the following:
the first communication device obtains first auxiliary information, and
the first communication device performs the target operation based on the first auxiliary information,
where
the first auxiliary information includes at least one of the following:
   first indication information, the first indication information being used to indicate at least one of the following: network congestion starts, it is requested to perform an operation of transmitting no data packet, it is requested to perform a first operation, it is requested to abandon transmission of or allow not to transmit all data packets, it is requested to abandon transmission of or allow not to transmit the first data packet, it is requested to abandon transmission of or allow not to transmit a second data packet, and it is allowed not to transmit data packets other than a third data packet and/or a fourth data packet;
   information about the first data packet, the information about the first data packet being used to indicate a range of the first data packet;
   information about the third data packet, the information about the third data packet being used to indicate a range of the first data packet;
   a time period during which no data is transmitted; and
   a network resource load or a load value index corresponding to the network resource load,
   where
   the second data packet is a data packet that depends on the first data packet.

In an implementation, a time for abandoning data transmission includes: a start time, an end time, and duration. The time may be used to indicate at least one of the following: a time period during which it is requested to abandon transmitting packets, and a time period during which it is requested to abandon transmitting the first data packet and/or the second data packet.

In an implementation, a time period during which no data is transmitted may indicate a valid time of auxiliary information, and after the timeout, the first communication device deletes the auxiliary information.

In an implementation, the first auxiliary information may be determined by the first communication device or obtained from a first source end. The first source end includes at least one of the following: a RAN and a CN (such as an AMF and an SMF).

In an implementation, the operation of transmitting no data packet is started, and since the first communication device is instructed to start transmitting no data packet, the first communication device can determine the range of data packets not to be transmitted.

In an implementation, transmitting no second data packet means transmitting no second data packet in a case that no first data packet is transmitted.

Optionally, the first communication device performing a target operation includes the following:
in a case that a first condition is met, the first communication device stops performing the first operation and/or performs the second operation, where
the first condition includes at least one of the following:
   network congestion ends;
   an actual network resource load does not reach a resource load corresponding to the first data packet or drops below the resource load corresponding to the first data packet;
   the first auxiliary information and/or the second auxiliary information is not obtained;
   previously obtained first auxiliary information and/or second auxiliary information is deleted or canceled;
   third auxiliary information is obtained; and
   a current time is not within a time period during which no data is transmitted,
   where
   the third auxiliary information includes at least one of the following:
      third indication information, the third indication information being used to indicate at least one of the following: network congestion ends, an operation of transmitting no data packet is stopped, a first operation is stopped, it is requested to perform a second operation, and data transmission is resumed; and
      a network resource load or a load value index corresponding to the network resource load.

In an implementation, the first communication device may stop performing the first operation in a case that the first condition is met.

In an implementation, the first communication device may perform the second operation in a case that the first condition is met, where
the first condition includes at least one of the following:
no first auxiliary information is obtained;
the previously obtained first auxiliary information is deleted or withdrawn;
a time period during which no data is transmitted is overtime; and
second indication information is obtained.

In an implementation, the first communication device may stop performing, in a case that no first auxiliary information is obtained, the first operation and/or perform the second operation.

In an implementation, the first communication device may stop performing, in a case that the previously obtained first auxiliary information is deleted or withdrawn, the first operation and/or perform the second operation.

In an implementation, the first communication device may stop performing, in a case that the time period during which no data is transmitted is overtime, the first operation and/or perform the second operation.

In an implementation, the first communication device may stop performing, in a case that the second indication information is obtained, the first operation and/or perform the second operation.

Optionally, the first communication device performing a target operation further includes at least one of the following:
the first auxiliary information further obtains effective time of the first communication device in a case of obtaining the first auxiliary information; and
the first communication device deletes the first auxiliary information in a case that the effective time of the first auxiliary information is overtime.

In an implementation, in a case that the first auxiliary information is deleted, the first operation may be stopped and/or the second operation may be performed.

Optionally, the first communication device performing a target operation includes the following:
the first communication device obtains the configuration information for transmitting no data packet, the one or more items of related information about the first data packet, the one or more items of related information about the third data packet, and/or the second auxiliary information; and
performs the first operation based on the configuration information for transmitting no data packet, the one or more items of related information about the first data packet, the one or more items of related information about the third data packet, and/or the second auxiliary information, where
the configuration information for transmitting no data packet includes at least one of the following:
   one or more items of related information about the first data packet; and
   one or more items of related information about the third data packet;
   first indication information, the first indication information being used to indicate at least one of the following: network congestion starts, it is requested to perform an operation of transmitting no data packet, it is requested to perform a first operation, it is requested to abandon transmission of or allow not to transmit all data packets, it is requested to abandon transmission of or allow not to transmit the first data packet, it is requested to abandon transmission of or allow not to transmit a second data packet, and it is allowed not to transmit data packets other than a third data packet and/or a fourth data packet;
   where
   the related information about the first data packet includes at least one of the following: information about the first data packet, an index of the information about the first data packet, an effective condition of the related information about the first data packet, and an invalid condition of the related information about the first data packet;
   the related information about the third data packet in a descending order of priorities corresponding to the first data packet includes at least one of the following: information about the third data packet, and an index of the information about the third data packet,
   where
   the information about the first data packet is used to indicate a range of the first data packet;
   the information about the third data packet is used to indicate a range of the third data packet; and
   the second data packet is a data packet that depends on the first data packet,
   the first data packet is at least one of the following: a data packet specified by information about the first data packet, a data packet whose transmission needs to be abandoned, and a data packet whose transmission is allowed to be abandoned.

The second auxiliary information includes at least one of the following:
second indication information, the second indication information being used to indicate at least one of the following: network congestion starts, it is requested to perform an operation of transmitting no data packet, it is requested to perform a first operation, it is requested to abandon transmission of or allow not to transmit all data packets, it is requested to abandon transmission of or allow not to transmit the first data packet, it is requested to abandon transmission of or allow not to transmit a second data packet, and it is allowed not to transmit data packets other than a third data packet and/or a fourth data packet;
an index of the information about the first data packet;
an index of the information about the third data packet,
a time period during which no data is transmitted; and
a network resource load or a load value index corresponding to the network resource load,
where
the second data packet is a data packet that depends on the first data packet.

In an implementation, the resource load reaching a level N means one of the following: the resource load is equal to or more than a resource load corresponding to the level N, but not more than a resource load corresponding to a level N+1; and the resource load is equal to or more than a resource load corresponding to a level N-1, but not more than the resource load corresponding to the level N.

It is not difficult to understand that the level N may represent a value range corresponding to [N,N+1] or a value range corresponding to [N-1,N].

In an implementation, applying information about first data packets in a descending order of priorities to perform the first operation based on the information about the first data packets includes: based on different network resource load levels, applying the information about the first data packets with different priorities in a descending order of priorities to perform the first operation until network congestion ends or data with first importance can be successfully scheduled.

It is not difficult to understand that when congestion occurs, there is a difference in a degree of congestion. No transmission of the target data that conforms to the information about first data packets corresponding to a first priority may be tried first to see whether the congestion is removed or whether the most important data can be successfully scheduled; if not, no transmission of the target data that conforms to the information about first data packets corresponding to the first priority or a second priority may be tried to see whether the effect can be achieved. If the information about the first data packets corresponding to the second priority already contains the information about the first data packets corresponding to the first priority, no transmission of the target data that conforms to the information about the first data packets corresponding to the second priority may be tried.

In an implementation, the first communication device obtains resource usage information from a RAN network element or a second communication device.

In an implementation, the first communication device obtains, from an Xth source end, configuration information for transmitting no data packet; and the Xth source end includes at least one of the following: a RAN network element, a second communication device, and a CN network element (such as an AMF, or a PCF).

In an implementation, in a case that the related information about the first data packet includes an effective condition of the information about the first data packet, only when the effective condition of the information about the first data packet is met can the target operation be performed based on the information about the first data packet.

Optionally, the effective condition of the related information about the first data packet includes at least one of the following: network congestion starts, and an actual network resource load reaches a resource load corresponding to the first data packet;
and/or
the invalid condition of the related information about the first data packet includes at least one of the following: network congestion ends, and an actual network resource load does not reach a resource load corresponding to the first data packet or drops below the resource load corresponding to the first data packet;
   and/or
the resource load corresponding to the first data packet is used to indicate, in a case that the actual network resource load reaches the resource load corresponding to the first data packet, that the information about the first data packet takes effect, or that the first operation is performed based on the information about the first data packet;
   and/or
a resource load corresponding to the third data packet is used to indicate, in a case that the actual network resource load reaches the resource load corresponding to the third data packet, that the information about the third data packet takes effect, or that a data transmission guarantee operation is performed based on the information about the third data packet;
   and/or
the priority corresponding to the first data packet is a priority of abandoning transmission, which is used to indicate that the first operation is performed based on the information about the first data packets with different priorities in a descending order of priorities;
   and/or
a priority corresponding to the third data packet is a priority of guaranteeing transmission, which is used to indicate that the data transmission guarantee operation is performed based on the information about the third data packet with different priorities in a descending order of priorities;
   and/or
the index of the information about the first data packet is used to index the information about the first data packet;
   and/or
the index of the information about the third data packet is used to index the information about the third data packet.

Optionally, performing a first operation includes: in a case that a first condition is met, performing the first operation based on the information about the first data packet, or determining the information about the first data packet to be effective,
the second condition including at least one of the following:
network congestion starts; and
an actual network resource load reaches a resource load corresponding to the first data packet;
obtaining the index of the information about the first data packet;
obtaining priority information, the priority information indicating a priority corresponding to the information about the first data packet; and
obtaining second indication information, the second indication information being used to indicate at least one of the following: network congestion starts, it is requested to perform an operation of transmitting no data packet, it is requested to perform the first operation, it is requested to abandon transmission of or allow not to transmit all data packets, it is requested to abandon transmission of or allow not to transmit the first data packet, it is requested to abandon transmission of or allow not to transmit a second data packet, and it is allowed not to transmit data packets other than the third data packet and/or a fourth data packet.

In an implementation, performing the first operation based on the information about the first data packet includes: transmitting no target data packet conforming to the information about the first data packet. It is not difficult to understand that in this case, the information about the first data packet reflects the range of the first target data packet.

Optionally, stopping performing the first operation and/or performing the second operation includes: in a case that a third condition is met, stopping performing the first operation and/or performing the second operation,
the third condition including at least one of the following:
network congestion ends;
an actual network resource load does not reach a resource load corresponding to the first data packet or drops below the resource load corresponding to the first data packet;
the first auxiliary information and/or the second auxiliary information is not obtained;
previously obtained first auxiliary information and/or second auxiliary information is deleted or canceled;
third auxiliary information is obtained;
a current time is not within a time period during which no data is transmitted,
where
the third auxiliary information includes at least one of the following:
   third indication information, the third indication information being used to indicate at least one of the following: network congestion ends, an operation of transmitting no data packet is stopped, a first operation is stopped, it is requested to perform a second operation, and data transmission is resumed; and
   a network resource load or a load value index corresponding to the network resource load.

In an implementation, stopping performing the first operation includes stopping performing the first operation based on the information about the first data packet.

Optionally, the first communication device performing a target operation further includes at least one of the following:
the first communication device further obtains effective time of the second auxiliary information in a case of obtaining the second auxiliary information; and
the first communication device deletes the second auxiliary information in a case that the effective time of the second auxiliary information is overtime.

In an implementation, in a case that the second auxiliary information is deleted, the first operation may be stopped and/or the second operation may be performed.

Optionally, in a case that the target layer is the PDCP layer, the first operation further includes the following:
the PDCP layer of the first communication device determines deletion of the target data packet in the cache area; and
the PDCP layer of the first communication device determines a request made to a radio link control (RLC) layer to delete a target data packet of the RLC layer that has not been sent.

In an implementation, the first communication device includes, but is not limited to, a user equipment (such as a UE), and in a case that a target layer of the UE is a PDCP layer, the first operation further includes: determining whether to delete a first data packet in a cache area and whether to request an RLC layer to delete a first data packet at the RLC layer that has not been sent.

Optionally, in a case that the target layer is not the PDCP layer, the first communication device performing the first operation further includes the following:
the PDCP layer of the first communication device identifies a target data packet in a cache area;
the PDCP layer of the first communication device determines deletion of the target data packet in the cache area; and
the PDCP layer of the first communication device determines a request made to an RLC layer to delete a target data packet of the RLC layer that has not been sent.

In an implementation, in a case that a target layer of the first communication device (such as a UE) is not a PDCP layer, the first operation further includes an enhanced function of the PDCP layer: identifying a target data packet at the PDCP layer in the cache area, determining whether to delete a first data packet in the cache area and whether to request an RLC layer to delete a first data packet at the RLC layer that has not been sent.

Optionally, the PDCP layer of the first communication device identifying a target data packet in a cache area includes that the PDCP layer of the first communication device determines the target data packet in the cache area based on a mapping relationship between a sequence number (SN) of PDCP in the cache area and an importance level.

In an implementation, when the target layer of the first communication device (such as a UE) is not the PDCP layer, in the enhanced function of the PDCP layer, the PDCP may determine a target data packet at the PDCP layer in the cache area based on a mapping relationship between an SN of the PDCP in the cache area and the importance level.

Optionally, the range of the first target data packet is reflected by information indication of the first target data packet; and information about the first target data packet includes at least one of the following: an importance level range of the first target data packet, data flow description information about the first target data packet, data set description information about the first target data packet, tunnel information corresponding to the first target data packet, a direction of the first target data packet, a source interface of the first target data packet, a resource load corresponding to the first target data packet, and a priority corresponding to the first target data packet.

In an implementation, an importance level range of the first target data packet is reflected by a first importance level. The first importance level is used to indicate at least one of the following: a range of the first target data packet is packets whose importance levels are lower than or equal to the first importance, and the importance level range is all importance levels lower than or equal to the first importance.

In another implementation, an importance level range of the first target data packet is reflected by one or more importance levels,
and/or
the information about the first data packet includes at least one of the following: an importance level range of the first data packet, data flow description information about the first data packet, data set description information about the first data packet, tunnel information corresponding to the first data packet, a direction of the first data packet, a source interface of the first data packet, a resource load corresponding to the first data packet, and a priority corresponding to the first data packet.

In an implementation, an importance level range of the first data packet is reflected by a second importance level. The second importance level is used to indicate at least one of the following: a range of the first data packet is packets whose importance levels are lower than or equal to the second importance, and the importance level range is all importance levels lower than or equal to the second importance.

In another implementation, the importance level range of the first data packet is reflected by one or more importance levels.

The information about the third data packet includes at least one of the following: an importance level range of the third data packet, data flow description information about the third data packet, data set description information about the third data packet, tunnel information corresponding to the third data packet, a direction of the third data packet, a source interface of the third data packet, a resource load corresponding to the third data packet, and a priority corresponding to the third data packet.

In an implementation, an importance level range of the third data packet is reflected by a third importance level. The third importance level is used to indicate at least one of the following: a range of the third data packet is packets whose importance levels are higher than or equal to the third importance, and the importance level range is all importance levels higher than or equal to the third importance.

In another implementation, the importance level range of the third data packet is reflected by one or more importance levels.

In an implementation, when the information about the first data packet only includes information about a tunnel corresponding to the first data packet, it may indicate that transmission of all data packets (such as cached uplink data packets) of the tunnel is to be abandoned.

In an implementation, when the information about the first data packet only includes an importance level range of the first target data packet, it may indicate that transmission of all data packets (such as cached uplink data packets) with the importance level is to be abandoned.

In an implementation, the auxiliary information is sent through tunnel granularity signaling or cell, which means that the auxiliary information is only applied to the tunnel. For example, first data is first data in the tunnel, which implicitly limits the range of the first data as being in the tunnel. For example, if first indication indicates no transmission of all data, it means no transmission of all data in the tunnel. For example, in combination with the importance level X in the information about the first data packet, it can be reflected that the first data packet is a data packet with the importance level X in the tunnel.

The tunnel includes, but is not limited to, a QoS flow, a radio bearer, and a PDU session.

In an implementation, when the information about the first data packet only includes an importance level range of the first data packet, transmission of all the data packets with the importance level is to be abandoned.

In an implementation, when the information about the first data packet includes the importance level of the first data packet and information about the tunnel mapped by the first data packet, it may be determined that transmission of all data packets with this importance level in the tunnel mapped by the first data packet is to be abandoned.

In an implementation, when the information about the first data packet includes the importance level of the first data packet and data flow description information about the first data packet, it may be determined that transmission of data packets with this importance level in the data flow corresponding to the data flow description information about the first data packet is to be abandoned.

Optionally, the resource load corresponding to the first target data packet is used to indicate, in a case that the actual resource load reaches the resource load corresponding to the first target data packet, that the information about the first target data packet takes effect, or that the first operation is performed based on the information about the first target data packet;
and/or
the resource load corresponding to the first data packet is used to indicate, in a case that the actual resource load reaches the resource load corresponding to the first data packet, that the information about the first data packet takes effect, or that the first operation is performed based on the information about the first data packet;
   and/or
the resource load corresponding to the third data packet is used to indicate, in a case that the actual resource load reaches the resource load corresponding to the third data packet, that the information about the third data packet takes effect, or that a data transmission guarantee operation is performed based on the information about the third data packet;
   and/or
a target priority corresponding to the first target data packet is a priority of abandoning transmission, which is used to indicate that the first operation is performed based on the information about the first target data packet with different priorities in an order of priorities;
   and/or
the priority corresponding to the first data packet is a priority of abandoning transmission, which is used to indicate that the first operation is performed based on the information about the first data packets with different priorities in an order of priorities;
   and/or
the priority corresponding to the third data packet is a priority of guaranteeing transmission, which is used to indicate that the data transmission guarantee operation is performed based on the information about the third data packet with different priorities in an order of priorities;
   and/or
an index of the information about the first target data packet is used to index the information about the first target data packet;
   and/or
the index of the information about the first data packet is used to index the information about the first data packet;
   and/or
the index of the information about the third data packet is used to index the information about the third data packet. In the embodiment of the present invention, a target operation may be performed before a data transmission request is sent, so that data packets with low importance levels may be discarded before data scheduling in the case of network congestion, thereby effectively relieving congestion, guaranteeing important data, and saving resources.

FIG. 6 is a second schematic flowchart of a data packet processing method according to an embodiment of this application. Referring to FIG. 6, the embodiment of this application provides the data packet processing method, which is applied to a second communication device. The second communication device includes, but is not limited to, a RAN network element or a CN network element (for example, but not limited to an AMF, an SMF, a PCF, and a UPF). The method includes the following steps.

Step 600: The second communication device performs a third operation,
the third operation including at least one of the following:
sending one of the following: first auxiliary information, second auxiliary information, and third auxiliary information;
requesting to delete or cancel the first auxiliary information;
requesting to delete or cancel the second auxiliary information; and
sending configuration information for transmitting no data packet.

In an implementation, the second communication device may trigger, in a case that a fourth condition is met, the first communication device to perform a first operation on a target data packet based on an importance level of the data packet, and the first operation is used to abandon transmission of the packet, that is, to transmit no target data packet. For example, a target data packet with a lower importance level may be discarded in a case that QoS cannot be guaranteed, thereby reducing congestion.

In an implementation, the second communication device may trigger, in a case that a fifth condition is met, the first communication device to perform a second operation on the target data packet based on the importance level of the data packet, and the second operation is used to transmit the packet.

In the embodiment of the present invention, a third operation may be performed before data scheduling, so that data packets with low importance levels may be discarded before the data scheduling in the case of network congestion, thereby effectively relieving congestion, guaranteeing important data, and saving resources.

Optionally, sending the first auxiliary information or the second auxiliary information includes: transmit the first auxiliary information or the second auxiliary information in a case that a fourth condition is met, where
the fourth condition includes at least one of the following:
network congestion occurs;
a network resource load reaches a resource load corresponding to the first data packet;
a network cannot allocate resources for transmission of the first data packet;
the network cannot meet requirements for transmission of all data of a first object; and
the network cannot meet a QoS requirement for the first object, where the first object includes at least one of the following: a terminal, a QoS flow, a radio bearer, a data flow, a data set, and a tunnel.

In an implementation, the first data packet is data in a first object.

Optionally, requesting to delete or cancel the first auxiliary information, requesting to delete or cancel the first auxiliary information, and/or sending the third auxiliary information includes: in a case that a fifth condition is met, requesting to delete or cancel the first auxiliary information, requesting to delete or cancel the first auxiliary information, and/or sending the third auxiliary information, where
the fifth condition includes at least one of the following:
network congestion ends;
an actual network resource load does not reach a resource load corresponding to the first data packet or drops below the resource load corresponding to the first data packet;
the network recovers to meet requirements for transmission of all data of a first object;
the network recovers to allocate resources for transmission of the first data packet;
the network recovers to meet requirements for transmission of all data of a first object; and the network recovers to meet a QoS requirement for the first object, where
the first object includes at least one of the following: a terminal, a QoS flow, a radio bearer, a data flow, a data set, and a tunnel.

In an implementation, the first data packet is data in a first object.

In an implementation, the second communication device (such as a RAN network element) may delete or cancel the auxiliary information by the RAN in a case that a fifth condition is met, where meeting the fifth condition includes at least one of the following:
network congestion ends;
the second communication device recovers to meet requirements for transmission of all data of a first QoS flow;
the second communication device recovers to meet requirements for transmission of all data of a first DRB;
the second communication device recovers to meet requirements for transmission of all data of a first service; and
the network resource load of the second communication device drops from a first level or above to the first level or below.

Optionally, the network congestion includes at least one of the following:
congestion of the second communication device;
congestion of a transport layer; and
congestion of a user plane network element; and
the network includes at least one of the following: the second communication device, the transport layer, and the user plane network element.

Optionally, the first auxiliary information includes at least one of the following:
the first auxiliary information includes at least one of the following:
first indication information, the first indication information being used to indicate at least one of the following: network congestion starts, it is requested to perform an operation of transmitting no data packet, it is requested to perform a first operation, it is requested to abandon transmission of or allow not to transmit all data packets, it is requested to abandon transmission of or allow not to transmit the first data packet, it is requested to abandon transmission of or allow not to transmit a second data packet, and it is allowed not to transmit data packets other than a third data packet and/or a fourth data packet;
information about the first data packet, the information about the first data packet being used to indicate a range of the first data packet;
information about the third data packet, the information about the third data packet being used to indicate a range of the first data packet;
a time period during which no data is transmitted; and
a network resource load or a load value index corresponding to the network resource load,
where
the second data packet is a data packet that depends on the first data packet.

Optionally, the second auxiliary information includes at least one of the following:
the second auxiliary information includes at least one of the following:
second indication information, the second indication information being used to indicate at least one of the following: network congestion starts, it is requested to perform an operation of transmitting no data packet, it is requested to perform a first operation, it is requested to abandon transmission of or allow not to transmit all data packets, it is requested to abandon transmission of or allow not to transmit the first data packet, it is requested to abandon transmission of or allow not to transmit a second data packet, and it is allowed not to transmit data packets other than a third data packet and/or a fourth data packet;
an index of the information about the first data packet;
an index of the information about the third data packet,
a time period during which no data is transmitted; and
a network resource load or a load value index corresponding to the network resource load,
where
the second data packet is a data packet that depends on the first data packet.

Optionally, the third auxiliary information includes at least one of the following:
third indication information, the third indication information being used to indicate at least one of the following: network congestion ends, an operation of transmitting no data packet is stopped, a first operation is stopped, it is requested to perform a second operation, and data transmission is resumed; and
a network resource load or a load value index corresponding to the network resource load.

Optionally, the configuration information for transmitting no data packet includes at least one of the following:
one or more items of related information about the first data packet; and
one or more items of related information about the third data packet;
first indication information, the first indication information being used to indicate at least one of the following: it is requested to abandon transmission of or allow not to transmit all data packets, it is requested to abandon transmission of or allow not to transmit the first data packet, it is requested to abandon transmission of or allow not to transmit the second data packet, and it is allowed not to transmit data packets other than the third data packet and/or the fourth data packet,
where
the related information about the first data packet includes at least one of the following: information about the first data packet, an index of the information about the first data packet, an effective condition of the related information about the first data packet, and an invalid condition of the related information about the first data packet;
the related information about the third data packet includes at least one of the following: information about the third data packet, and an index of the information about the third data packet,
where
the information about the first data packet is used to indicate a range of the first data packet;
the information about the third data packet is used to indicate a range of the third data packet; and
the second data packet is a data packet that depends on the first data packet.

In an implementation, the second communication device (such as a RAN network element) may delete or withdraw the auxiliary information in a case that the second condition is met.

Optionally, the method further includes the following: the second communication device obtains at least one of the following: the first auxiliary information, the second auxiliary information, and the configuration information for transmitting no data packet.

In an implementation, the second communication device (such as a RAN network element) may determine at least suitable one of the first auxiliary information, the second auxiliary information, or the configuration information for transmitting no data packet before sending at least one of the first auxiliary information, the second auxiliary information, or the configuration information for transmitting no data packet.

Optionally, the second communication device obtaining at least one of the following: the first auxiliary information, the second auxiliary information, and the configuration information for transmitting no data packet includes the following:
the second communication device receives a data cache report for distinguishing between importance; and
the second communication device determines, based on the data cache report, at least one of the following: the first auxiliary information, the second auxiliary information, and the configuration information for transmitting no data packet.

Optionally, the second communication device obtaining at least one of the following: the first auxiliary information, the second auxiliary information, and the configuration information for transmitting no data packet includes the following:
the second communication device receives at least one of the following sent by a core network element: the first auxiliary information, the second auxiliary information, and the configuration information for transmitting no data packet.

In an implementation, the second communication device (such as a RAN network element) requests the UE to transmit no data packet in order to alleviate a congestion level or reduce a resource usage amount. Based on a BSR that distinguishes importance levels, the RAN can better determine which data packets with specific importance levels are to be discarded to achieve the purpose. Therefore, the auxiliary information can be determined based on the BSR.

In the embodiment of the present invention, a third operation may be performed before data scheduling, so that data packets with low importance levels may be discarded before the data scheduling in the case of network congestion, thereby effectively relieving congestion, guaranteeing important data, and saving resources.

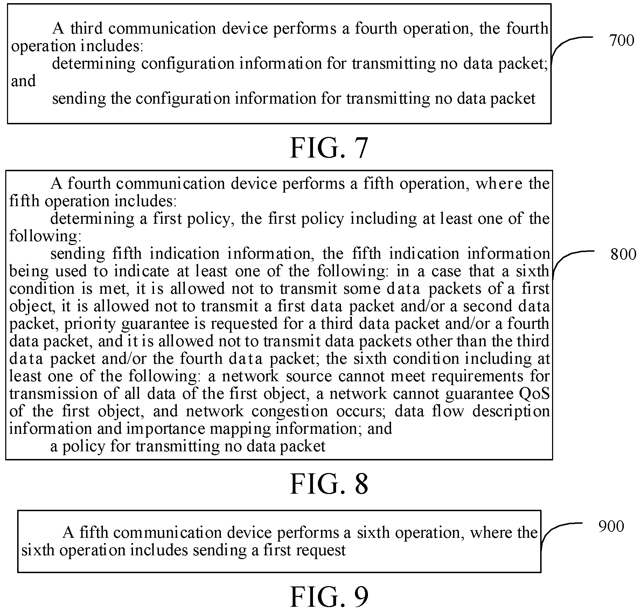

FIG. 7 is a third schematic flowchart of a data packet processing method according to an embodiment of this application. Referring to FIG. 7, the embodiment of the present invention provides the data packet processing method, which is applied to a third communication device. The third communication device includes, but is not limited to, a) a CN network element (for example, but not limited to an SMF). The method includes the following step.

Step 700: The third communication device performs a fourth operation, the fourth operation including:
determining configuration information for transmitting no data packet; and
sending the configuration information for transmitting no data packet.

The configuration information for transmitting no data packet is as described in the embodiment of FIG. 4, and is not described in detail herein.

In an implementation, the fourth communication device (such as a PCF) may determine configuration information for transmitting no data packet and send the configuration information for transmitting no data packet.

In the embodiment of the present invention, a fourth operation may be performed before data scheduling, so that data packets with low importance levels may be discarded before the data scheduling in the case of network congestion, thereby effectively relieving congestion, guaranteeing important data, and saving resources.

Optionally, the sending the configuration information for transmitting no data packet includes:
allowing the configuration information for transmitting no data packet to be included in tunnel granularity signaling to be sent.

In an implementation, the third communication device (such as an SMF network element) may allow the configuration information for transmitting no data packet to be included in tunnel granularity signaling to be sent.

Optionally, the third communication device performing a fourth operation further includes at least one of the following:
obtaining a first policy; and
the third communication device performing the fourth operation based on the first policy.

The first policy is as described in the embodiment of FIG. 8, and is not described in detail herein.

In the embodiment of the present invention, a fourth operation may be performed before data scheduling, so that data packets with low importance levels may be discarded before the data scheduling in the case of network congestion, thereby effectively relieving congestion, guaranteeing important data, and saving resources.

FIG. 8 is a fourth schematic flowchart of a data packet processing method according to an embodiment of this application. Referring to FIG. 8, the embodiment of the present invention provides the data packet processing method, which is applied to a fourth communication device. The fourth communication device includes, but is not limited to, a) a CN network element (for example, but not limited to a PCF). The method includes the following step.

Step 800: The fourth communication device performs a fifth operation, the fifth operation including:
determining a first policy, the first policy including at least one of the following:
sending fifth indication information, the fifth indication information being used to indicate at least one of the following: in a case that a sixth condition is met, it is allowed not to transmit some data packets of a first object, it is allowed not to transmit a first data packet and/or a second data packet, priority guarantee is requested for a third data packet and/or a fourth data packet, and it is allowed not to transmit data packets other than the third data packet and/or the fourth data packet, the sixth condition including at least one of the following: a network source cannot meet requirements for transmission of all data of the first object, a network cannot guarantee QoS of the first object, and network congestion occurs; data flow description information and importance mapping information; and
a policy for transmitting no data packet, where
the policy for transmitting no data packet includes at least one of the following:
   one or more items of related information about the first data packet; and
   one or more items of related information about the third data packet;
   seventh indication information, the seventh indication information being used to indicate at least one of the following: it is requested to abandon transmission of or allow not to transmit all data packets, it is requested to abandon transmission of or allow not to transmit the first data packet, it is requested to abandon transmission of or allow not to transmit the second data packet, and it is allowed not to transmit data packets other than the third data packet and/or the fourth data packet,
   where
   the related information about the first data packet includes at least one of the following: information about the first data packet, an index of the information about the first data packet, an effective condition of the related information about the first data packet, and an invalid condition of the related information about the first data packet;
   the related information about the third data packet includes at least one of the following: information about the third data packet, and an index of the information about the third data packet,
   where
   the information about the first data packet is used to indicate a range of the first data packet;
   the information about the third data packet is used to indicate a range of the third data packet; and
   the second data packet is a data packet that depends on the first data packet,
   where
   the first object includes at least one of the following: a terminal, a QoS flow, a radio bearer, a data flow, a data set, and a tunnel; and
   sending the first policy.

In an implementation, the fourth communication device (such as a PCF) may determine a first policy, and the first policy is used to determine to discard a target data packet when QoS cannot be guaranteed.

In the embodiment of the present invention, a fifth operation may be performed before data scheduling, so that data packets with low importance levels may be discarded before the data scheduling in the case of network congestion, thereby effectively relieving congestion, guaranteeing important data, and saving resources.

Optionally, the fourth communication device performing a fifth operation includes the following:
the fourth communication device obtains fourth information, the fourth information including at least one of the following: a network resource load and first request information.

The fourth communication device performs the fifth operation based on the fourth information, where
the network resource load includes at least one of the following: a resource load of a RAN, a resource load of a transport layer, and a resource load of a user plane network element.

In an implementation, the fourth communication device (PCF) may obtain at least one of the following from a RAN, an AMF, and an SMF: a resource load of the RAN and a resource load of a transport layer connected by the RAN;
the fourth communication device (PCF) may obtain at least one of the following from a UPF and an SMF: a resource load of a user plane network element and a resource load of a transport layer connected by the user plane network element (such as the UPF); and
the resource load of the transport layer includes at least one of the following: the resource load of the transport layer connected by the RAN and the resource load of the transport layer connected by the user plane network element (such as the UPF).

In an implementation, the fourth communication device (such as a PCF) may receive a first request (policy authorization creation or modification request) sent by the fifth communication device (such as an NEF/AF) before determining the first policy, and send a first request response based on the first request to determine that secondary data packets may be discarded in a case that QoS cannot be guaranteed; and determine the first policy based on this.

In the embodiment of the present invention, a fifth operation may be performed before data scheduling, so that data packets with low importance levels may be discarded before the data scheduling in the case of network congestion, thereby effectively relieving congestion, guaranteeing important data, and saving resources.

FIG. 9 is a fifth schematic flowchart of a data packet processing method according to an embodiment of this application. Referring to FIG. 9, the embodiment of the present invention provides the data packet processing method, which is applied to a fifth communication device. The fifth communication device includes, but is not limited to, a terminal or a CN network element (for example, but not limited to an AF and an NEF). The method includes the following step.

Step 900: The fifth communication device performs a sixth operation, the sixth operation including sending a first request,
the first request including at least one of the following: data flow description information, information about a terminal, sixth indication information, one or more items of related information about a first data packet, one or more items of related information about a third data packet, and data flow description information and importance mapping information, where
the sixth indication information is used to indicate at least one of the following: in a case that a seventh condition is met, it is allowed not to transmit some data packets of a second object, it is allowed not to transmit the first data packet and/or a second data packet, priority guarantee is requested for the third data packet and/or a fourth data packet, and it is allowed not to transmit data packets other than the third data packet and/or the fourth data packet,
the seventh condition including at least one of the following: a network source cannot meet requirements for transmission of all data of the second object, a network cannot guarantee QoS of the second object, and network congestion occurs,
where
the related information about the first data packet includes at least one of the following: information about the first data packet, an index of the information about the first data packet, an effective condition of the related information about the first data packet, and an invalid condition of the related information about the first data packet;
the related information about the third data packet includes at least one of the following: information about the third data packet, and an index of the information about the third data packet,
where
the information about the first data packet is used to indicate a range of the first data packet;
the information about the third data packet is used to indicate a range of the third data packet; and
the second data packet is a data packet that depends on the first data packet,
where
the second object includes at least one of the following: a terminal, a data flow, and a data set.

In the embodiment of the present invention, a sixth operation may be performed before data scheduling, so that data packets with low importance levels may be discarded before the data scheduling in the case of network congestion, thereby effectively relieving congestion, guaranteeing important data, and saving resources.

Optionally, the effective condition of the related information about the first data packet includes at least one of the following: congestion starts, an actual resource load reaches a resource load corresponding to the first data packet, a network source cannot meet requirements for transmission of all data of the second object, and a network cannot guarantee QoS of the second object;
and/or
the effective condition of the related information about the third data packet includes at least one of the following: congestion starts, an actual resource load reaches a resource load corresponding to the third data packet, a network source cannot meet requirements for transmission of all data of the second object, and a network cannot guarantee QoS of the second object;
   and/or
the invalid condition of the related information about the first data packet includes at least one of the following: congestion ends, an actual resource load does not reach a resource load corresponding to the first data packet, a network source can meet requirements for transmission of all data of the second object, and a network can guarantee QoS of the second object;
   and/or
the invalid condition of the related information about the third data packet includes at least one of the following: congestion ends, an actual resource load does not reach a resource load corresponding to the third data packet, a network source can meet requirements for transmission of all data of the second object, and a network can guarantee QoS of the second object.

The effective condition of the related information about the first data packet includes at least one of the following: congestion starts, an actual resource load reaches a resource load corresponding to the first data packet, a network source cannot meet requirements for transmission of all data of a first object, and a network cannot guarantee QoS of the second object;
and/or
the effective condition of the related information about the third data packet includes at least one of the following: congestion starts, an actual resource load reaches a resource load corresponding to the third data packet, a network source cannot meet requirements for transmission of all data of the first object, and a network cannot guarantee QoS of the second object;
   and/or
the invalid condition of the related information about the first data packet includes at least one of the following: congestion ends, an actual resource load does not reach a resource load corresponding to the first data packet, a network source can meet requirements for transmission of all data of the first object, and a network can guarantee QoS of the second object;
   and/or
the invalid condition of the related information about the third data packet includes at least one of the following: congestion ends, an actual resource load does not reach a resource load corresponding to the third data packet, a network source can meet requirements for transmission of all data of the first object, and a network can guarantee QoS of the second object.

The second object may be configured to map the first object.

In an implementation, the first data packet is at least one of the following: a data packet specified by information about the first data packet, a data packet whose transmission needs to be abandoned, and a data packet whose transmission is allowed to be abandoned.

In an implementation, the third data packet is a data packet whose transmission needs priority guarantee.

In an implementation, when data packets with different levels are mapped to the same QOS flow or radio bearer, the second object is the first object.

In the embodiment of the present invention, a sixth operation may be performed before data scheduling, so that data packets with low importance levels may be discarded before the data scheduling in the case of network congestion, thereby effectively relieving congestion, guaranteeing important data, and saving resources.

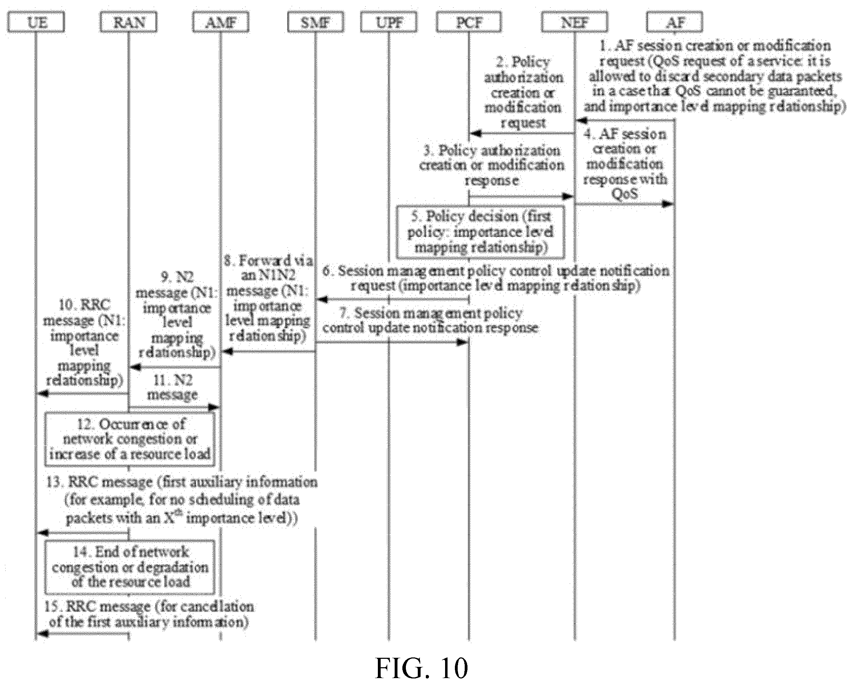

FIG. 10 is a sixth schematic flowchart of a data packet processing method according to an embodiment of this application. Referring to FIG. 10, taking an example with a second communication device as a RAN, a first communication device as a UE, a third communication device as an SMF, a fourth communication device as a PCF, and a fifth communication device as an AF, when resources of the RAN are congested, the RAN may directly determine no scheduling of secondary uplink data packet of the UE or instruct the UE to discard the secondary uplink data packet.

As shown in FIG. 10, the method includes the following steps.

Step (1): The AF sends a first request, and the first request may be a session creation or modification request, may include at least one of the following: data flow description information, information about a terminal, sixth indication information, one or more items of related information about a first data packet, one or more items of related information about a third data packet, and data flow description information and importance mapping information, and is used to request permission to discard secondary data packets in a case that QoS cannot be guaranteed.

Step (2): The NEF sends a policy authorization creation or modification request to the PCF.

Step (3): The PCF sends a policy authorization creation or modification response to the NEF.

Step (4): The NEF sends an AF session creation or modification response with QoS to the AF.

Step (5): The PCF determining a first policy (that is, a policy decision), the first policy including at least one of the following:
sending fifth indication information, the fifth indication information being used to indicate at least one of the following: in a case that a sixth condition is met, it is allowed not to transmit some data packets of a first object, it is allowed not to transmit a first data packet and/or a second data packet, priority guarantee is requested for a third data packet and/or a fourth data packet, and it is allowed not to transmit data packets other than the third data packet and/or the fourth data packet, the sixth condition including at least one of the following: a network source cannot meet requirements for transmission of all data of the first object, a network cannot guarantee QoS of the first object, and network congestion occurs; data flow description information and importance mapping information; and
a policy for transmitting no data packet, where
the policy for transmitting no data packet includes at least one of the following:
   one or more items of related information about the first data packet; and
   one or more items of related information about the third data packet.

Step (6): The PCF sends the first policy to the SMF (for example, the PCF sends a session management policy update notification request to the SMF).

Step (7): The SMF sends a first policy session management policy update notification response to the PCF.

Step (8): The SMF sends (for example, forwards via an N1N2 message), to the AMF, configuration information for transmitting no data packet.

Step (9): The AMF sends (for example, forwards via an N2 message), to the RAN, the configuration information for transmitting no data packet.

Step (10): The RAN sends an RRC message to the UE.

Step (11): The RAN sends an N2 message to the AMF.

Step (12): The RAN determines that a fourth condition is met, such as occurrence (start) of network congestion or an increase of a resource load.

Step (13): The RAN sends first auxiliary information, and description information and importance mapping information about a data flow. The UE may perform a target operation based on the first auxiliary information, description information (such as a P-frame) of a data flow corresponding to a target data packet, and description information and importance mapping information about the data flow.

Step (14): The RAN determines that a fifth condition is met, such as the end of network congestion or degradation of the resource load.

Step (15): The RAN cancels the first auxiliary information. The UE stops a first operation and/or performs a second operation.

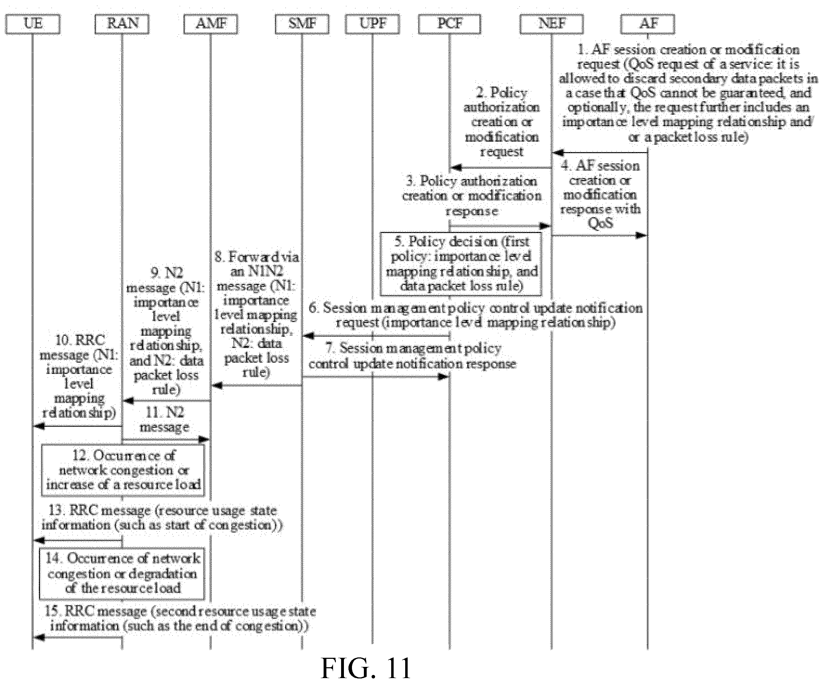

FIG. 11 is a seventh schematic flowchart of a data packet processing method according to an embodiment of this application. Referring to FIG. 11, taking an example with a second communication device as a RAN, a first communication device as a UE, a third communication device as an SMF, a fourth communication device as a PCF, and a fifth communication device as an AF, when resources of the RAN are congested, the RAN may directly determine no scheduling of secondary uplink data packet of the UE or instruct the UE to discard the secondary uplink data packet.

As shown in FIG. 11, the method includes the following steps.

Step (1): The AF sends a first request, and the first request may be a session creation or modification request, may include at least one of the following: data flow description information, information about a terminal, sixth indication information, one or more items of related information about a first data packet, one or more items of related information about a third data packet, and data flow description information and importance mapping information, and is used to request permission to discard secondary data packets in a case that QoS cannot be guaranteed.

Step (2): The NEF sends a policy authorization creation or modification request to the PCF.

Step (3): The PCF sends a policy authorization creation or modification response to the NEF.

Step (4): The NEF sends an AF session creation or modification response with QoS to the AF.

Step (5): The PCF determining a first policy (that is, a policy decision), the first policy including at least one of the following:
sending fifth indication information, the fifth indication information being used to indicate at least one of the following: in a case that a sixth condition is met, it is allowed not to transmit some data packets of a first object, it is allowed not to transmit a first data packet and/or a second data packet, priority guarantee is requested for a third data packet and/or a fourth data packet, and it is allowed not to transmit data packets other than the third data packet and/or the fourth data packet, the sixth condition including at least one of the following: a network source cannot meet requirements for transmission of all data of the first object, a network cannot guarantee QoS of the first object, and network congestion occurs; data flow description information and importance mapping information; and
a policy for transmitting no data packet, where
the policy for transmitting no data packet includes at least one of the following:
   one or more items of related information about the first data packet; and
   one or more items of related information about the third data packet.

Step (6): The PCF sends the first policy to the SMF (for example, the PCF sends a session management policy update notification request to the SMF).

Step (7): The SMF sends a first policy session management policy update notification response to the PCF.

Step (8): The SMF sends (for example, forwards via an N1N2 message), to the AMF, configuration information for transmitting no data packet.

Step (9): The AMF sends (for example, forwards via an N2 message), to the RAN, configuration information for transmitting no data packet in step (8).

Step (10): The RAN sends an RRC message to the UE.

Step (11): The RAN sends an N2 message to the AMF.

Step (12): The RAN determines that a fourth condition is met, such as occurrence (start) of network congestion or an increase of a resource load.

Step (13): The RAN sends second auxiliary information and the configuration information for transmitting no data packet. The UE may perform a target operation based on the second auxiliary information and the configuration information for transmitting no data packet.

Step (14): The RAN determines that a fifth condition is met, such as the end of network congestion or degradation of the resource load.

Step (15): The RAN sends third indication information, the third indication information being used to indicate at least one of the following: network congestion ends, an operation of transmitting no data packet is stopped, a first operation is stopped, it is requested to perform a second operation, and data transmission is resumed, and the UE stops a first operation and/or performs a second operation.

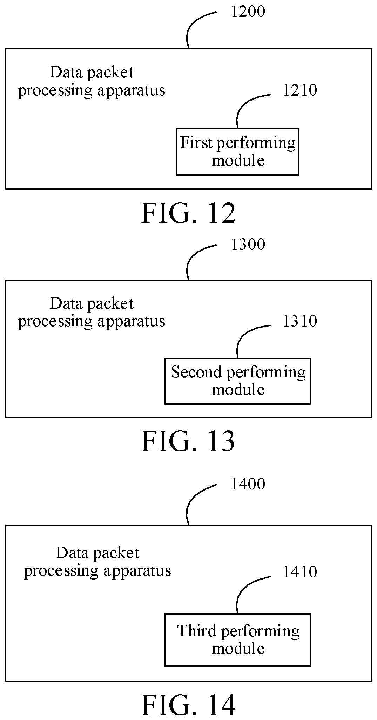

FIG. 12 is a first schematic diagram of a structure of a data packet processing apparatus according to an embodiment of this application. As shown in FIG. 12, the embodiment of the present invention provides the data packet processing apparatus, including:
a first performing module 1210, configured to perform a target operation, the target operation including at least one of the following:
determining an importance level of a target data packet, data flow description information corresponding to a data packet, and/or a tunnel mapped by the data packet;
determining, based on the importance level of the target data packet, a buffer status report for distinguishing between importance levels, where data packets with different importance levels correspond to buffer status reports with different importance levels;
sending the buffer status report for distinguishing between importance levels;
determining a range of a first target data packet; and
stopping a first operation and/or performing a second operation, or performing the first operation.

The data packet processing apparatus in the embodiment of this application may be an electronic device, such as an electronic device with an operating system, or a component in the electronic device, such as an integrated circuit or a chip. The electronic device may be a terminal or another device except the terminal. For example, the terminal may include, but is not limited to, the types of the terminal 11 listed above, and the another device may be a server, a network attached storage (Network Attached Storage, NAS), and the like, which is not specifically limited in the embodiment of this application.

Optionally, the target data packet is at least one of the following: a received data packet (such as a received uplink data packet, or a received data packet to be sent), and a data packet in a buffer.

Optionally, in the first communication device, a target layer for performing the target operation includes at least one of the following: a PDCP layer, an SDAP layer, and an Xth layer, where
the Xth layer is located at at least one of the following: a NAS layer or an AS layer; and
the Xth layer is a layer above the SDAP layer.

Optionally, the first target data packet is at least one of the following: a data packet with a low importance level, a data packet whose transmission needs to be abandoned, a data packet whose transmission is allowed to be abandoned, a data packet whose transmission needs no priority guarantee, and a data packet on which no data packet whose transmission needs priority guarantee depends.

Optionally, the first performing module 1210 is configured for at least one of the following:
applying, based on a descending order of priorities, information about first data packets with different priorities in sequence to determine the range of the first target data packet; and
determining the range of the first target data packet by using importance levels in an ascending order of the importance levels,
the first target data packet including at least one of the following: the first data packet, a second data packet, and a data packet with a lowest importance level;
the range of first target data packet includes at least one of the following: a range of the first data packet, a range of the second data packet, and a range of the data packet with a lowest importance level;
the first target data packet does not include at least one of the following: a third data packet and a fourth data packet;
the range of first target data packet does not include at least one of the following: a range of the third data packet and a range of the fourth data packet,
where
a second target data packet is a data packet that depends on the first target data packet;
the third data packet is a data packet whose transmission needs priority guarantee; and
the fourth data packet is a data packet on which the third data packet depends.

Optionally, the first operation includes at least one of the following:
determining whether the target data packet is in the range of the first target data packet;
determining whether the target data packet is the second target data packet; and
performing at least one of the following on the target data packet that is in the range of the first target data packet and/or the second target data packet: skipping transmitting the target data packet, the buffer status report including no cache amount of the target data packet, and deleting the target data packet in the buffer;
skipping transmitting the first target data packet;
skipping transmitting the second target data packet in a case that transmission of the first target data packet is skipped;
the buffer status report including no cache amount of the first target data packet and/or the second target data packet, and
deleting the first target data packet and/or the second target data packet in the buffer;
requesting a RAN network element to transmit other data packets;
a target layer of the first communication device transparently transmitting other data packets to a next layer of the target layer;
the target layer of the first communication device adding importance level information about other data packets to the data packets and then sending the packets to the next layer;
skipping transmitting all data packets;
applying, based on the descending order of priorities, the information about the first data packets with different priorities in sequence to skip transmitting the target data packet conforming to the information about the first data packet; and
skipping transmitting the target data packet in sequence in the ascending order of the importance levels.

Optionally, the first performing module 1210 is configured for at least one of the following:
determining that the target data packet is in the range of the first target data packet in a case that the importance level of the target data packet matches an importance level range of the first target data packet;
determining that the target data packet is in the range of the first target data packet in a case that data flow description information about the target data packet matches data flow description information about the first data packet;
determining that the target data packet is in the range of the first target data packet in a case that tunnel information mapped by the target data packet matches tunnel information corresponding to the first data packet;
determining that the target data packet is in the range of the first target data packet in a case that a direction mapped by the target data packet matches a direction mapped by the first data packet; and
determining that the target data packet is in the range of the first target data packet in a case that a source interface mapped by the target data packet matches a source interface mapped by the first data packet.

Optionally, the second operation includes at least one of the following:
the target layer of the first communication device transparently transmits all the data packets to the next layer of the target layer;
the first communication device requests the RAN network element to transmit all the data packets; and
the target layer of the first communication device adds importance level information about data packets to the data packets and then sends the packets to the next layer.

Optionally, the first performing module 1210 is configured for the following:
the first communication device obtains first information, the first information including at least one of the following: information about the target data packet, data flow description information and importance mapping information, first auxiliary information, second auxiliary information, third auxiliary information, configuration information for transmitting no data packet, one or more items of related information about the first data packet, and one or more items of related information about the third data packet; and
the first communication device performs the target operation based on the first information.

Optionally, the first performing module 1210 is configured for one of the following:
obtaining importance and the like of the target data packet from header information about the target data packet; or
obtaining data flow description information about the target data packet, and data flow description information and importance mapping information; and determining the importance level of the target data packet based on the data flow description information about the target data packet, and the data flow description information and importance mapping information.

Optionally, the first performing module 1210 is configured for the following:
the first communication device obtains the first auxiliary information, and
the first communication device performs the target operation based on the first auxiliary information,
where
the first auxiliary information includes at least one of the following:
   first indication information, the first indication information being used to indicate at least one of the following: network congestion starts, it is requested to perform an operation of transmitting no data packet, it is requested to perform a first operation, it is requested to abandon transmission of or allow not to transmit all data packets, it is requested to abandon transmission of or allow not to transmit the first data packet, it is requested to abandon transmission of or allow not to transmit a second data packet, and it is allowed not to transmit data packets other than a third data packet and/or a fourth data packet;
   information about the first data packet, the information about the first data packet being used to indicate a range of the first data packet;
   information about the third data packet, the information about the third data packet being used to indicate a range of the first data packet;
   a time period during which no data is transmitted; and
   a network resource load or a load value index corresponding to the network resource load,
   where
   the second data packet is a data packet that depends on the first data packet.

Optionally, the first performing module 1210 is configured for the following:
in a case that a first condition is met, the first communication device stops performing the first operation and/or performs the second operation, where
the first condition includes at least one of the following:
   network congestion ends;
   an actual network resource load does not reach a resource load corresponding to the first data packet or drops below the resource load corresponding to the first data packet;
   the first auxiliary information and/or the second auxiliary information is not obtained;
   previously obtained first auxiliary information and/or second auxiliary information is deleted or canceled;
   the third auxiliary information is obtained; and
   a current time is not within a time period during which no data is transmitted,
   where
   the third auxiliary information includes at least one of the following:
      third indication information, the third indication information being used to indicate at least one of the following: network congestion ends, an operation of transmitting no data packet is stopped, a first operation is stopped, it is requested to perform a second operation, and data transmission is resumed, and
      a network resource load or a load value index corresponding to the network resource load.

Optionally, the first performing module 1210 is configured for at least one of the following:
the first communication device further obtains effective time of the first auxiliary information in a case of obtaining the first auxiliary information; and
the first communication device deletes the first auxiliary information in a case that the effective time of the first auxiliary information is overtime.

Optionally, the first performing module 1210 is configured for the following:
the first communication device obtains the configuration information for transmitting no data packet, the one or more items of related information about the first data packet, the one or more items of related information about the third data packet, and/or the second auxiliary information; and
performs the first operation based on the configuration information for transmitting no data packet, the one or more items of related information about the first data packet, the one or more items of related information about the third data packet, and/or the second auxiliary information, where
the configuration information for transmitting no data packet includes at least one of the following:
   one or more items of related information about the first data packet;
   one or more items of related information about the third data packet; and
   first indication information, the first indication information being used to indicate at least one of the following: network congestion starts, it is requested to perform an operation of transmitting no data packet, it is requested to perform a first operation, it is requested to abandon transmission of or allow not to transmit all data packets, it is requested to abandon transmission of or allow not to transmit the first data packet, it is requested to abandon transmission of or allow not to transmit a second data packet, and it is allowed not to transmit data packets other than a third data packet and/or a fourth data packet,
   where
   the related information about the first data packet includes at least one of the following: information about the first data packet, an index of the information about the first data packet, an effective condition of the related information about the first data packet, and an invalid condition of the related information about the first data packet;
   the related information about the third data packet in a descending order of priorities corresponding to the first data packet includes at least one of the following: information about the third data packet, and an index of the information about the third data packet,
   where
   the information about the first data packet is used to indicate a range of the first data packet;
   the information about the third data packet is used to indicate a range of the third data packet; and
   the second data packet is a data packet that depends on the first data packet,
   the second auxiliary information includes at least one of the following:
      second indication information, the second indication information being used to indicate at least one of the following: network congestion starts, it is requested to perform an operation of transmitting no data packet, it is requested to perform a first operation, it is requested to abandon transmission of or allow not to transmit all data packets, it is requested to abandon transmission of or allow not to transmit the first data packet, it is requested to abandon transmission of or allow not to transmit a second data packet, and it is allowed not to transmit data packets other than a third data packet and/or a fourth data packet;
      an index of the information about the first data packet;
      an index of the information about the third data packet,
      a time period during which no data is transmitted; and
      a network resource load or a load value index corresponding to the network resource load,
      where
      the second data packet is a data packet that depends on the first data packet.

Optionally, the effective condition of the related information about the first data packet includes at least one of the following: network congestion starts, and an actual network resource load reaches a resource load corresponding to the first data packet;
and/or
the invalid condition of the related information about the first data packet includes at least one of the following: network congestion ends, and an actual network resource load does not reach a resource load corresponding to the first data packet or drops below the resource load corresponding to the first data packet;
   and/or
the resource load corresponding to the first data packet is used to indicate, in a case that the actual network resource load reaches the resource load corresponding to the first data packet, that the information about the first data packet takes effect, or that the first operation is performed based on the information about the first data packet;
   and/or
a resource load corresponding to the third data packet is used to indicate, in a case that the actual network resource load reaches the resource load corresponding to the third data packet, that the information about the third data packet takes effect, or that a data transmission guarantee operation is performed based on the information about the third data packet;
   and/or
the priority corresponding to the first data packet is a priority of abandoning transmission, which is used to indicate that the first operation is performed based on the information about the first data packets with different priorities in a descending order of priorities;
   and/or
a priority corresponding to the third data packet is a priority of guaranteeing transmission, which is used to indicate that the data transmission guarantee operation is performed based on the information about the third data packet with different priorities in a descending order of priorities;
   and/or
the index of the information about the first data packet is used to index the information about the first data packet;
   and/or
the index of the information about the third data packet is used to index the information about the third data packet.

Optionally, the first performing module 1210 is configured for the following: in a case that a first condition is met, performing the first operation based on the information about the first data packet, or determining the information about the first data packet to be effective,
the second condition including at least one of the following:
network congestion starts; and
an actual network resource load reaches a resource load corresponding to the first data packet;
obtaining the index of the information about the first data packet;
obtaining priority information, the priority information indicating a priority corresponding to the information about the first data packet; and
obtaining second indication information, the second indication information being used to indicate at least one of the following: network congestion starts, it is requested to perform an operation of transmitting no data packet, it is requested to perform the first operation, it is requested to abandon transmission of or allow not to transmit all data packets, it is requested to abandon transmission of or allow not to transmit the first data packet, it is requested to abandon transmission of or allow not to transmit a second data packet, and it is allowed not to transmit data packets other than the third data packet and/or a fourth data packet.

Optionally, the first performing module 1210 is configured for the following: in a case that a third condition is met, stopping performing the first operation and/or performing the second operation,
the third condition including at least one of the following:
network congestion ends;
an actual network resource load does not reach a resource load corresponding to the first data packet or drops below the resource load corresponding to the first data packet;
the first auxiliary information and/or the second auxiliary information is not obtained;
previously obtained first auxiliary information and/or second auxiliary information is deleted or canceled;
the third auxiliary information is obtained; and
a current time is not within a time period during which no data is transmitted,
where
the third auxiliary information includes at least one of the following:
   third indication information, the third indication information being used to indicate at least one of the following: network congestion ends, an operation of transmitting no data packet is stopped, a first operation is stopped, it is requested to perform a second operation, and data transmission is resumed; and
   a network resource load or a load value index corresponding to the network resource load.

Optionally, the first performing module 1210 is configured for at least one of the following:
the first communication device further obtains effective time of the second auxiliary information in a case of obtaining the second auxiliary information; and
the first communication device deletes the second auxiliary information in a case that the effective time of the second auxiliary information is overtime.

Optionally, in a case that the target layer is the PDCP layer, the first operation further includes the following:
the PDCP layer of the first communication device determines deletion of the target data packet in the cache area; and
the PDCP layer of the first communication device determines a request made to an RLC layer to delete a target data packet of the RLC layer that has not been sent.

Optionally, in a case that the target layer is not the PDCP layer, the first performing module 1210 is configured for the following:
the PDCP layer of the first communication device identifies a target data packet in a cache area;
the PDCP layer of the first communication device determines deletion of the target data packet in the cache area; and
the PDCP layer of the first communication device determines a request made to an RLC layer to delete a target data packet of the RLC layer that has not been sent.

Optionally, the PDCP layer of the first communication device identifying a target data packet in a cache area includes that the PDCP layer of the first communication device determines the target data packet in the cache area based on a mapping relationship between an SN of PDCP in the cache area and an importance level.

Optionally, the range of the first target data packet is reflected by information indication of the first target data packet; and information about the first target data packet includes at least one of the following: an importance level range of the first target data packet, data flow description information about the first target data packet, data set description information about the first target data packet, tunnel information corresponding to the first target data packet, a direction of the first target data packet, a source interface of the first target data packet, a resource load corresponding to the first target data packet, and a priority corresponding to the first target data packet.

In an implementation, an importance level range of the first target data packet is reflected by a first importance level. The first importance level is used to indicate at least one of the following: a range of the first target data packet is packets whose importance levels are lower than or equal to the first importance, and the importance level range is all importance levels lower than or equal to the first importance.

In another implementation, an importance level range of the first target data packet is reflected by one or more importance levels.

The information about the first data packet includes at least one of the following: an importance level range of the first data packet, data flow description information about the first data packet, data set description information about the first data packet, tunnel information corresponding to the first data packet, a direction of the first data packet, a source interface of the first data packet, a resource load corresponding to the first data packet, and a priority corresponding to the first data packet.

In an implementation, an importance level range of the first data packet is reflected by a second importance level. The second importance level is used to indicate at least one of the following: a range of the first data packet is packets whose importance levels are lower than or equal to the second importance, and the importance level range is all importance levels lower than or equal to the second importance.

In another implementation, the importance level range of the first data packet is reflected by one or more importance levels.

The information about the third data packet includes at least one of the following: an importance level range of the third data packet, data flow description information about the third data packet, data set description information about the third data packet, tunnel information corresponding to the third data packet, a direction of the third data packet, a source interface of the third data packet, a resource load corresponding to the third data packet, and a priority corresponding to the third data packet.

In an implementation, an importance level range of the third data packet is reflected by a third importance level. The third importance level is used to indicate at least one of the following: a range of the third data packet is packets whose importance levels are higher than or equal to the third importance, and the importance level range is all importance levels higher than or equal to the third importance.

In another implementation, the importance level range of the third data packet is reflected by one or more importance levels.

Optionally, the resource load corresponding to the first target data packet is used to indicate, in a case that the actual resource load reaches the resource load corresponding to the first target data packet, that the information about the first target data packet takes effect, or that the first operation is performed based on the information about the first target data packet;
and/or
the resource load corresponding to the first data packet is used to indicate, in a case that the actual resource load reaches the resource load corresponding to the first data packet, that the information about the first data packet takes effect, or that the first operation is performed based on the information about the first data packet;
   and/or
the resource load corresponding to the third data packet is used to indicate, in a case that the actual resource load reaches the resource load corresponding to the third data packet, that the information about the third data packet takes effect, or that a data transmission guarantee operation is performed based on the information about the third data packet;
   and/or
a target priority corresponding to the first target data packet is a priority of abandoning transmission, which is used to indicate that the first operation is performed based on the information about the first target data packet with different priorities in an order of priorities;
   and/or
the priority corresponding to the first data packet is a priority of abandoning transmission, which is used to indicate that the first operation is performed based on the information about the first data packets with different priorities in an order of priorities;
   and/or
the priority corresponding to the third data packet is a priority of guaranteeing transmission, which is used to indicate that the data transmission guarantee operation is performed based on the information about the third data packet with different priorities in an order of priorities;
   and/or
an index of the information about the first target data packet is used to index the information about the first target data packet;
   and/or
the index of the information about the first data packet is used to index the information about the first data packet;
   and/or
the index of the information about the third data packet is used to index the information about the third data packet.

FIG. 13 is a second schematic diagram of a structure of a data packet processing apparatus according to an embodiment of this application. As shown in FIG. 13, the embodiment of the present invention provides the data packet processing apparatus, including:
a second performing module 1310 configured to perform a third operation,
the third operation including at least one of the following:
   sending one of the following: first auxiliary information, second auxiliary information, and third auxiliary information;
   requesting to delete or cancel the first auxiliary information;
   requesting to delete or cancel the second auxiliary information; and
   sending configuration information for transmitting no data packet.

The data packet processing apparatus in the embodiment of this application may be an electronic device, such as an electronic device with an operating system, or a component in the electronic device, such as an integrated circuit or a chip. The electronic device may be a terminal or another device except the terminal. For example, the terminal may include, but is not limited to, the types of the terminal 11 listed above, and the another device may be a server, a network attached storage (Network Attached Storage, NAS), and the like, which is not specifically limited in the embodiment of this application. Optionally, the second performing module 1310 is configured to transmit the first auxiliary information or the second auxiliary information in a case that a fourth condition is met, where
the fourth condition includes at least one of the following:
network congestion occurs;
a network resource load reaches a resource load corresponding to the first data packet;
a network cannot allocate resources for transmission of the first data packet;
the network cannot meet requirements for transmission of all data of a first object; and
the network cannot meet a QoS requirement for the first object, where the first object includes at least one of the following: a terminal, a QoS flow, a radio bearer, a data flow, a data set, and a tunnel.

Optionally, the second performing module 1310 is configured to: in a case that a fifth condition is met, request to delete or cancel the first auxiliary information, request to delete or cancel the first auxiliary information, and/or send the third auxiliary information, where
the fifth condition includes at least one of the following:
network congestion ends;
an actual network resource load does not reach a resource load corresponding to the first data packet or drops below the resource load corresponding to the first data packet;
the network recovers to meet requirements for transmission of all data of a first object;
the network recovers to allocate resources for transmission of the first data packet;
the network recovers to meet requirements for transmission of all data of a first object;
the network recovers to meet a QoS requirement for the first object, where
the first object includes at least one of the following: a terminal, a QoS flow, a radio bearer, a data flow, a data set, and a tunnel.

Optionally, the network congestion includes at least one of the following:
congestion of the second communication device;
congestion of a transport layer; and
congestion of a user plane network element; and
the network includes at least one of the following: the second communication device, the transport layer, and the user plane network element.

Optionally, the first auxiliary information includes at least one of the following:
first indication information, the first indication information being used to indicate at least one of the following: network congestion starts, it is requested to perform an operation of transmitting no data packet, it is requested to perform a first operation, it is requested to abandon transmission of or allow not to transmit all data packets, it is requested to abandon transmission of or allow not to transmit the first data packet, it is requested to abandon transmission of or allow not to transmit a second data packet, and it is allowed not to transmit data packets other than a third data packet and/or a fourth data packet;
information about the first data packet, the information about the first data packet being used to indicate a range of the first data packet;
information about the third data packet, the information about the third data packet being used to indicate a range of the first data packet;
a time period during which no data is transmitted; and
a network resource load or a load value index corresponding to the network resource load,
where
the second data packet is a data packet that depends on the first data packet.

Optionally, the second auxiliary information includes at least one of the following:
second indication information, the second indication information being used to indicate at least one of the following: network congestion starts, it is requested to perform an operation of transmitting no data packet, it is requested to perform a first operation, it is requested to abandon transmission of or allow not to transmit all data packets, it is requested to abandon transmission of or allow not to transmit the first data packet, it is requested to abandon transmission of or allow not to transmit a second data packet, and it is allowed not to transmit data packets other than a third data packet and/or a fourth data packet;
an index of the information about the first data packet;
an index of the information about the third data packet,
a time period during which no data is transmitted; and
a network resource load or a load value index corresponding to the network resource load,
where
the second data packet is a data packet that depends on the first data packet.

Optionally, the third auxiliary information includes at least one of the following:
third indication information, the third indication information being used to indicate at least one of the following: network congestion ends, an operation of transmitting no data packet is stopped, a first operation is stopped, it is requested to perform a second operation, and data transmission is resumed, and
a network resource load or a load value index corresponding to the network resource load.

Optionally, the configuration information for transmitting no data packet includes at least one of the following:
one or more items of related information about the first data packet; and
one or more items of related information about the third data packet;
first indication information, the first indication information being used to indicate at least one of the following: it is requested to abandon transmission of or allow not to transmit all data packets, it is requested to abandon transmission of or allow not to transmit the first data packet, it is requested to abandon transmission of or allow not to transmit the second data packet, and it is allowed not to transmit data packets other than the third data packet and/or the fourth data packet,
where
the related information about the first data packet includes at least one of the following: information about the first data packet, an index of the information about the first data packet, an effective condition of the related information about the first data packet, and an invalid condition of the related information about the first data packet;
the related information about the third data packet includes at least one of the following: information about the third data packet, and an index of the information about the third data packet,
where
the information about the first data packet is used to indicate a range of the first data packet;
the information about the third data packet is used to indicate a range of the third data packet; and
the second data packet is a data packet that depends on the first data packet.

Optionally, the apparatus further includes: a first acquisition module, configured to obtain at least one of the following: the first auxiliary information, the second auxiliary information, and the configuration information for transmitting no data packet.

Optionally, the first acquisition module being configured to obtain at least one of the following: the first auxiliary information, the second auxiliary information, and the configuration information for transmitting no data packet includes the following:
the second communication device receives a data cache report for distinguishing between importance; and
the second communication device determines, based on the data cache report, at least one of the following: the first auxiliary information, the second auxiliary information, and the configuration information for transmitting no data packet.

Optionally, the first acquisition module being configured to obtain at least one of the following: the first auxiliary information, the second auxiliary information, and the configuration information for transmitting no data packet includes the following:
the second communication device receives at least one of the following sent by a core network element: the first auxiliary information, the second auxiliary information, and the configuration information for transmitting no data packet.

FIG. 14 is a third schematic diagram of a structure of a data packet processing apparatus according to an embodiment of this application. As shown in FIG. 14, the embodiment of the present invention provides the data packet processing apparatus, including:
a third performing module 1410 configured to perform a fourth operation, the fourth operation including:
determining configuration information for transmitting no data packet; and
sending the configuration information for transmitting no data packet.

The data packet processing apparatus in the embodiment of this application may be an electronic device, such as an electronic device with an operating system, or a component in the electronic device, such as an integrated circuit or a chip. The electronic device may be a terminal or another device except the terminal. For example, the terminal may include, but is not limited to, the types of the terminal 11 listed above, and the another device may be a server, a network attached storage (Network Attached Storage, NAS), and the like, which is not specifically limited in the embodiment of this application.

Optionally, the third performing module 1410 is configured to
allow the configuration information for transmitting no data packet to be included in tunnel granularity signaling to be sent.

Optionally, the third performing module 1410 is configured for at least one of the following:
obtaining a first policy; and
the third communication device performing the fourth operation based on the first policy.

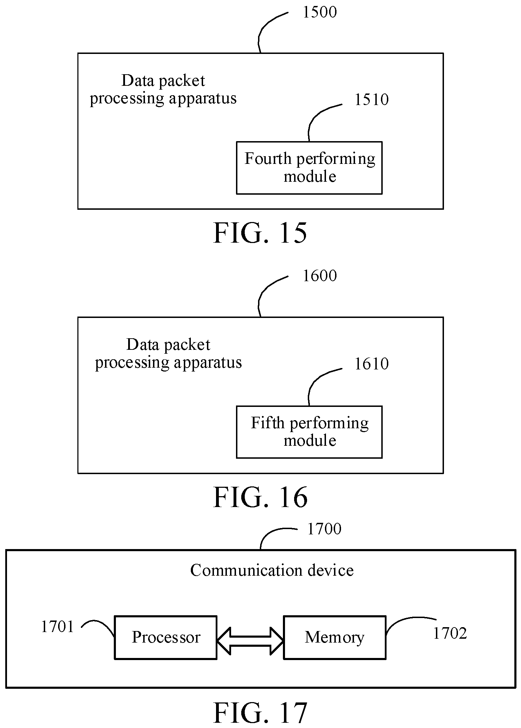

FIG. 15 is a fourth schematic diagram of a structure of a data packet processing apparatus according to an embodiment of this application. As shown in FIG. 15, the embodiment of the present invention provides the data packet processing apparatus, including:
a fourth performing module 1510 configured to perform a fifth operation, the fifth operation including:
determining a first policy, the first policy including at least one of the following:
sending fifth indication information, the fifth indication information being used to indicate at least one of the following: in a case that a sixth condition is met, it is allowed not to transmit some data packets of a first object, it is allowed not to transmit a first data packet and/or a second data packet, priority guarantee is requested for a third data packet and/or a fourth data packet, and it is allowed not to transmit data packets other than the third data packet and/or the fourth data packet, the sixth condition including at least one of the following: a network source cannot meet requirements for transmission of all data of the first object, a network cannot guarantee QoS of the first object, and network congestion occurs; data flow description information and importance mapping information; and
a policy for transmitting no data packet, where
the policy for transmitting no data packet includes at least one of the following:
   one or more items of related information about the first data packet; and
   one or more items of related information about the third data packet;
   seventh indication information, the seventh indication information being used to indicate at least one of the following: it is requested to abandon transmission of or allow not to transmit all data packets, it is requested to abandon transmission of or allow not to transmit the first data packet, it is requested to abandon transmission of or allow not to transmit the second data packet, and it is allowed not to transmit data packets other than the third data packet and/or the fourth data packet,
   where
   the related information about the first data packet includes at least one of the following: information about the first data packet, an index of the information about the first data packet, an effective condition of the related information about the first data packet, and an invalid condition of the related information about the first data packet;
   the related information about the third data packet includes at least one of the following: information about the third data packet, and an index of the information about the third data packet,
   where
   the information about the first data packet is used to indicate a range of the first data packet;
   the information about the third data packet is used to indicate a range of the third data packet; and
   the second data packet is a data packet that depends on the first data packet,
   where
   the first object includes at least one of the following: a terminal, a QoS flow, a radio bearer, a data flow, a data set, and a tunnel.

The data packet processing apparatus in the embodiment of this application may be an electronic device, such as an electronic device with an operating system, or a component in the electronic device, such as an integrated circuit or a chip. The electronic device may be a terminal or another device except the terminal. For example, the terminal may include, but is not limited to, the types of the terminal 11 listed above, and the another device may be a server, a network attached storage (Network Attached Storage, NAS), and the like, which is not specifically limited in the embodiment of this application.

Optionally, the fourth performing module 1510 is configured for the following:
the fourth communication device obtains fourth information, the fourth information including at least one of the following: a network resource load and first request information.

The fourth communication device performs the fifth operation based on the fourth information, where
the network resource load includes at least one of the following: a resource load of a RAN, a resource load of a transport layer, and a resource load of a user plane network element.

FIG. 16 is a fifth schematic diagram of a structure of a data packet processing apparatus according to an embodiment of this application. As shown in FIG. 16, the embodiment of the present invention provides the data packet processing apparatus, including:
a fifth performing module 1610 configured to perform a sixth operation, the sixth operation including sending a first request,
the first request including at least one of the following: data flow description information, information about a terminal, sixth indication information, one or more items of related information about a first data packet, one or more items of related information about a third data packet, and data flow description information and importance mapping information, where
the sixth indication information is used to indicate at least one of the following: in a case that a seventh condition is met, it is allowed not to transmit some data packets of a second object, it is allowed not to transmit the first data packet and/or a second data packet, priority guarantee is requested for the third data packet and/or a fourth data packet, and it is allowed not to transmit data packets other than the third data packet and/or the fourth data packet,
the seventh condition including at least one of the following: a network source cannot meet requirements for transmission of all data of the second object, a network cannot guarantee QoS of the second object, and network congestion occurs,
where
the related information about the first data packet includes at least one of the following: information about the first data packet, an index of the information about the first data packet, an effective condition of the related information about the first data packet, and an invalid condition of the related information about the first data packet;
the related information about the third data packet includes at least one of the following: information about the third data packet, and an index of the information about the third data packet,
where
the information about the first data packet is used to indicate a range of the first data packet;
the information about the third data packet is used to indicate a range of the third data packet; and
the second data packet is a data packet that depends on the first data packet.
where
the second object includes at least one of the following: a terminal, a data flow, and a data set.

The data packet processing apparatus in the embodiment of this application may be an electronic device, such as an electronic device with an operating system, or a component in the electronic device, such as an integrated circuit or a chip. The electronic device may be a terminal or another device except the terminal. For example, the terminal may include, but is not limited to, the types of the terminal 11 listed above, and the another device may be a server, a network attached storage (Network Attached Storage, NAS), and the like, which is not specifically limited in the embodiment of this application.

Optionally, the effective condition of the related information about the first data packet includes at least one of the following: congestion starts, an actual resource load reaches a resource load corresponding to the first data packet, a network source cannot meet requirements for transmission of all data of the second object, and a network cannot guarantee QoS of the second object;
and/or
the effective condition of the related information about the third data packet includes at least one of the following: congestion starts, an actual resource load reaches a resource load corresponding to the third data packet, a network source cannot meet requirements for transmission of all data of the second object, and a network cannot guarantee QoS of the second object;
   and/or
the invalid condition of the related information about the first data packet includes at least one of the following: congestion ends, an actual resource load does not reach a resource load corresponding to the first data packet, a network source can meet requirements for transmission of all data of the second object, and a network can guarantee QoS of the second object;
   and/or
the invalid condition of the related information about the third data packet includes at least one of the following: congestion ends, an actual resource load does not reach a resource load corresponding to the third data packet, a network source can meet requirements for transmission of all data of the second object, and a network can guarantee QoS of the second object;
   and/or
the effective condition of the related information about the first data packet includes at least one of the following: congestion starts, an actual resource load reaches a resource load corresponding to the first data packet, a network source cannot meet requirements for transmission of all data of a first object, and a network cannot guarantee QoS of the second object;
   and/or
the effective condition of the related information about the third data packet includes at least one of the following: congestion starts, an actual resource load reaches a resource load corresponding to the third data packet, a network source cannot meet requirements for transmission of all data of the first object, and a network cannot guarantee QoS of the second object;
   and/or
the invalid condition of the related information about the first data packet includes at least one of the following: congestion ends, an actual resource load does not reach a resource load corresponding to the first data packet, a network source can meet requirements for transmission of all data of the first object, and a network can guarantee QoS of the second object;
   and/or
the invalid condition of the related information about the third data packet includes at least one of the following: congestion ends, an actual resource load does not reach a resource load corresponding to the third data packet, a network source can meet requirements for transmission of all data of the first object, and a network can guarantee QoS of the second object.

Optionally, FIG. 17 is a schematic diagram of a structure of a communication device according to an embodiment of this application. As shown in FIG. 17, the embodiment of this application further provides a communication device 1700, including a processor 1701 and a memory 1702. The memory 1702 stores a program or instructions that can be run on the processor 1701. For example, when the communication device 1700 is the first communication device, and when the program or instructions are executed by the processor 1701, each step of the above-mentioned data packet processing method embodiment is implemented, which can achieve the same technical effect. When the communication device 1700 is the second communication device, and when the program or instructions are executed by the processor 1701, each step of the above-mentioned data packet processing method embodiment is implemented, which can achieve the same technical effect. When the communication device 1700 is the third communication device, and when the program or instructions are executed by the processor 1701, each step of the above-mentioned data packet processing method embodiment is implemented, which can achieve the same technical effect. When the communication device 1700 is the fourth communication device, and when the program or instructions are executed by the processor 1701, each step of the above-mentioned data packet processing method embodiment is implemented, which can achieve the same technical effect. When the communication device 1700 is the fifth communication device, and when the program or instructions are executed by the processor 1701, each step of the above-mentioned data packet processing method embodiment is implemented, which can achieve the same technical effect. In order to avoid repetition, details are not described herein.

An embodiment of the present invention provides a first communication device, including a processor and a communication interface, where the processor is configured to: perform a target operation, the target operation including at least one of the following:
determining an importance level of a target data packet, data flow description information corresponding to a data packet, and/or a tunnel mapped by the data packet;
determining, based on the importance level of the target data packet, a buffer status report for distinguishing between importance levels, where data packets with different importance levels correspond to buffer status reports with different importance levels;
sending the buffer status report for distinguishing between importance levels;
determining a range of a first target data packet; and
stopping a first operation and/or performing a second operation, or performing the first operation.

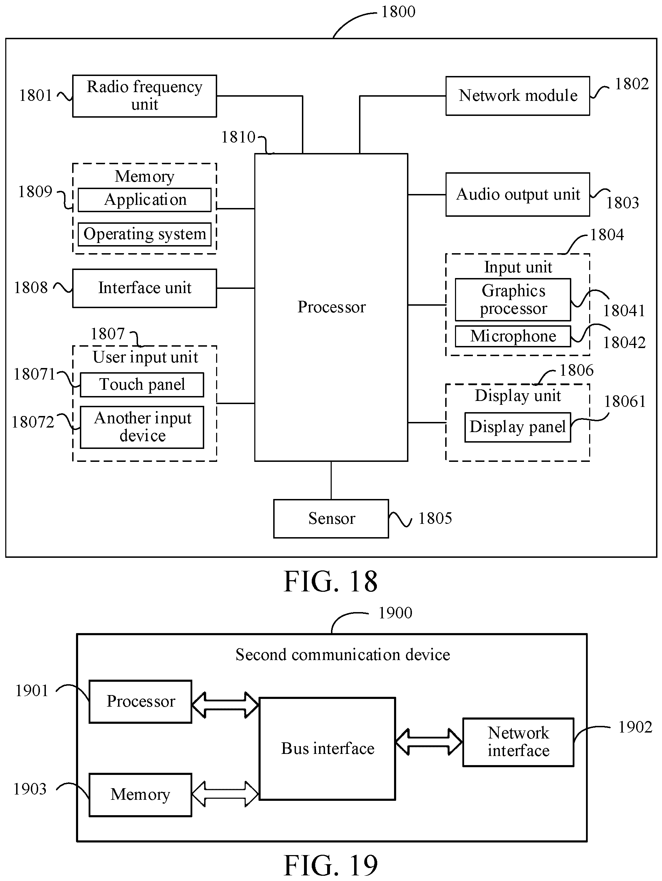

The first communication device embodiment corresponds to the above-mentioned method embodiment for the first communication device, and each implementation process and implementation of the above-mentioned method embodiment can be applied to the first communication device embodiment, which can achieve the same technical effect. Specifically, FIG. 18 is a schematic diagram of a hardware structure of a first communication device according to an embodiment of this application.

The first communication device 1800 includes, but is not limited to: at least some components of a radio frequency unit 1801, a network module 1802, an audio output unit 1803, an input unit 1804, a sensor 1805, a display unit 1806, a user input unit 1807, an interface unit 1808, a memory 1809, and a processor 1810.

It can be understood by a person skilled in the art that the first communication device 1800 may further include a power supply (such as a battery) for supplying power to various components. The power supply may be logically connected to the processor 1810 by using a power management system, so as to achieve charging, discharging, power consumption management, and other functions by using the power management system. The structure of the first communication device shown in FIG. 18 does not constitute a limitation to the first communication device. The first communication device may include more or fewer components than those shown, or combine some components, or have different component arrangements. Details are not described herein.

It should be understood that in the embodiment of this application, the input unit 1804 may include a graphics processing unit (Graphics Processing Unit, GPU) 18041 and a microphone 18042. The graphics processing unit 18041 processes image data of a static picture or a video that is obtained by an image acquisition apparatus (for example, a camera) in a video acquisition mode or an image acquisition mode. The display unit 1806 may include a display panel 18061, and the display panel 18061 may be configured in the form of a liquid crystal display, an organic light emitting diode, or the like. The user input unit 1807 includes at least one of a touch panel 18071 and another input device 18072. The touch panel 18071 is also referred to as a touchscreen. The touch panel 18071 may include two parts: a touch detection apparatus and a touch controller. The another input device 18072 may include, but is not limited to, a physical keyboard, a functional key (such as a volume control key or a switch key), a track ball, a mouse, and a joystick, which is not described in detail herein.

In the embodiment of this application, after receiving downlink data from a network-side device, the radio frequency unit 1801 may transmit the data to the processor 1810 for processing. In addition, the radio frequency unit 1801 may send uplink data to the network-side device. Generally, the radio frequency unit 1801 includes, but is not limited to, an antenna, an amplifier, a transceiver, a coupler, a low noise amplifier, and a duplexer.

The memory 1809 may be configured to store a software program or instructions and various data. The memory 1809 may mainly include a first storage area for storing a program or instructions and a second storage area for storing data, where the first storage area may store an operating system, an application or instructions required for at least a function (such as a sound playing function and an image playing function), and the like. In addition, the memory 1809 may include a volatile memory or a non-volatile memory, or the memory 1809 may include a volatile memory and a non-volatile memory. The non-volatile memory may be a read-only memory (Read-Only Memory, ROM), a programmable ROM (Programmable ROM, PROM), an erasable PROM (Erasable PROM, EPROM), an electrically EPROM (Electrically EPROM, EEPROM), or a flash memory. The volatile memory may be a random access memory (Random Access Memory, RAM), a static RAM (Static RAM, SRAM), a dynamic RAM (Dynamic RAM, DRAM), a synchronous DRAM (Synchronous DRAM, SDRAM), a double data rate SDRAM (Double Data Rate SDRAM, DDRSDRAM), an enhanced SDRAM (Enhanced SDRAM, ESDRAM), a synchronous link DRAM (Synch link DRAM, SLDRAM), and a direct Rambus RAM (Direct Rambus RAM, DRRAM). The memory 1809 in the embodiment of this application includes, but is not limited to, these and any other suitable types of memories.

The processor 1810 may include one or more processing units. Optionally, the processor 1810 integrates an application processor and a modem processor, where the application processor mainly deals with operations involving an operating system, a user interface, an application program, and the like, and the modem processor mainly processes wireless communication signals, such as a baseband processor. It can be understood that, the modem processor may not be integrated into the processor 1810.

The processor 1810 is configured to:
perform a target operation, the target operation including at least one of the following:
determining an importance level of a target data packet, data flow description information corresponding to a data packet, and/or a tunnel mapped by the data packet;
determining, based on the importance level of the target data packet, a buffer status report for distinguishing between importance levels, where data packets with different importance levels correspond to buffer status reports with different importance levels;
sending the buffer status report for distinguishing between importance levels;
determining a range of a first target data packet; and
stopping a first operation and/or performing a second operation, or performing the first operation.

Optionally, the target data packet is at least one of the following: a received data packet (such as a received uplink data packet, or a data received packet to be sent), and a data packet in a buffer.

Optionally, in the first communication device, a target layer for performing the target operation includes at least one of the following: a PDCP layer, an SDAP layer, and an Xth layer, where
the Xth layer is located at at least one of the following: a NAS layer or an AS layer; and
the Xth layer is a layer above the SDAP layer.

Optionally, the first target data packet is at least one of the following: a data packet with a low importance level, a data packet whose transmission needs to be abandoned, a data packet whose transmission is allowed to be abandoned, a data packet whose transmission needs no priority guarantee, and a data packet on which no data packet whose transmission needs priority guarantee depends.

Optionally, the processor 1810 is configured for at least one of the following:
applying, based on a descending order of priorities, information about first data packets with different priorities in sequence to determine the range of the first target data packet; and
determining the range of the first target data packet by using importance levels in an ascending order of the importance levels,
the first target data packet including at least one of the following: the first data packet, a second data packet, and a data packet with a lowest importance level;
the range of first target data packet includes at least one of the following: a range of the first data packet, a range of the second data packet, and a range of the data packet with a lowest importance level;
the first target data packet does not include at least one of the following: a third data packet and a fourth data packet;
the range of first target data packet does not include at least one of the following: a range of the third data packet and a range of the fourth data packet,
where
a second target data packet is a data packet that depends on the first target data packet;
the third data packet is a data packet whose transmission needs priority guarantee; and
the fourth data packet is a data packet on which the third data packet depends.

Optionally, the first operation includes at least one of the following:
determining whether the target data packet is in the range of the first target data packet;
determining whether the target data packet is the second target data packet; and
performing at least one of the following on the target data packet that is in the range of the first target data packet and/or the second target data packet: skipping transmitting the target data packet, the buffer status report including no cache amount of the target data packet, and deleting the target data packet in the buffer;
skipping transmitting the first target data packet;
skipping transmitting the second target data packet in a case that transmission of the first target data packet is skipped;
the buffer status report including no cache amount of the first target data packet and/or the second target data packet, and
deleting the first target data packet and/or the second target data packet in the buffer;
requesting a RAN network element to transmit other data packets;
transparently transmitting, by a target layer of the first communication device, other data packets to a next layer of the target layer;
adding, by the target layer of the first communication device, importance level information about other data packets to the data packets and then sending the packets to the next layer;
skipping transmitting all data packets;
applying, based on the descending order of priorities, the information about the first data packets with different priorities in sequence to skip transmitting the target data packet conforming to the information about the first data packet; and
skipping transmitting the target data packet in sequence in the ascending order of the importance levels.

Optionally, the determining whether the target data packet is in the range of the first target data packet includes at least one of the following:
determining that the target data packet is in the range of the first target data packet in a case that the importance level of the target data packet matches an importance level range of the first target data packet;
determining that the target data packet is in the range of the first target data packet in a case that data flow description information about the target data packet matches data flow description information about the first data packet;
determining that the target data packet is in the range of the first target data packet in a case that tunnel information mapped by the target data packet matches tunnel information corresponding to the first data packet;
determining that the target data packet is in the range of the first target data packet in a case that a direction mapped by the target data packet matches a direction mapped by the first data packet; and
determining that the target data packet is in the range of the first target data packet in a case that a source interface mapped by the target data packet matches a source interface mapped by the first data packet.

Optionally, the second operation includes at least one of the following:
the target layer of the first communication device transparently transmits all the data packets to the next layer of the target layer;
the first communication device requests the RAN network element to transmit all the data packets; and
the target layer of the first communication device adds importance level information about data packets to the data packets and then sends the packets to the next layer.

Optionally, the first communication device performing a target operation includes the following:
the first communication device obtains first information, the first information including at least one of the following: information about the target data packet, data flow description information and importance mapping information, first auxiliary information, second auxiliary information, third auxiliary information, configuration information for transmitting no data packet, one or more items of related information about the first data packet, and one or more items of related information about the third data packet; and
the first communication device performs the target operation based on the first information.

Optionally, the operation of determining an importance level of a target data packet includes one of the following:
obtaining importance and the like of the target data packet from header information about the target data packet; or
obtaining data flow description information about the target data packet, and data flow description information and importance mapping information; and determining the importance level of the target data packet based on the data flow description information about the target data packet, and the data flow description information and importance mapping information.

Optionally, the first communication device performing a target operation includes the following:
the first communication device obtains first auxiliary information, and
the first communication device performs the target operation based on the first auxiliary information,
where
the first auxiliary information includes at least one of the following:
   first indication information, the first indication information being used to indicate at least one of the following: network congestion starts, it is requested to perform an operation of transmitting no data packet, it is requested to perform a first operation, it is requested to abandon transmission of or allow not to transmit all data packets, it is requested to abandon transmission of or allow not to transmit the first data packet, it is requested to abandon transmission of or allow not to transmit a second data packet, and it is allowed not to transmit data packets other than a third data packet and/or a fourth data packet;
   information about the first data packet, the information about the first data packet being used to indicate a range of the first data packet;
   information about the third data packet, the information about the third data packet being used to indicate a range of the first data packet;
   a time period during which no data is transmitted; and
   a network resource load or a load value index corresponding to the network resource load,
   where
   the second data packet is a data packet that depends on the first data packet.

Optionally, the processor 1810 is configured for the following:
in a case that a first condition is met, the first communication device stops performing the first operation and/or performs the second operation, where
the first condition includes at least one of the following:
   network congestion ends;
   an actual network resource load does not reach a resource load corresponding to the first data packet or drops below the resource load corresponding to the first data packet;
   the first auxiliary information and/or the second auxiliary information is not obtained;
   previously obtained first auxiliary information and/or second auxiliary information is deleted or canceled;
   the third auxiliary information is obtained; and
   a current time is not within a time period during which no data is transmitted,
   where
   the third auxiliary information includes at least one of the following:
      third indication information, the third indication information being used to indicate at least one of the following: network congestion ends, an operation of transmitting no data packet is stopped, a first operation is stopped, it is requested to perform a second operation, and data transmission is resumed, and
      a network resource load or a load value index corresponding to the network resource load.

Optionally, the first communication device performing a target operation further includes at least one of the following:
the first auxiliary information further obtains effective time of the first communication device in a case of obtaining the first auxiliary information; and
the first communication device deletes the first auxiliary information in a case that the effective time of the first auxiliary information is overtime.

Optionally, the processor 1810 is configured for the following:
the first communication device obtains the configuration information for transmitting no data packet, the one or more items of related information about the first data packet, the one or more items of related information about the third data packet, and/or the second auxiliary information; and
performs the first operation based on the configuration information for transmitting no data packet, the one or more items of related information about the first data packet, the one or more items of related information about the third data packet, and/or the second auxiliary information, where
the configuration information for transmitting no data packet includes at least one of the following:
   one or more items of related information about the first data packet; and
   one or more items of related information about the third data packet;
   first indication information, the first indication information being used to indicate at least one of the following: network congestion starts, it is requested to perform an operation of transmitting no data packet, it is requested to perform a first operation, it is requested to abandon transmission of or allow not to transmit all data packets, it is requested to abandon transmission of or allow not to transmit the first data packet, it is requested to abandon transmission of or allow not to transmit a second data packet, and it is allowed not to transmit data packets other than a third data packet and/or a fourth data packet;
   where
   the related information about the first data packet includes at least one of the following: information about the first data packet, an index of the information about the first data packet, an effective condition of the related information about the first data packet, and an invalid condition of the related information about the first data packet;
   the related information about the third data packet in a descending order of priorities corresponding to the first data packet includes at least one of the following: information about the third data packet, and an index of the information about the third data packet,
   where
   the information about the first data packet is used to indicate a range of the first data packet;
   the information about the third data packet is used to indicate a range of the third data packet; and
   the second data packet is a data packet that depends on the first data packet,
   the second auxiliary information includes at least one of the following:
      second indication information, the second indication information being used to indicate at least one of the following: network congestion starts, it is requested to perform an operation of transmitting no data packet, it is requested to perform a first operation, it is requested to abandon transmission of or allow not to transmit all data packets, it is requested to abandon transmission of or allow not to transmit the first data packet, it is requested to abandon transmission of or allow not to transmit a second data packet, and it is allowed not to transmit data packets other than a third data packet and/or a fourth data packet;
      an index of the information about the first data packet;
      an index of the information about the third data packet,
      a time period during which no data is transmitted; and
      a network resource load or a load value index corresponding to the network resource load,
      where
      the second data packet is a data packet that depends on the first data packet.

Optionally, the effective condition of the related information about the first data packet includes at least one of the following: network congestion starts, and an actual network resource load reaches a resource load corresponding to the first data packet;
and/or
the invalid condition of the related information about the first data packet includes at least one of the following: network congestion ends, and an actual network resource load does not reach a resource load corresponding to the first data packet or drops below the resource load corresponding to the first data packet;
   and/or
the resource load corresponding to the first data packet is used to indicate, in a case that the actual network resource load reaches the resource load corresponding to the first data packet, that the information about the first data packet takes effect, or that the first operation is performed based on the information about the first data packet;
   and/or
a resource load corresponding to the third data packet is used to indicate, in a case that the actual network resource load reaches the resource load corresponding to the third data packet, that the information about the third data packet takes effect, or that a data transmission guarantee operation is performed based on the information about the third data packet;
   and/or
the priority corresponding to the first data packet is a priority of abandoning transmission, which is used to indicate that the first operation is performed based on the information about the first data packets with different priorities in a descending order of priorities;
   and/or
a priority corresponding to the third data packet is a priority of guaranteeing transmission, which is used to indicate that the data transmission guarantee operation is performed based on the information about the third data packet with different priorities in a descending order of priorities;
   and/or
the index of the information about the first data packet is used to index the information about the first data packet;
   and/or
the index of the information about the third data packet is used to index the information about the third data packet.

Optionally, the processor 1810 is configured for the following: in a case that a first condition is met, performing the first operation based on the information about the first data packet, or determining the information about the first data packet to be effective,
the second condition including at least one of the following:
network congestion starts; and
an actual network resource load reaches a resource load corresponding to the first data packet;
obtaining the index of the information about the first data packet;
obtaining priority information, the priority information indicating a priority corresponding to the information about the first data packet; and
obtaining second indication information, the second indication information being used to indicate at least one of the following: network congestion starts, it is requested to perform an operation of transmitting no data packet, it is requested to perform the first operation, it is requested to abandon transmission of or allow not to transmit all data packets, it is requested to abandon transmission of or allow not to transmit the first data packet, it is requested to abandon transmission of or allow not to transmit a second data packet, and it is allowed not to transmit data packets other than the third data packet and/or a fourth data packet.

Optionally, the processor 1810 is configured for the following: in a case that a third condition is met, stopping performing the first operation and/or performing the second operation,
the third condition including at least one of the following:
network congestion ends;
an actual network resource load does not reach a resource load corresponding to the first data packet or drops below the resource load corresponding to the first data packet;
the first auxiliary information and/or the second auxiliary information is not obtained;
previously obtained first auxiliary information and/or second auxiliary information is deleted or canceled;
the third auxiliary information is obtained; and
a current time is not within a time period during which no data is transmitted,
where
the third auxiliary information includes at least one of the following:
   third indication information, the third indication information being used to indicate at least one of the following: network congestion ends, an operation of transmitting no data packet is stopped, a first operation is stopped, it is requested to perform a second operation, and data transmission is resumed, and
   a network resource load or a load value index corresponding to the network resource load.

Optionally, the processor 1810 is configured for at least one of the following:
the first communication device further obtains effective time of the second auxiliary information in a case of obtaining the second auxiliary information; and
the first communication device deletes the second auxiliary information in a case that the effective time of the second auxiliary information is overtime.

Optionally, in a case that the target layer is the PDCP layer, the first operation further includes the following:
the PDCP layer of the first communication device determines deletion of the target data packet in the cache area; and
the PDCP layer of the first communication device determines a request made to an RLC layer to delete a target data packet of the RLC layer that has not been sent.

Optionally, in a case that the target layer is not the PDCP layer, the processor 1810 is configured for the following:
the PDCP layer of the first communication device identifies a target data packet in a cache area;
the PDCP layer of the first communication device determines deletion of the target data packet in the cache area; and
the PDCP layer of the first communication device determines a request made to an RLC layer to delete a target data packet of the RLC layer that has not been sent.

Optionally, the PDCP layer of the first communication device identifying a target data packet in a cache area includes that the PDCP layer of the first communication device determines the target data packet in the cache area based on a mapping relationship between an SN of PDCP in the cache area and an importance level.

Optionally, the range of the first target data packet is reflected by information indication of the first target data packet; and information about the first target data packet includes at least one of the following:
an importance level range of the first target data packet, data flow description information about the first target data packet, data set description information about the first target data packet, tunnel information corresponding to the first target data packet, a direction of the first target data packet, a source interface of the first target data packet, a resource load corresponding to the first target data packet, and a priority corresponding to the first target data packet.

In an implementation, an importance level range of the first target data packet is reflected by a first importance level. The first importance level is used to indicate at least one of the following: a range of the first target data packet is packets whose importance levels are lower than or equal to the first importance, and the importance level range is all importance levels lower than or equal to the first importance.

In another implementation, an importance level range of the first target data packet is reflected by one or more importance levels.
the information about the first data packet includes at least one of the following: an importance level range of the first data packet, data flow description information about the first data packet, data set description information about the first data packet, tunnel information corresponding to the first data packet, a direction of the first data packet, a source interface of the first data packet, a resource load corresponding to the first data packet, and a priority corresponding to the first data packet.

In an implementation, an importance level range of the first data packet is reflected by a second importance level. The second importance level is used to indicate at least one of the following: a range of the first data packet is packets whose importance levels are lower than or equal to the second importance, and the importance level range is all importance levels lower than or equal to the second importance.

In another implementation, the importance level range of the first data packet is reflected by one or more importance levels.

The information about the third data packet includes at least one of the following: an importance level range of the third data packet, data flow description information about the third data packet, data set description information about the third data packet, tunnel information corresponding to the third data packet, a direction of the third data packet, a source interface of the third data packet, a resource load corresponding to the third data packet, and a priority corresponding to the third data packet.

In an implementation, an importance level range of the third data packet is reflected by a third importance level. The third importance level is used to indicate at least one of the following: a range of the third data packet is packets whose importance levels are higher than or equal to the third importance, and the importance level range is all importance levels higher than or equal to the third importance.

In another implementation, the importance level range of the third data packet is reflected by one or more importance levels.

Optionally, the resource load corresponding to the first target data packet is used to indicate, in a case that the actual resource load reaches the resource load corresponding to the first target data packet, that the information about the first target data packet takes effect, or that the first operation is performed based on the information about the first target data packet;
and/or
the resource load corresponding to the first data packet is used to indicate, in a case that the actual resource load reaches the resource load corresponding to the first data packet, that the information about the first data packet takes effect, or that the first operation is performed based on the information about the first data packet;
   and/or
the resource load corresponding to the third data packet is used to indicate, in a case that the actual resource load reaches the resource load corresponding to the third data packet, that the information about the third data packet takes effect, or that a data transmission guarantee operation is performed based on the information about the third data packet;
   and/or
a target priority corresponding to the first target data packet is a priority of abandoning transmission, which is used to indicate that the first operation is performed based on the information about the first target data packet with different priorities in an order of priorities;
   and/or
the priority corresponding to the first data packet is a priority of abandoning transmission, which is used to indicate that the first operation is performed based on the information about the first data packets with different priorities in an order of priorities;
   and/or
the priority corresponding to the third data packet is a priority of guaranteeing transmission, which is used to indicate that the data transmission guarantee operation is performed based on the information about the third data packet with different priorities in an order of priorities;
   and/or
an index of the information about the first target data packet is used to index the information about the first target data packet;
   and/or
the index of the information about the first data packet is used to index the information about the first data packet;
   and/or
the index of the information about the third data packet is used to index the information about the third data packet.

An embodiment of the present invention provides a second communication device, including a processor and a communication interface, where the processor is configured to: perform a third operation,
the third operation including at least one of the following:
sending one of the following: first auxiliary information, second auxiliary information, and third auxiliary information;
requesting to delete or cancel the first auxiliary information;
requesting to delete or cancel the second auxiliary information; and
sending configuration information for transmitting no data packet.

The second communication device embodiment corresponds to the above-mentioned method embodiment for the second communication device, and each implementation process and implementation of the above-mentioned method embodiment can be applied to the second communication device embodiment, which can achieve the same technical effect.

Specifically, an embodiment of this application further provides a second communication device. FIG. 19 is a schematic diagram of a hardware structure of a second communication device according to an embodiment of this application. As shown in FIG. 19, the second communication device 1900 includes: a processor 1901, a network interface 1902, and a memory 1903. The network interface 1902 is, for example, a common public radio interface (common public radio interface, CPRI).

Specifically, the second communication device 1900 according to the embodiment of the present invention further includes: instructions or programs that are stored in the memory 1903 and can be run on the processor 1901, and the processor 1901 invokes the instructions or programs in the memory 1903 to perform the method performed by each module shown in FIG. 13, to achieve the same technical effect. In order to avoid repetition, details are not described herein.

An embodiment of the present invention provides a third communication device, including a processor and a communication interface, where the processor is configured to: perform a fourth operation, the fourth operation including:
determining configuration information for transmitting no data packet; and
sending the configuration information for transmitting no data packet. The third communication device embodiment corresponds to the above-mentioned method embodiment for the third communication device, and each implementation process and implementation of the above-mentioned method embodiment can be applied to the third communication device embodiment, which can achieve the same technical effect.

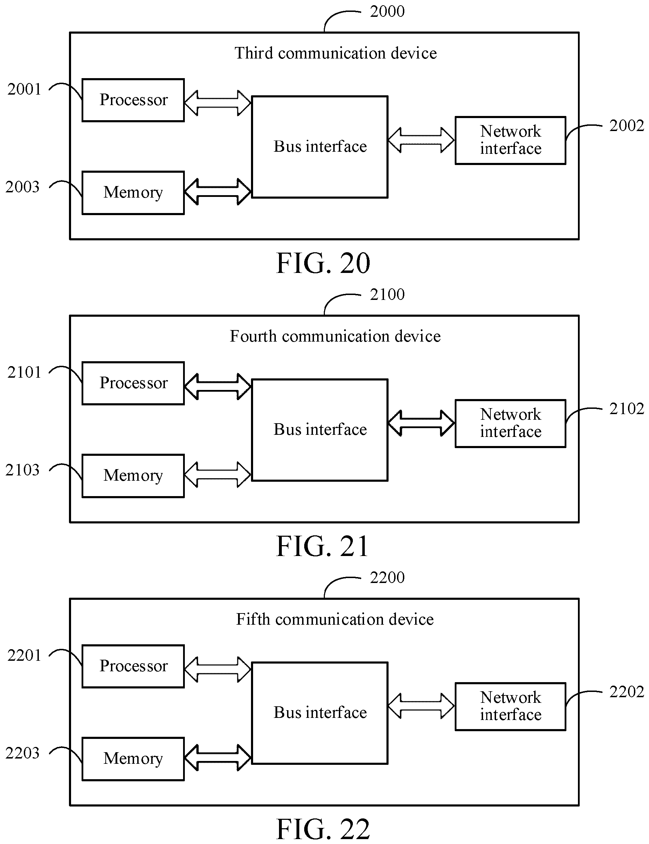

Specifically, an embodiment of this application further provides a third communication device. FIG. 20 is a schematic diagram of a hardware structure of a third communication device according to an embodiment of this application. As shown in FIG. 20, the third communication device 2000 includes: a processor 2001, a network interface 2002, and a memory 2003. The network interface 2002 is, for example, a common public radio interface (common public radio interface, CPRI).

Specifically, the third communication device 2000 according to the embodiment of the present invention further includes: instructions or programs that are stored in the memory 2003 and can be run on the processor 2001, and the processor 2001 invokes the instructions or programs in the memory 2003 to perform the method performed by each module shown in FIG. 14, to achieve the same technical effect. In order to avoid repetition, details are not described herein.

An embodiment of the present invention provides a fourth communication device, including a processor and a communication interface, where the processor is configured to perform a fifth operation, the fifth operation including:
determining a first policy, the first policy including at least one of the following:
sending fifth indication information, the fifth indication information being used to indicate at least one of the following: in a case that a sixth condition is met, it is allowed not to transmit some data packets of a first object, it is allowed not to transmit a first data packet and/or a second data packet, priority guarantee is requested for a third data packet and/or a fourth data packet, and it is allowed not to transmit data packets other than the third data packet and/or the fourth data packet, the sixth condition including at least one of the following: a network source cannot meet requirements for transmission of all data of the first object, a network cannot guarantee QoS of the first object, and network congestion occurs; data flow description information and importance mapping information; and
a policy for transmitting no data packet, where
the policy for transmitting no data packet includes at least one of the following:
   one or more items of related information about the first data packet; and
   one or more items of related information about the third data packet;
   seventh indication information, the seventh indication information being used to indicate at least one of the following: it is requested to abandon transmission of or allow not to transmit all data packets, it is requested to abandon transmission of or allow not to transmit the first data packet, it is requested to abandon transmission of or allow not to transmit the second data packet, and it is allowed not to transmit data packets other than the third data packet and/or the fourth data packet,
   where
   the related information about the first data packet includes at least one of the following: information about the first data packet, an index of the information about the first data packet, an effective condition of the related information about the first data packet, and an invalid condition of the related information about the first data packet;
   the related information about the third data packet includes at least one of the following: information about the third data packet, and an index of the information about the third data packet,
   where
   the information about the first data packet is used to indicate a range of the first data packet;
   the information about the third data packet is used to indicate a range of the third data packet; and
   the second data packet is a data packet that depends on the first data packet,
   where
   the first object includes at least one of the following: a terminal, a QoS flow, a radio bearer, a data flow, a data set, and a tunnel.

The fourth communication device embodiment corresponds to the above-mentioned method embodiment for the fourth communication device, and each implementation process and implementation of the above-mentioned method embodiment can be applied to the fourth communication device embodiment, which can achieve the same technical effect.

Specifically, an embodiment of this application further provides a fourth communication device. FIG. 21 is a schematic diagram of a hardware structure of a fourth communication device according to an embodiment of this application. As shown in FIG. 21, the fourth communication device 2100 includes: a processor 2101, a network interface 2102, and a memory 2103. The network interface 2102 is, for example, a common public radio interface (common public radio interface, CPRI).

Specifically, the fourth communication device 2100 according to the embodiment of the present invention further includes: instructions or programs that are stored in the memory 2103 and can be run on the processor 2101, and the processor 2101 invokes the instructions or programs in the memory 2103 to perform the method performed by each module shown in FIG. 15, to achieve the same technical effect. In order to avoid repetition, details are not described herein.

An embodiment of the present invention provides a fifth communication device, including a processor and a communication interface, where the processor is configured to: perform a sixth operation, the sixth operation including sending a first request,
the first request including at least one of the following: data flow description information, information about a terminal, sixth indication information, one or more items of related information about a first data packet, one or more items of related information about a third data packet, and data flow description information and importance mapping information, where
the sixth indication information is used to indicate at least one of the following: in a case that a seventh condition is met, it is allowed not to transmit some data packets of a second object, it is allowed not to transmit the first data packet and/or a second data packet, priority guarantee is requested for the third data packet and/or a fourth data packet, and it is allowed not to transmit data packets other than the third data packet and/or the fourth data packet,
the seventh condition including at least one of the following: a network source cannot meet requirements for transmission of all data of the second object, a network cannot guarantee QoS of the second object, and network congestion occurs,
where
the related information about the first data packet includes at least one of the following: information about the first data packet, an index of the information about the first data packet, an effective condition of the related information about the first data packet, and an invalid condition of the related information about the first data packet;
the related information about the third data packet includes at least one of the following: information about the third data packet, and an index of the information about the third data packet,
where
the information about the first data packet is used to indicate a range of the first data packet;
the information about the third data packet is used to indicate a range of the third data packet; and
the second data packet is a data packet that depends on the first data packet.
where
the second object includes at least one of the following: a terminal, a data flow, and a data set.

The fifth communication device embodiment corresponds to the above-mentioned method embodiment for the fifth communication device, and each implementation process and implementation of the above-mentioned method embodiment can be applied to the fifth communication device embodiment, which can achieve the same technical effect.

Specifically, an embodiment of this application further provides a fifth communication device. FIG. 22 is a schematic diagram of a hardware structure of a fifth communication device according to an embodiment of this application. As shown in FIG. 22, the fifth communication device 2200 includes: a processor 2201, a network interface 2202, and a memory 2203. The network interface 2202 is, for example, a common public radio interface (common public radio interface, CPRI).

Specifically, the fifth communication device 2200 according to the embodiment of the present invention further includes: instructions or programs that are stored in the memory 2203 and can be run on the processor 2201, and the processor 2201 invokes the instructions or programs in the memory 2203 to perform the method performed by each module shown in FIG. 16, to achieve the same technical effect. In order to avoid repetition, details are not described herein.

An embodiment of this application further provides a readable storage medium, where a program or instructions are stored in the readable storage medium, and when the program or instructions are executed by a processor, each process of the above-mentioned data packet processing method embodiment is implemented, which can achieve the same technical effect. In order to avoid repetition, details are not described herein.

The processor is the processor in the terminal described in the above embodiment. The readable storage medium includes a computer-readable storage medium, such as computer read-only memory ROM, a random access memory RAM, a magnetic disk, a compact disc, or the like.

An embodiment of this application further provides a chip, including a processor and a communication interface, where the communication interface is coupled to the processor, and the processor is configured to run a program or instructions to implement each process of the above-mentioned data packet processing method embodiment, which can achieve the same technical effect. In order to avoid repetition, details are not described herein.

It should be understood that the chip mentioned in the embodiment of this application may be also referred to as a system-on-a-chip, a system on a chip, a system-on-chip, a system on chip, or the like.

An embodiment of this application further provides a computer program/program product, where the computer program/program product is stored in a storage medium, and the computer program/program product is executed by at least one processor to implement each process of the above-mentioned data packet processing method embodiment, which can achieve the same technical effect. In order to avoid repetition, details are not described herein.

An embodiment of this application further provides a data packet processing system, including: a first communication device, a second communication device, a third communication device, a fourth communication device, and a fifth communication device, where the first communication device may be configured to perform the steps of the data packet processing method corresponding to the first communication device described above, the second communication device may be configured to perform the steps of the data packet processing method corresponding to the second communication device described above, the third communication device may be configured to perform the steps of the data packet processing method corresponding to the third communication device described above, the fourth communication device may be configured to perform the steps of the data packet processing method corresponding to the fourth communication device described above, and the fifth communication device may be configured to perform the steps of the data packet processing method corresponding to the fifth communication device described above.

An embodiment of the present invention further provides a computer-readable storage medium, where the computer-readable storage medium stores a computer program, and when the computer program is executed by a processor, each process of any of the multi-card optimization method embodiments described above is implemented, which can achieve the same technical effect. In order to avoid repetition, details are not described herein. The computer-readable storage medium is, for example, a read-only memory (Read-Only Memory, ROM), a random access memory (Random Access Memory, RAM), a magnetic disk, or a compact disc.

It should be noted that herein, terms "including", "including" or any other variants thereof are intended to cover non-exclusive inclusion, so that a process, method, article or apparatus including a series of elements includes not only those elements but also other elements not explicitly listed, or elements inherent to such a process, method, article, or apparatus. Without further limitation, an element defined by the phrase "including a ..." does not exclude the presence of an additional identical element in the process, method, article, or apparatus including the element.

by using the foregoing description of the implementations, a person skilled in the art can clearly understand that the method in the foregoing embodiments may be implemented by using software and a necessary general-purpose hardware platform, or certainly, by using hardware, but the former is a better implementation in many cases. Based on this understanding, the technical solution of the present invention essentially, or a part contributing to the prior art, may be embodied in a form of a software product. The computer software product is stored in a storage medium (such as an ROM)/RAM, a magnetic disk, and a compact disc), and includes a plurality of instructions to enable a terminal (which may be a mobile phone, a computer, a server, an air-conditioner, a network device, or the like) to perform the method according to each embodiment of the present invention.

The embodiments of the present invention are described above with reference to the accompanying drawings, but the present invention is not limited to the specific implementations described above, and the specific implementations described above are merely illustrative and not restrictive. A person of ordinary skill in the art may further make many forms under the teaching of the present invention without departing from the purpose of the present invention and the protection scope of the claims, and these forms all fall within the protection scope of the present invention.

## Claims

1. A data packet processing method, comprising:
performing, by a first communication device, a target operation, the target operation comprising at least one of the following:
determining an importance level of a target data packet, data flow description information corresponding to a data packet, and/or a tunnel mapped by the data packet;
determining, based on the importance level of the target data packet, a buffer status report for distinguishing between importance levels, wherein data packets with different importance levels correspond to buffer status reports with different importance levels;
sending the buffer status report for distinguishing between importance levels;
determining a range of a first target data packet; and
stopping a first operation and/or performing a second operation, or performing the first operation.

2. The data packet processing method according to claim 1, wherein the target data packet is at least one of the following: a received data packet and a data packet in a buffer.

3. The data packet processing method according to claim 1 or 2, wherein in the first communication device, a target layer for performing the target operation comprises at least one of the following: a packet data convergence protocol PDCP layer, a service data adaptation protocol SDAP layer, and an X^{th} layer, wherein
the X^{th} layer is located at at least one of the following: a non-access stratum NAS layer or an access stratum AS layer; and
the X^{th} layer is a layer above the SDAP layer.

4. The method according to claim 1, wherein the first target data packet is at least one of the following: a data packet with a low importance level, a data packet whose transmission needs to be abandoned, a data packet whose transmission is allowed to be abandoned, a data packet whose transmission needs no priority guarantee, and a data packet on which no data packet whose transmission needs priority guarantee depends.

5. The method according to any one of claims 1 to 4, wherein the determining a range of a first target data packet comprises at least one of the following:
applying, based on a descending order of priorities, information about first data packets with different priorities in sequence to determine the range of the first target data packet; and
determining the range of the first target data packet by using importance levels in an ascending order of the importance levels;
the first target data packet comprises at least one of the following: the first data packet, a second data packet, and a data packet with a lowest importance level;
the range of first target data packet comprises at least one of the following: a range of the first data packet, a range of the second data packet, and a range of the data packet with a lowest importance level;
the first target data packet does not comprise at least one of the following: a third data packet and a fourth data packet;
the range of first target data packet does not comprise at least one of the following: a range of the third data packet and a range of the fourth data packet,
wherein
a second target data packet is a data packet that depends on the first target data packet;
the third data packet is a data packet whose transmission needs priority guarantee; and
the fourth data packet is a data packet on which the third data packet depends.

6. The data packet processing method according to any one of claims 1 to 5, wherein the first operation comprises at least one of the following:
determining whether the target data packet is in the range of the first target data packet;
determining whether the target data packet is the second target data packet; and
performing at least one of the following on the target data packet that is in the range of the first target data packet and/or the second target data packet: skipping transmitting the target data packet, the buffer status report comprising no cache amount of the target data packet, and deleting the target data packet in the buffer;
skipping transmitting the first target data packet;
skipping transmitting the second target data packet in a case that transmission of the first target data packet is skipped;
the buffer status report comprising no cache amount of the first target data packet and/or the second target data packet, and
deleting the first target data packet and/or the second target data packet in the buffer;
requesting a radio access network RAN network element to transmit other data packets;
transparently transmitting, by a target layer of the first communication device, other data packets to a next layer of the target layer;
adding, by the target layer of the first communication device, importance level information about other data packets to the data packets and then sending the packets to the next layer;
skipping transmitting all data packets;
applying, based on the descending order of priorities, the information about the first data packets with different priorities in sequence to skip transmitting the target data packet conforming to the information about the first data packet; and
skipping transmitting the target data packet in sequence in the ascending order of the importance levels.

7. The data packet processing method according to claim 6, wherein the determining whether the target data packet is in the range of the first target data packet comprises at least one of the following:
determining that the target data packet is in the range of the first target data packet in a case that the importance level of the target data packet matches an importance level range of the first target data packet;
determining that the target data packet is in the range of the first target data packet in a case that data flow description information about the target data packet matches data flow description information about the first data packet;
determining that the target data packet is in the range of the first target data packet in a case that tunnel information mapped by the target data packet matches tunnel information corresponding to the first data packet;
determining that the target data packet is in the range of the first target data packet in a case that a direction mapped by the target data packet matches a direction mapped by the first data packet; and
determining that the target data packet is in the range of the first target data packet in a case that a source interface mapped by the target data packet matches a source interface mapped by the first data packet.

8. The data packet processing method according to any one of claims 1 to 7, wherein the second operation comprises at least one of the following:
transparently transmitting, by the target layer of the first communication device, all the data packets to the next layer of the target layer;
requesting, by the first communication device, the RAN network element to transmit all the data packets; and
adding, by the target layer of the first communication device, importance level information about data packets to the data packets and then sending the packets to the next layer.

9. The data packet processing method according to claim 1, wherein the performing, by a first communication device, a target operation comprises:
obtaining, by the first communication device, first information, the first information comprising at least one of the following: information about the target data packet, data flow description information and importance mapping information, first auxiliary information, second auxiliary information, third auxiliary information, configuration information for transmitting no data packet, one or more items of related information about the first data packet, and one or more items of related information about the third data packet; and
performing, by the first communication device, the target operation based on the first information.

10. The data packet processing method according to any one of claims 1 to 9, wherein the operation of determining an importance level of a target data packet comprises one of the following:
obtaining importance of the target data packet from header information about the target data packet; or
obtaining data flow description information about the target data packet, and data flow description information and importance mapping information; and determining the importance level of the target data packet based on the data flow description information about the target data packet, and the data flow description information and importance mapping information.

11. The data packet processing method according to claim 9 or 10, wherein the performing, by a first communication device, a target operation comprises:
obtaining, by the first communication device, the first auxiliary information, and
performing, by the first communication device, the target operation based on the first auxiliary information,
wherein
the first auxiliary information comprises at least one of the following:
first indication information, the first indication information being used to indicate at least one of the following: network congestion starts, it is requested to perform an operation of transmitting no data packet, it is requested to perform the first operation, it is requested to abandon transmission of or allow not to transmit all data packets, it is requested to abandon transmission of or allow not to transmit the first data packet, it is requested to abandon transmission of or allow not to transmit a second data packet, and it is allowed not to transmit data packets other than the third data packet and/or a fourth data packet;
information about the first data packet, the information about the first data packet being used to indicate the range of the first data packet;
information about the third data packet, the information about the third data packet being used to indicate the range of the first data packet;
a time period during which no data is transmitted; and
a network resource load or a load value index corresponding to the network resource load,
wherein
the second data packet is a data packet that depends on the first data packet.

12. The data packet processing method according to claim 9 or 10, wherein the performing, by a first communication device, a target operation comprises:
in a case that a first condition is met, stopping performing, by the first communication device, the first operation and/or performing the second operation, wherein
the first condition comprises at least one of the following:
network congestion ends;
an actual network resource load does not reach a resource load corresponding to the first data packet or drops below the resource load corresponding to the first data packet;
the first auxiliary information and/or the second auxiliary information is not obtained;
previously obtained first auxiliary information and/or second auxiliary information is deleted or canceled;
the third auxiliary information is obtained; and
a current time is not within a time period during which no data is transmitted,
wherein
the third auxiliary information comprises at least one of the following:
third indication information, the third indication information being used to indicate at least one of the following: network congestion ends, an operation of transmitting no data packet is stopped, the first operation is stopped, it is requested to perform the second operation, and data transmission is resumed; and
a network resource load or a load value index corresponding to the network resource load.

13. The data packet processing method according to any one of claims 9 to 12, wherein the performing, by a first communication device, a target operation further comprises at least one of the following:
further obtaining, by the first communication device, effective time of the first auxiliary information in a case of obtaining the first auxiliary information; and
deleting, by the first communication device, the first auxiliary information in a case that the effective time of the first auxiliary information is overtime.

14. The data packet processing method according to claim 9, wherein the performing, by a first communication device, a target operation comprises:
obtaining, by the first communication device, the configuration information for transmitting no data packet, the one or more items of related information about the first data packet, the one or more items of related information about the third data packet, and/or the second auxiliary information; and
performing the first operation based on the configuration information for transmitting no data packet, the one or more items of related information about the first data packet, the one or more items of related information about the third data packet, and/or the second auxiliary information, wherein
the configuration information for transmitting no data packet comprises at least one of the following:
one or more items of related information about the first data packet;
one or more items of related information about the third data packet; and
first indication information, the first indication information being used to indicate at least one of the following: network congestion starts, it is requested to perform an operation of transmitting no data packet, it is requested to perform the first operation, it is requested to abandon transmission of or allow not to transmit all data packets, it is requested to abandon transmission of or allow not to transmit the first data packet, it is requested to abandon transmission of or allow not to transmit a second data packet, and it is allowed not to transmit data packets other than the third data packet and/or a fourth data packet;
wherein
the related information about the first data packet comprises at least one of the following: information about the first data packet, an index of the information about the first data packet, an effective condition of the related information about the first data packet, and an invalid condition of the related information about the first data packet;
the related information about the third data packet in a descending order of priorities corresponding to the first data packet comprises at least one of the following: information about the third data packet, and an index of the information about the third data packet,
wherein
the information about the first data packet is used to indicate a range of the first data packet;
the information about the third data packet is used to indicate a range of the third data packet;
the second data packet is a data packet that depends on the first data packet;
the second auxiliary information comprises at least one of the following:
second indication information, the second indication information being used to indicate at least one of the following: network congestion starts, it is requested to perform an operation of transmitting no data packet, it is requested to perform the first operation, it is requested to abandon transmission of or allow not to transmit all data packets, it is requested to abandon transmission of or allow not to transmit the first data packet, it is requested to abandon transmission of or allow not to transmit a second data packet, and it is allowed not to transmit data packets other than the third data packet and/or a fourth data packet;
the index of the information about the first data packet;
the index of the information about the third data packet,
a time period during which no data is transmitted; and
a network resource load or a load value index corresponding to the network resource load,
wherein
the second data packet is a data packet that depends on the first data packet.

15. The method according to claim 14, wherein the effective condition of the related information about the first data packet comprises at least one of: network congestion starts, and an actual network resource load reaches a resource load corresponding to the first data packet;
and/or
the invalid condition of the related information about the first data packet comprises at least one of the following: network congestion ends, and an actual network resource load does not reach a resource load corresponding to the first data packet or drops below the resource load corresponding to the first data packet;
and/or
the resource load corresponding to the first data packet is used to indicate, in a case that the actual network resource load reaches the resource load corresponding to the first data packet, that the information about the first data packet takes effect, or that the first operation is performed based on the information about the first data packet;
and/or
a resource load corresponding to the third data packet is used to indicate, in a case that the actual network resource load reaches the resource load corresponding to the third data packet, that the information about the third data packet takes effect, or that a data transmission guarantee operation is performed based on the information about the third data packet;
and/or
the priority corresponding to the first data packet is a priority of abandoning transmission, which is used to indicate that the first operation is performed based on the information about the first data packets with different priorities in a descending order of priorities;
and/or
a priority corresponding to the third data packet is a priority of guaranteeing transmission, which is used to indicate that the data transmission guarantee operation is performed based on the information about the third data packet with different priorities in a descending order of priorities;
and/or
the index of the information about the first data packet is used to index the information about the first data packet;
and/or
the index of the information about the third data packet is used to index the information about the third data packet.

16. The data packet processing method according to claim 14, wherein the performing the first operation comprises: in a case that a first condition is met, performing the first operation based on the information about the first data packet, or determining the information about the first data packet to be effective;
a second condition comprises at least one of the following:
network congestion starts; and
an actual network resource load reaches a resource load corresponding to the first data packet;
obtaining the index of the information about the first data packet;
obtaining priority information, the priority information indicating a priority corresponding to the information about the first data packet; and
obtaining second indication information, the second indication information being used to indicate at least one of the following: network congestion starts, it is requested to perform an operation of transmitting no data packet, it is requested to perform the first operation, it is requested to abandon transmission of or allow not to transmit all data packets, it is requested to abandon transmission of or allow not to transmit the first data packet, it is requested to abandon transmission of or allow not to transmit a second data packet, and it is allowed not to transmit data packets other than the third data packet and/or a fourth data packet.

17. The data packet processing method according to claim 12, wherein the stopping performing the first operation and/or performing the second operation comprises: in a case that a third condition is met, stopping performing the first operation and/or performing the second operation,
the third condition comprising at least one of the following:
network congestion ends;
an actual network resource load does not reach a resource load corresponding to the first data packet or drops below the resource load corresponding to the first data packet;
the first auxiliary information and/or the second auxiliary information is not obtained;
previously obtained first auxiliary information and/or second auxiliary information is deleted or canceled;
the third auxiliary information is obtained; and
a current time is not within a time period during which no data is transmitted,
wherein
the third auxiliary information comprises at least one of the following:
third indication information, the third indication information being used to indicate at least one of the following: network congestion ends, an operation of transmitting no data packet is stopped, the first operation is stopped, it is requested to perform the second operation, and data transmission is resumed, and
a network resource load or a load value index corresponding to the network resource load.

18. The data packet processing method according to any one of claims 14 to 16, wherein the performing, by a first communication device, a target operation further comprises at least one of the following:
further obtaining, by the first communication device, effective time of the second auxiliary information in a case of obtaining the second auxiliary information; and
deleting, by the first communication device, the second auxiliary information in a case that the effective time of the second auxiliary information is overtime.

19. The data packet processing method according to claim 3, wherein in a case that the target layer is the PDCP layer, the first operation further comprises:
determining, by the PDCP layer of the first communication device, deletion of a target data packet in a cache area; and
determining, by the PDCP layer of the first communication device, a request made to an radio link control RLC layer to delete a target data packet of the RLC layer that has not been sent.

20. The data packet processing method according to claim 3, wherein in a case that the target layer is not the PDCP layer, performing, by the first communication device, the first operation further comprises:
identifying, by the PDCP layer of the first communication device, a target data packet in a cache area;
determining, by the PDCP layer of the first communication device, deletion of the target data packet in the cache area; and
determining, by the PDCP layer of the first communication device, a request made to an RLC layer to delete a target data packet of the RLC layer that has not been sent.

21. The data packet processing method according to claim 20, wherein the identifying, by the PDCP layer of the first communication device, a target data packet in a cache area comprises determining, by the PDCP layer of the first communication device, the target data packet in the cache area based on a mapping relationship between a sequence number SN of PDCP in the cache area and an importance level.

22. The method according to any one of claims 1 to 21, wherein the range of the first target data packet is reflected by information indication of the first target data packet; and information about the first target data packet comprises at least one of the following: an importance level range of the first target data packet, data flow description information about the first target data packet, data set description information about the first target data packet, tunnel information corresponding to the first target data packet, a direction of the first target data packet, a source interface of the first target data packet, a resource load corresponding to the first target data packet, and a priority corresponding to the first target data packet;
and/or
the information about the first data packet comprises at least one of the following: an importance level range of the first data packet, data flow description information about the first data packet, data set description information about the first data packet, tunnel information corresponding to the first data packet, a direction of the first data packet, a source interface of the first data packet, a resource load corresponding to the first data packet, and a priority corresponding to the first data packet;
and/or
the information about the third data packet comprises at least one of the following: an importance level range of the third data packet, data flow description information about the third data packet, data set description information about the third data packet, tunnel information corresponding to the third data packet, a direction of the third data packet, a source interface of the third data packet, a resource load corresponding to the third data packet, and a priority corresponding to the third data packet.

23. The method according to claim 22, wherein the resource load corresponding to the first target data packet is used to indicate, in a case that an actual resource load reaches the resource load corresponding to the first target data packet, that the information about the first target data packet takes effect, or that the first operation is performed based on the information about the first target data packet;
and/or
the resource load corresponding to the first data packet is used to indicate, in a case that the actual resource load reaches the resource load corresponding to the first data packet, that the information about the first data packet takes effect, or that the first operation is performed based on the information about the first data packet;
and/or
the resource load corresponding to the third data packet is used to indicate, in a case that the actual resource load reaches the resource load corresponding to the third data packet, that the information about the third data packet takes effect, or that a data transmission guarantee operation is performed based on the information about the third data packet;
and/or
a target priority corresponding to the first target data packet is a priority of abandoning transmission, which is used to indicate that the first operation is performed based on the information about the first target data packet with different priorities in an order of priorities;
and/or
the priority corresponding to the first data packet is a priority of abandoning transmission, which is used to indicate that the first operation is performed based on the information about the first data packets with different priorities in an order of priorities;
and/or
the priority corresponding to the third data packet is a priority of guaranteeing transmission, which is used to indicate that the data transmission guarantee operation is performed based on the information about the third data packet with different priorities in an order of priorities;
and/or
an index of the information about the first target data packet is used to index the information about the first target data packet;
and/or
the index of the information about the first data packet is used to index the information about the first data packet;
and/or
the index of the information about the third data packet is used to index the information about the third data packet.

24. A data packet processing method, comprising:
performing, by a second communication device, a third operation,
the third operation comprising at least one of the following:
sending one of the following: first auxiliary information, second auxiliary information, and third auxiliary information;
requesting to delete or cancel the first auxiliary information;
requesting to delete or cancel the second auxiliary information; and
sending configuration information for transmitting no data packet.

25. The data packet processing method according to claim 24, wherein sending the first auxiliary information or the second auxiliary information comprises: transmitting the first auxiliary information or the second auxiliary information in a case that a fourth condition is met, wherein
the fourth condition comprises at least one of the following:
network congestion occurs;
a network resource load reaches a resource load corresponding to the first data packet;
a network is unable to allocate resources for transmission of the first data packet;
the network is unable to meet requirements for transmission of all data of a first object; and
the network is unable to meet a QoS requirement for the first object, wherein the first object comprises at least one of the following: a terminal, a QoS flow, a radio bearer, a data flow, a data set, and a tunnel.

26. The data packet processing method according to claim 24, wherein requesting to delete or cancel the first auxiliary information, requesting to delete or cancel the first auxiliary information, and/or sending the third auxiliary information comprises: in a case that a fifth condition is met, requesting to delete or cancel the first auxiliary information, requesting to delete or cancel the first auxiliary information, and/or sending the third auxiliary information, wherein
the fifth condition comprises at least one of the following:
network congestion ends;
an actual network resource load does not reach a resource load corresponding to the first data packet or drops below the resource load corresponding to the first data packet;
the network recovers to meet requirements for transmission of all data of a first object;
the network recovers to allocate resources for transmission of the first data packet;
the network recovers to meet requirements for transmission of all data of a first object;
the network recovers to meet a QoS requirement for the first object, wherein
the first object comprises at least one of the following: a terminal, a QoS flow, a radio bearer, a data flow, a data set, and a tunnel.

27. The data packet processing method according to claim 25 or 26, wherein the network congestion comprises at least one of the following:
congestion of the second communication device;
congestion of a transport layer; and
congestion of a user plane network element; and
the network comprises at least one of the following: the second communication device, the transport layer, and the user plane network element.

28. The data packet processing method according to any one of claims 24 to 27, wherein the first auxiliary information comprises at least one of the following:
first indication information, the first indication information being used to indicate at least one of the following: network congestion starts, it is requested to perform an operation of transmitting no data packet, it is requested to perform a first operation, it is requested to abandon transmission of or allow not to transmit all data packets, it is requested to abandon transmission of or allow not to transmit the first data packet, it is requested to abandon transmission of or allow not to transmit a second data packet, and it is allowed not to transmit data packets other than a third data packet and/or a fourth data packet;
information about the first data packet, the information about the first data packet being used to indicate a range of the first data packet;
information about the third data packet, the information about the third data packet being used to indicate a range of the first data packet;
a time period during which no data is transmitted; and
a network resource load or a load value index corresponding to the network resource load,
wherein
the second data packet is a data packet that depends on the first data packet.

29. The data packet processing method according to any one of claims 24 to 27, wherein the second auxiliary information comprises at least one of the following:
second indication information, the second indication information being used to indicate at least one of the following: network congestion starts, it is requested to perform an operation of transmitting no data packet, it is requested to perform a first operation, it is requested to abandon transmission of or allow not to transmit all data packets, it is requested to abandon transmission of or allow not to transmit the first data packet, it is requested to abandon transmission of or allow not to transmit a second data packet, and it is allowed not to transmit data packets other than a third data packet and/or a fourth data packet;
an index of the information about the first data packet;
an index of the information about the third data packet,
a time period during which no data is transmitted; and
a network resource load or a load value index corresponding to the network resource load,
wherein
the second data packet is a data packet that depends on the first data packet.

30. The data packet processing method according to any one of claims 24 to 27, wherein the third auxiliary information comprises at least one of the following:
third indication information, the third indication information being used to indicate at least one of the following: network congestion ends, an operation of transmitting no data packet is stopped, a first operation is stopped, it is requested to perform a second operation, and data transmission is resumed, and
a network resource load or a load value index corresponding to the network resource load.

31. The data packet processing method according to any one of claims 24 to 30, wherein the configuration information for transmitting no data packet comprises at least one of the following:
one or more items of related information about the first data packet;
one or more items of related information about the third data packet; and
first indication information, the first indication information being used to indicate at least one of the following: it is requested to abandon transmission of or allow not to transmit all data packets, it is requested to abandon transmission of or allow not to transmit the first data packet, it is requested to abandon transmission of or allow not to transmit the second data packet, and it is allowed not to transmit data packets other than the third data packet and/or the fourth data packet,
wherein
the related information about the first data packet comprises at least one of the following: information about the first data packet, an index of the information about the first data packet, an effective condition of the related information about the first data packet, and an invalid condition of the related information about the first data packet;
the related information about the third data packet comprises at least one of the following: information about the third data packet, and an index of the information about the third data packet,
wherein
the information about the first data packet is used to indicate the range of the first data packet;
the information about the third data packet is used to indicate the range of the third data packet; and
the second data packet is a data packet that depends on the first data packet.

32. The data packet processing method according to any one of claims 24 to 31, wherein the method further comprises: obtaining, by the second communication device, at least one of the following: the first auxiliary information, the second auxiliary information, and the configuration information for transmitting no data packet.

33. The data packet processing method according to claim 32, wherein the obtaining, by the second communication device, at least one of the following: the first auxiliary information, the second auxiliary information, and the configuration information for transmitting no data packet comprises:
receiving, by the second communication device, a data cache report for distinguishing between importance; and
determining, by the second communication device based on the data cache report, at least one of the following: the first auxiliary information, the second auxiliary information, and the configuration information for transmitting no data packet.

34. The data packet processing method according to claim 32, wherein the obtaining, by the second communication device, at least one of the following: the first auxiliary information, the second auxiliary information, and the configuration information for transmitting no data packet comprises:
receiving, by the second communication device, at least one of the following sent by a core network element: the first auxiliary information, the second auxiliary information, and the configuration information for transmitting no data packet.

35. A data packet processing method, comprising:
performing, by a third communication device, a fourth operation, the fourth operation comprising:
determining configuration information for transmitting no data packet; and
sending the configuration information for transmitting no data packet.

36. The data packet processing method according to claim 35, wherein the sending the configuration information for transmitting no data packet comprises:
allowing the configuration information for transmitting no data packet to be comprised in tunnel granularity signaling to be sent.

37. The data packet processing method according to claim 35, wherein the performing, by a third communication device, a fourth operation further comprises at least one of the following:
obtaining a first policy; and
performing, by the third communication device, the fourth operation based on the first policy.

38. A data packet processing method, comprising:
performing, by a fourth communication device, a fifth operation, the fifth operation comprising:
determining a first policy, the first policy comprising at least one of the following:
sending fifth indication information, the fifth indication information being used to indicate at least one of the following: in a case that a sixth condition is met, it is allowed not to transmit some data packets of a first object, it is allowed not to transmit a first data packet and/or a second data packet, priority guarantee is requested for a third data packet and/or a fourth data packet, and it is allowed not to transmit data packets other than the third data packet and/or the fourth data packet, the sixth condition comprising at least one of the following: a network source is unable to meet requirements for transmission of all data of the first object, a network is unable to guarantee QoS of the first object, and network congestion occurs; data flow description information and importance mapping information; and
a policy for transmitting no data packet, wherein
the policy for transmitting no data packet comprises at least one of the following:
one or more items of related information about the first data packet;
one or more items of related information about the third data packet; and
seventh indication information, the seventh indication information being used to indicate at least one of the following: it is requested to abandon transmission of or allow not to transmit all data packets, it is requested to abandon transmission of or allow not to transmit the first data packet, it is requested to abandon transmission of or allow not to transmit the second data packet, and it is allowed not to transmit data packets other than the third data packet and/or the fourth data packet,
wherein
the related information about the first data packet comprises at least one of the following: information about the first data packet, an index of the information about the first data packet, an effective condition of the related information about the first data packet, and an invalid condition of the related information about the first data packet;
the related information about the third data packet comprises at least one of the following: information about the third data packet, and an index of the information about the third data packet,
wherein
the information about the first data packet is used to indicate a range of the first data packet;
the information about the third data packet is used to indicate a range of the third data packet; and
the second data packet is a data packet that depends on the first data packet,
wherein
the first object comprises at least one of the following: a terminal, a QoS flow, a radio bearer, a data flow, a data set, and a tunnel.

39. The data packet processing method according to claim 38, wherein the performing, by a fourth communication device, a fifth operation comprises:
obtaining, by the fourth communication device, fourth information, the fourth information comprising at least one of the following: a network resource load and first request information; and
performing, by the fourth communication device, the fifth operation based on the fourth information, wherein
the network resource load comprises at least one of the following: a resource load of a RAN, a resource load of a transport layer, and a resource load of a user plane network element.

40. A data packet processing method, comprising:
performing, by a fifth communication device, a sixth operation, the sixth operation comprising sending a first request,
the first request comprising at least one of the following: data flow description information, information about a terminal, sixth indication information, one or more items of related information about a first data packet, one or more items of related information about a third data packet, and data flow description information and importance mapping information, and
the sixth indication information is used to indicate at least one of the following: in a case that a seventh condition is met, it is allowed not to transmit some data packets of a second object, it is allowed not to transmit the first data packet and/or a second data packet, priority guarantee is requested for the third data packet and/or a fourth data packet, and it is allowed not to transmit data packets other than the third data packet and/or the fourth data packet,
the seventh condition comprising at least one of the following: a network source is unable to meet requirements for transmission of all data of the second object, a network is unable to guarantee QoS of the second object, and network congestion occurs,
wherein
the related information about the first data packet comprises at least one of the following: information about the first data packet, an index of the information about the first data packet, an effective condition of the related information about the first data packet, and an invalid condition of the related information about the first data packet;
the related information about the third data packet comprises at least one of the following: information about the third data packet, and an index of the information about the third data packet,
wherein
the information about the first data packet is used to indicate a range of the first data packet;
the information about the third data packet is used to indicate a range of the third data packet; and
the second data packet is a data packet that depends on the first data packet,
wherein
the second object comprises at least one of the following: a terminal, a data flow, and a data set.

41. The method according to claim 40, wherein the effective condition of the related information about the first data packet comprises at least one of: congestion starts, an actual resource load reaches a resource load corresponding to the first data packet, a network source is unable to meet requirements for transmission of all data of the second object, and a network is unable to guarantee QoS of the second object;
and/or
an effective condition of related information about the third data packet comprises at least one of the following: congestion starts, an actual resource load reaches a resource load corresponding to the third data packet, a network source is unable to meet requirements for transmission of all data of the second object, and a network is unable to guarantee QoS of the second object;
and/or
the invalid condition of the related information about the first data packet comprises at least one of the following: congestion ends, an actual resource load does not reach a resource load corresponding to the first data packet, a network source is able to meet requirements for transmission of all data of the second object, and a network is able to guarantee QoS of the second object;
and/or
an invalid condition of the related information about the third data packet comprises at least one of the following: congestion ends, an actual resource load does not reach a resource load corresponding to the third data packet, a network source is able to meet requirements for transmission of all data of the second object, and a network is able to guarantee QoS of the second object;
and/or
the effective condition of the related information about the first data packet comprises at least one of the following: congestion starts, an actual resource load reaches a resource load corresponding to the first data packet, a network source is unable to meet requirements for transmission of all data of a first object, and a network is unable to guarantee QoS of the second object;
and/or
the effective condition of the related information about the third data packet comprises at least one of the following: congestion starts, an actual resource load reaches a resource load corresponding to the third data packet, a network source is unable to meet requirements for transmission of all data of the first object, and a network is unable to guarantee QoS of the second object;
and/or
the invalid condition of the related information about the first data packet comprises at least one of the following: congestion ends, an actual resource load does not reach a resource load corresponding to the first data packet, a network source is able to meet requirements for transmission of all data of the first object, and a network is able to guarantee QoS of the second object;
and/or
the invalid condition of the related information about the third data packet comprises at least one of the following: congestion ends, an actual resource load does not reach a resource load corresponding to the third data packet, a network source is able to meet requirements for transmission of all data of the first object, and a network is able to guarantee QoS of the second object.

42. A data packet processing apparatus, comprising:
a first performing module, configured to perform a target operation, the target operation comprising at least one of the following:
determining an importance level of a target data packet, data flow description information corresponding to a data packet, and/or a tunnel mapped by the data packet;
determining, based on the importance level of the target data packet, a buffer status report for distinguishing between importance levels, wherein data packets with different importance levels correspond to buffer status reports with different importance levels;
sending the buffer status report for distinguishing between importance levels;
determining a range of a first target data packet; and
stopping a first operation and/or performing a second operation, or performing the first operation.

43. A data packet processing apparatus, comprising:
a second performing module, configured to perform a third operation,
the third operation comprising at least one of the following:
sending one of the following: first auxiliary information, second auxiliary information, and third auxiliary information;
requesting to delete or cancel the first auxiliary information;
requesting to delete or cancel the second auxiliary information; and
sending configuration information for transmitting no data packet.

44. A data packet processing apparatus, comprising:
a third performing module, configured to perform a fourth operation, the fourth operation comprising:
determining configuration information for transmitting no data packet; and
sending the configuration information for transmitting no data packet.

45. A data packet processing apparatus, comprising:
a fourth performing module, configured to perform a fifth operation, the fifth operation comprising:
determining a first policy, the first policy comprising at least one of the following:
sending fifth indication information, the fifth indication information being used to indicate at least one of the following: in a case that a sixth condition is met, it is allowed not to transmit some data packets of a first object, it is allowed not to transmit a first data packet and/or a second data packet, priority guarantee is requested for a third data packet and/or a fourth data packet, and it is allowed not to transmit data packets other than the third data packet and/or the fourth data packet, the sixth condition comprising at least one of the following: a network source is unable to meet requirements for transmission of all data of the first object, a network is unable to guarantee QoS of the first object, and network congestion occurs; data flow description information and importance mapping information; and
a policy for transmitting no data packet, wherein
the policy for transmitting no data packet comprises at least one of the following:
one or more items of related information about the first data packet;
one or more items of related information about the third data packet; and
seventh indication information, the seventh indication information being used to indicate at least one of the following: it is requested to abandon transmission of or allow not to transmit all data packets, it is requested to abandon transmission of or allow not to transmit the first data packet, it is requested to abandon transmission of or allow not to transmit the second data packet, and it is allowed not to transmit data packets other than the third data packet and/or the fourth data packet,
wherein
the related information about the first data packet comprises at least one of the following: information about the first data packet, an index of the information about the first data packet, an effective condition of the related information about the first data packet, and an invalid condition of the related information about the first data packet;
the related information about the third data packet comprises at least one of the following: information about the third data packet, and an index of the information about the third data packet,
wherein
the information about the first data packet is used to indicate a range of the first data packet;
the information about the third data packet is used to indicate a range of the third data packet; and
the second data packet is a data packet that depends on the first data packet,
wherein
the first object comprises at least one of the following: a terminal, a QoS flow, a radio bearer, a data flow, a data set, and a tunnel.

46. A data packet processing apparatus, comprising:
a fifth performing module, configured to perform a sixth operation, the sixth operation comprising sending a first request,
the first request comprising at least one of the following: data flow description information, information about a terminal, sixth indication information, one or more items of related information about a first data packet, one or more items of related information about a third data packet, and data flow description information and importance mapping information, wherein
the sixth indication information is used to indicate at least one of the following: in a case that a seventh condition is met, it is allowed not to transmit some data packets of a second object, it is allowed not to transmit the first data packet and/or a second data packet, priority guarantee is requested for the third data packet and/or a fourth data packet, and it is allowed not to transmit data packets other than the third data packet and/or the fourth data packet,
the seventh condition comprising at least one of the following: a network source is unable to meet requirements for transmission of all data of the second object, a network is unable to guarantee QoS of the second object, and network congestion occurs,
wherein
the related information about the first data packet comprises at least one of the following: information about the first data packet, an index of the information about the first data packet, an effective condition of the related information about the first data packet, and an invalid condition of the related information about the first data packet;
the related information about the third data packet comprises at least one of the following: information about the third data packet, and an index of the information about the third data packet,
wherein
the information about the first data packet is used to indicate a range of the first data packet;
the information about the third data packet is used to indicate a range of the third data packet; and
the second data packet is a data packet that depends on the first data packet,
wherein
the second object comprises at least one of the following: a terminal, a data flow, and a data set.

47. A first communication device, comprising a processor and a memory, wherein the memory stores a program or instructions capable of being run on the processor, and when the program or instructions are executed by the processor, the steps of the data packet processing method according to any one of claims 1 to 23 are implemented.

48. A second communication device, comprising a processor and a memory, wherein the memory stores a program or instructions capable of being run on the processor, and when the program or instructions are executed by the processor, the steps of the data packet processing method according to any one of claims 24 to 34 are implemented.

49. A third communication device, comprising a processor and a memory, wherein the memory stores a program or instructions capable of being run on the processor, and when the program or instructions are executed by the processor, the steps of the data packet processing method according to any one of claims 35 to 37 are implemented.

50. A fourth communication device, comprising a processor and a memory, wherein the memory stores a program or instructions capable of being run on the processor, and when the program or instructions are executed by the processor, the steps of the data packet processing method according to any one of claims 38 to 39 are implemented.

51. A fifth communication device, comprising a processor and a memory, wherein the memory stores a program or instructions capable of being run on the processor, and when the program or instructions are executed by the processor, the steps of the data packet processing method according to any one of claims 40 to 41 are implemented.

52. A readable storage medium, wherein the readable storage medium stores a programs or instruction, and when the program or instructions are executed by a processor, the steps of the data packet processing method according to any one of claims 1 to 23 are implemented, or the steps of the data packet processing method according to any one of claims 24 to 34 are implemented, or the steps of the data packet processing method according to any one of claims 35 to 37 are implemented, or the steps of the data packet processing method according to any one of claims 38 and 39 are implemented, or the steps of the data packet processing method according to any one of claims 40 and 41 are implemented.
